(19) Europäisches Patentamt
European Patent Office
Office européen des brevets

(11) **EP 4 704 458 A1**

(12) **EUROPEAN PATENT APPLICATION**
published in accordance with Art. 153(4) EPC

(43) Date of publication:
**04.03.2026 Bulletin 2026/10**

(21) Application number: **24796907.4**

(22) Date of filing: **18.04.2024**

(51) International Patent Classification (IPC):
**H04W 16/14** (2009.01)      **H04W 12/03** (2021.01)
**H04W 16/10** (2009.01)

(52) Cooperative Patent Classification (CPC):
**H04W 12/03; H04W 16/10; H04W 16/14**

(86) International application number:
**PCT/JP2024/015371**

(87) International publication number:
**WO 2024/225154 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 JP 2023073720**

(71) Applicant: **Sony Group Corporation
Tokyo 108-0075 (JP)**

(72) Inventors:
• **FUNAKI, Yuji
Tokyo 108-0075 (JP)**
• **KURIKI, Hiroto
Tokyo 108-0075 (JP)**
• **FURUICHI, Sho
Tokyo 108-0075 (JP)**
• **USUI, Takashi
Tokyo 108-0075 (JP)**

(74) Representative: **Witte, Weller & Partner
Patentanwälte mbB
Postfach 10 54 62
70047 Stuttgart (DE)**

(54) **COMMUNICATION CONTROL DEVICE, COMMUNICATION DEVICE, AND COMMUNICATION CONTROL METHOD**

(57)      Information related to a primary communication system acquired when a secondary communication service is used is concealed. A communication control apparatus includes a reception unit and a computation unit. The reception unit receives encrypted information related to primary communication in a primary communication system. The computation unit performs secure computation based on the encrypted information related to primary communication, and generates a secondary communication parameter being a communication parameter of a communication apparatus, the communication apparatus performing a secondary communication service being a communication service that uses at least a part of a frequency band of the primary communication system.

Fig. 21

## Description

Technical Field

The present disclosure relates to a communication control apparatus, a communication apparatus, and a communication control method.

Background Art

Due to an increase in radio environments in which various radio systems coexist and an increase in capacity of contents provided by radio, a problem of depletion of radio wave resources (frequencies) that can be allocated to the radio systems has become apparent. Thus, as a means of creating necessary radio wave resources, "dynamic frequency sharing (Dynamic Spectrum Access (DSA))", which utilizes a temporal and spatial space (white space) in a frequency band allocated to a specific radio system, is rapidly attracting attention.

For secondary use, in general, it is necessary to calculate interference from a system performing secondary use to a primary communication system, and to notify a communication control apparatus of confidential information, such as location information, for this purpose. However, for example, in the Citizens Broadband Radio Service (CBRS) of the United States, information having high confidentiality, such as the location information, is partially secondarily used through utilization of a sensor, without notifying the communication control apparatus of the information. Environmental Sensing Capability (ESC) notifies a communication control apparatus Spectrum Access System (SAS) of detection results of the sensor.

In the CBRS, a coastal area of the United States where ship radars, which are incumbents (primary communication systems in the CBRS), are used is divided into several areas referred to as Dynamic Protection Areas (DPAs). The SAS calculates a Move List (a list of communication apparatuses giving harmful interference to the incumbent present inside each DPA) once a day, and requests the communication apparatus(es) to stop radio wave transmission in the following procedure when the primary communication system actually starts to use a radio wave. The ESC detects in which DPA the incumbent uses a radio wave. After identifying the DPA, the ESC transmits to the SAS information indicating in which DPA the incumbent uses a radio wave. Based on the results transmitted from the ESC, the SAS requests corresponding communication apparatus(es) to stop power by using the Move List calculated in advance.

In order to support DSA as described above, a system is proposed in which the communication control apparatus controls an operation and the like of the communication apparatus performing secondary use to reduce an interference signal power level with respect to the primary communication system so as to be within a predetermined level (for example, see PTL 1). The prior art discloses a means of also calculating and estimating the sum of interference (aggregated interference, combined interference, cumulative interference, and the like) generated from a plurality of communication apparatuses of a secondary system, and aims to securely protect a primary system from interference.

Citation List

Patent Literature

PTL 1: WO 2013/111442

Non Patent Literature

NPL 1: ETSI EN 303 387. Reconfigurable Radio Systems (RRS); Signalling Protocols and information exchange for Coordinated use of TV White Spaces
NPL 2: CBRSA-TS-2001 V3.0.0, "CBRS Coexistence Technical Specifications", CBRS Alliance
NPL 3: ETSI EN 301 598. White Space Devices (WSD);. Wireless Access Systems operating in the 470 MHz to 790 MHz.
NPL 4: WINNF-SSC-0010-V4.1.0 Spectrum Sharing Committee WInnForum Recognized CBRS Grouping Information Policy
NPL 5: WINNF-TS-0061-V1.5.1 Test and Certification for Citizens Broadband Radio Service (CBRS); Conformance and Performance Test Technical Specification; SAS as Unit Under Test (UUT)
NPL 6: WINNF-SSC-0008-V1.3.0 Spectrum Sharing Committee Policy and Procedure Coordinated Periodic Activities Policy
NPL 7: WINNF-TR-1015-V1.0.0 Potential Metrics for Assessing the Impact of ESC Sensors and Networks on CBRS Deployments
NPL 8: FCC PART 15, Radio Frequency Devices
NPL 9: WINNF-TS-0112-V1.9.1 Requirements for Commercial Operation in the U.S. 3550-3700 MHz Citizens Broadband Radio Service Band
NPL 10: ECC Report 186, Technical and operational requirements for the operation of white space devices under geo-location approach, CEPT ECC, 2013 January
NPL 11: FCC PART 96, Citizens Broadband Radio Service

Summary

Technical Problem

However, in the above related art, the communication control apparatus needs to collect and recognize information of the communication apparatuses of the primary communication system. The information may be confidential information, and thus causes a security problem when being stored inside the communication control apparatus.

In view of this, the present disclosure proposes a communication control apparatus, a communication apparatus, and a communication control method that conceal information of a primary communication system acquired when a secondary communication service is used.

Solution to Problem

A communication control apparatus according to the present disclosure includes a reception unit configured to receive encrypted information related to primary communication in a primary communication system; and a computation unit configured to perform secure computation based on the encrypted information related to primary communication, and generate a secondary communication parameter being a communication parameter of a communication apparatus, the communication apparatus requesting a secondary communication service being a communication service that uses at least a part of a frequency band of the primary communication system.

Brief Description of Drawings

[Fig. 1]

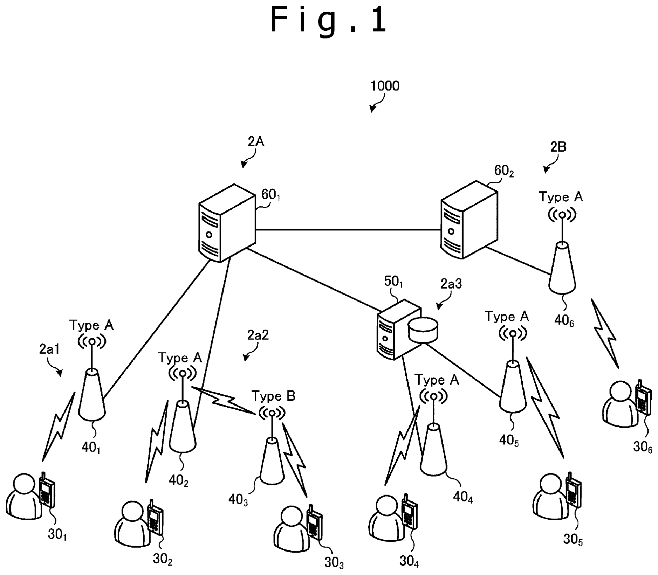

Fig. 1 is a diagram illustrating a configuration example of a communication system according to an embodiment of the present disclosure.
[Fig. 2]

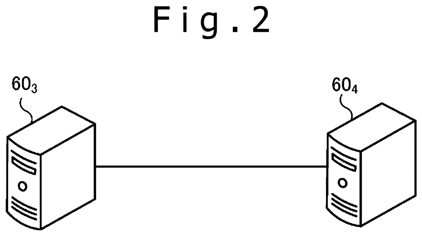

Fig. 2 is a diagram illustrating an example in which a plurality of communication control apparatuses are deployed in a distributed manner.
[Fig. 3]

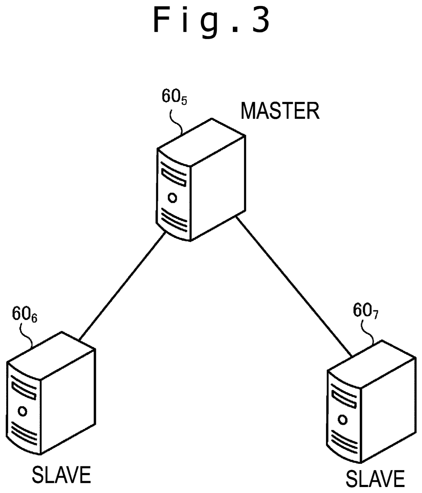

Fig. 3 is a diagram illustrating another example in which a plurality of communication control apparatuses are deployed in a distributed manner.
[Fig. 4]

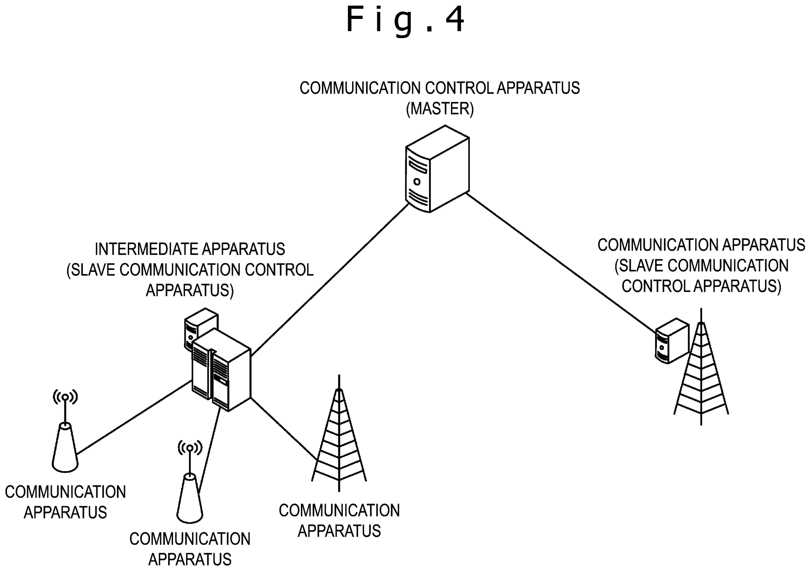

Fig. 4 is a diagram illustrating another example in which a plurality of communication control apparatuses are deployed in a distributed manner.
[Fig. 5]

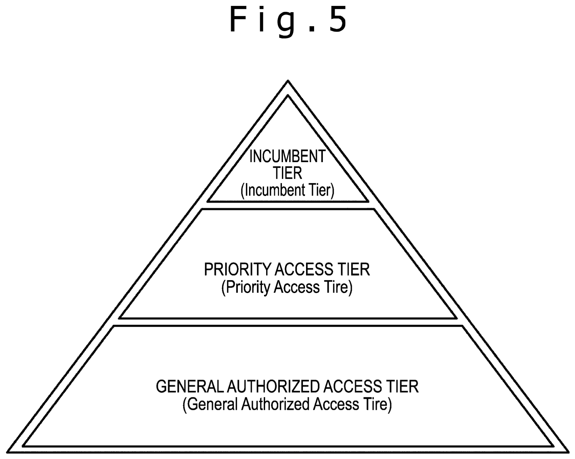

Fig. 5 is a diagram illustrating users of a shared frequency band.
[Fig. 6]

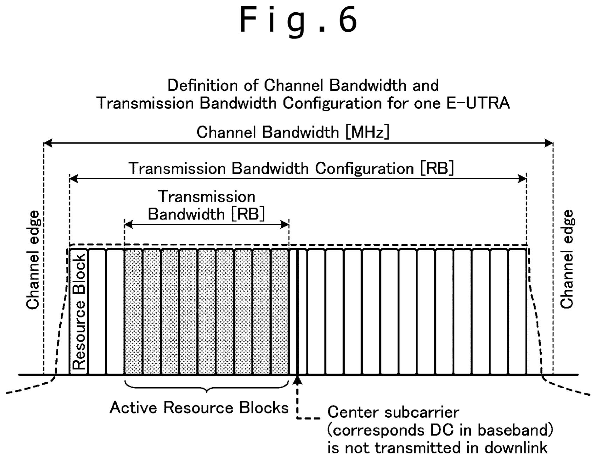

Fig. 6 is a diagram illustrating a specification of a transmission bandwidth in E-UTRA.
[Fig. 7]

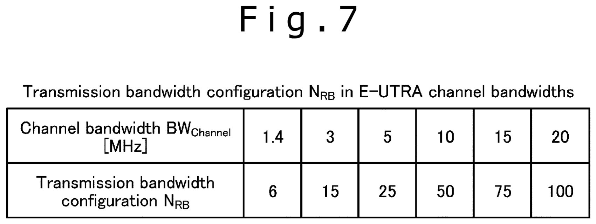

Fig. 7 is a diagram illustrating a specification of a transmission bandwidth in E-UTRA.
[Fig. 8]

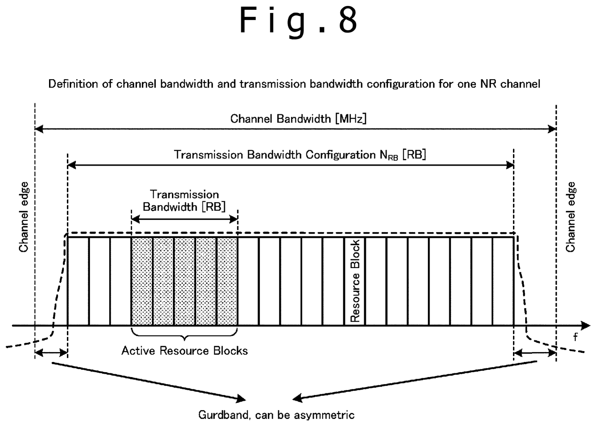

Fig. 8 is a diagram illustrating a specification of a transmission bandwidth in NR.
[Fig. 9]

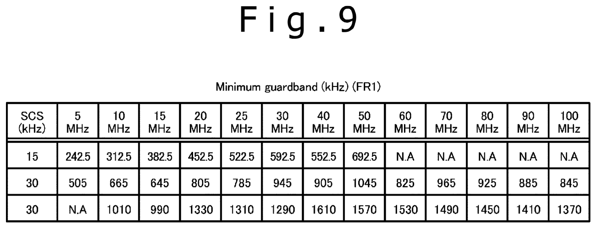

Fig. 9 is a diagram illustrating a specification of a transmission bandwidth in NR.
[Fig. 10]

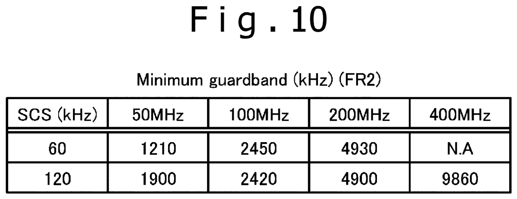

Fig. 10 is a diagram illustrating a specification of a transmission bandwidth in NR.
[Fig. 11]

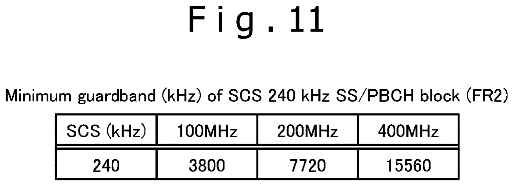

Fig. 11 is a diagram illustrating a specification of a transmission bandwidth in NR.

[Fig. 12]

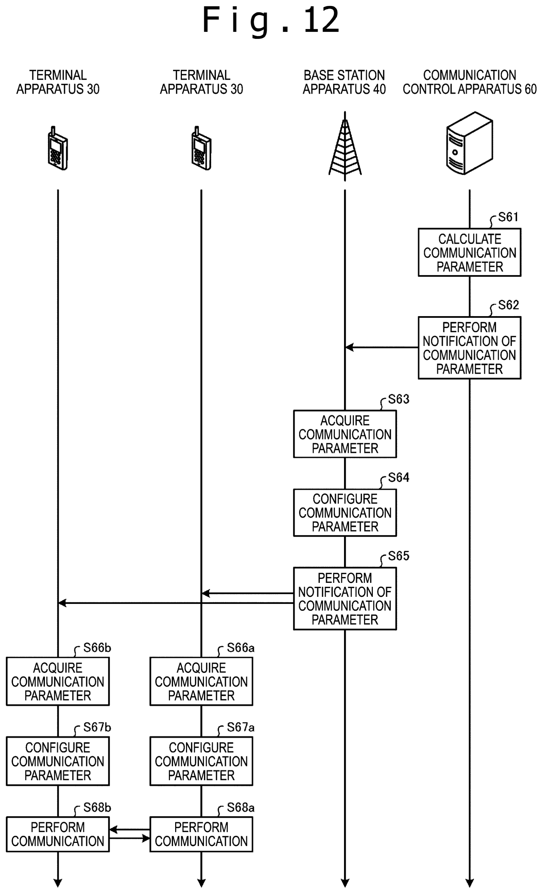

Fig. 12 is a diagram illustrating an example of a signaling procedure according to the communication system of the present disclosure.

[Fig. 13]

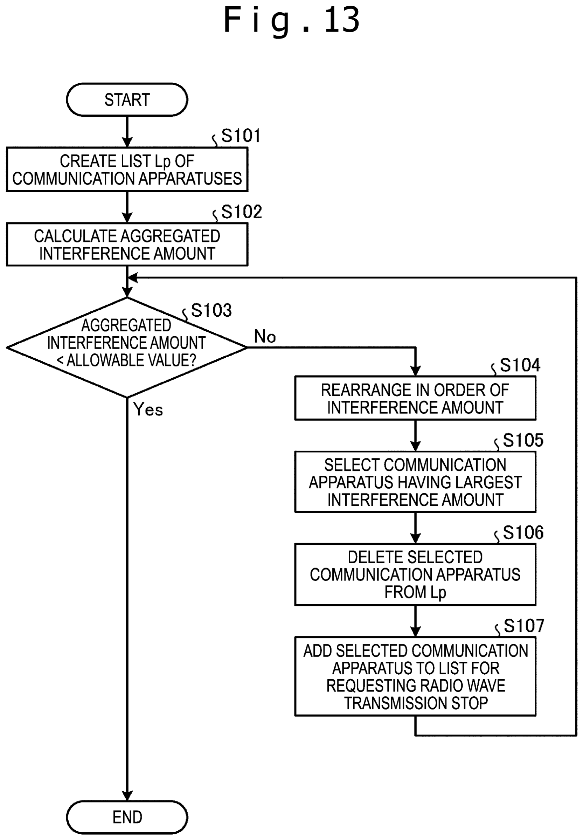

Fig. 13 is a diagram illustrating a procedure of creating a list for requesting radio wave transmission stop of communication parameter change target information.

[Fig. 14]

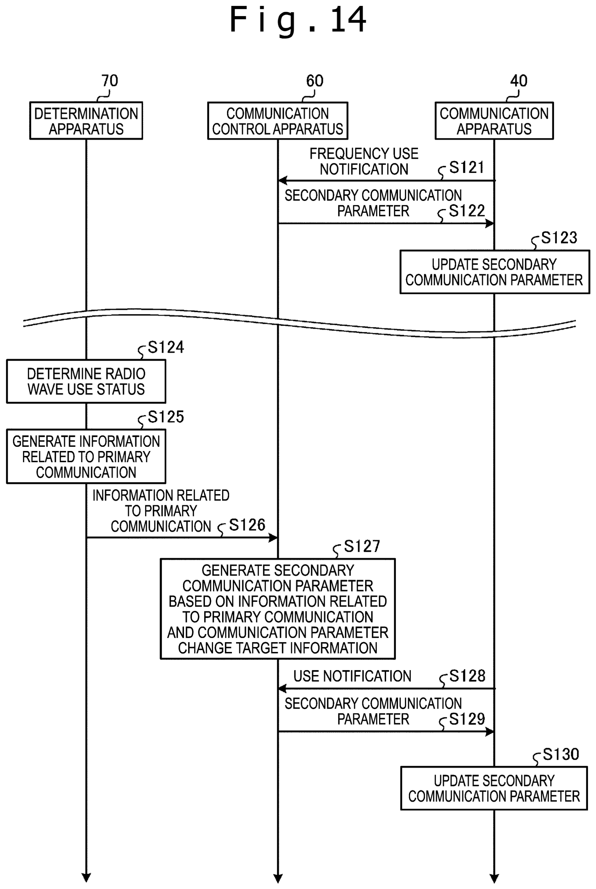

Fig. 14 is a diagram illustrating an example of an existing communication control procedure.

[Fig. 15]

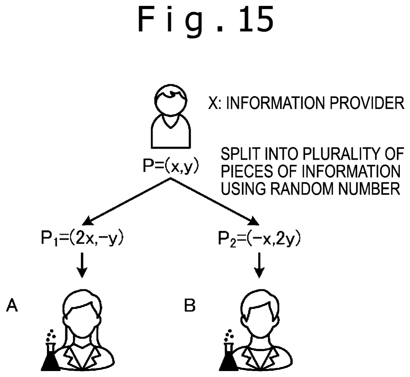

Fig. 15 is a diagram illustrating an image of secret sharing processing.

[Fig. 16]

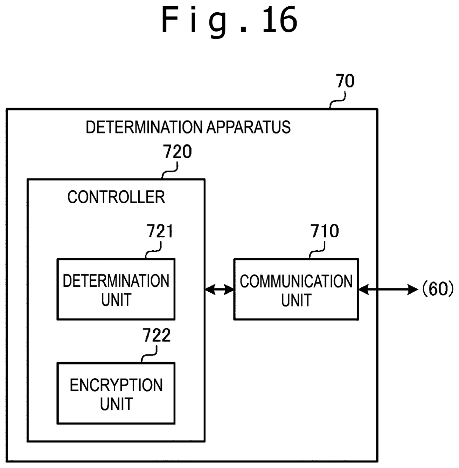

Fig. 16 is a diagram illustrating a configuration example of a determination apparatus according to a first embodiment of the present disclosure.

[Fig. 17]

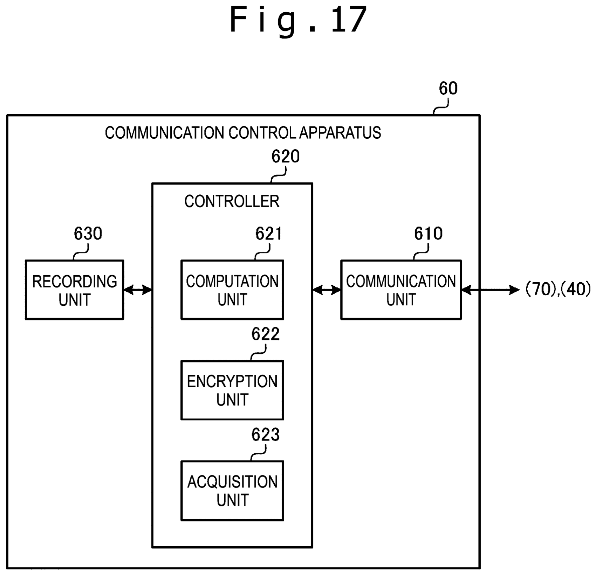

Fig. 17 is a diagram illustrating a configuration example of the communication control apparatus according to the first embodiment of the present disclosure.

[Fig. 18]

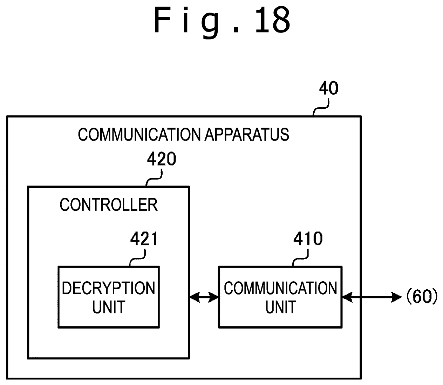

Fig. 18 is a diagram illustrating a configuration example of a communication apparatus according to the first embodiment of the present disclosure.

[Fig. 19]

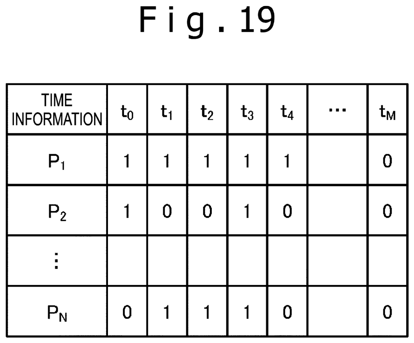

Fig. 19 is a diagram illustrating an example of a use schedule of a primary communication system according to the first embodiment of the present disclosure.

[Fig. 20]

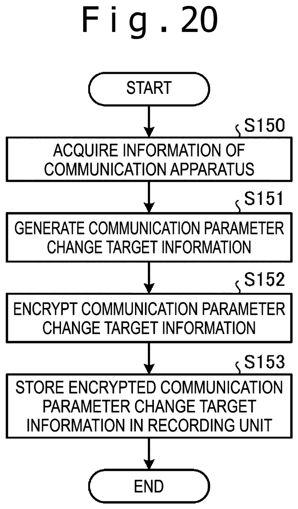

Fig. 20 is a diagram illustrating an example of a processing procedure of communication control processing according to the first embodiment of the present disclosure.

[Fig. 21]

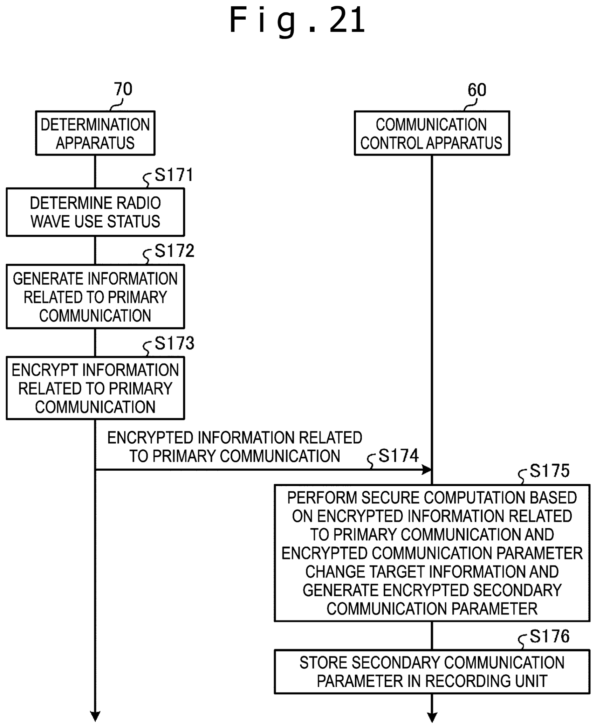

Fig. 21 is a diagram illustrating an example of a communication control procedure according to the first embodiment of the present disclosure.

[Fig. 22]

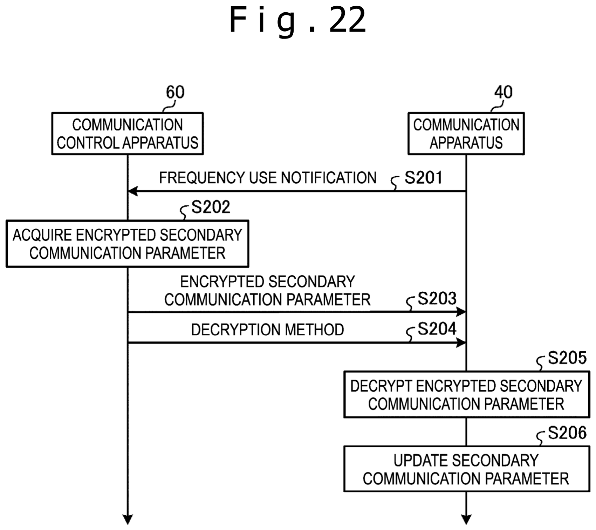

Fig. 22 is a diagram illustrating an example of a communication control procedure according to the first embodiment of the present disclosure.

[Fig. 23]

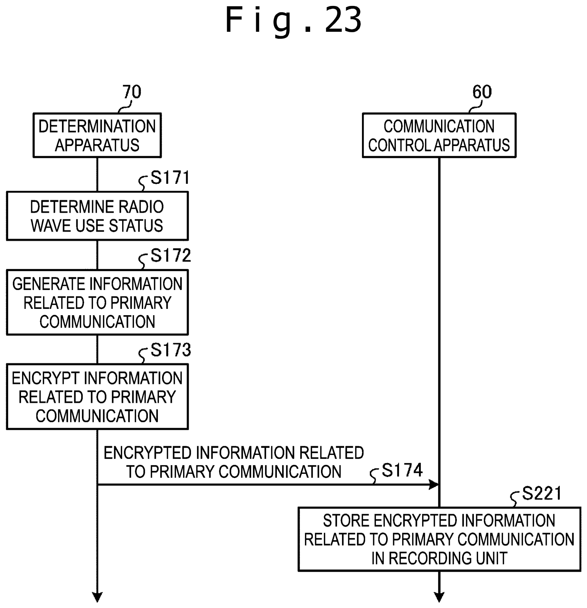

Fig. 23 is a diagram illustrating an example of a communication control procedure according to a second embodiment of the present disclosure.

[Fig. 24]

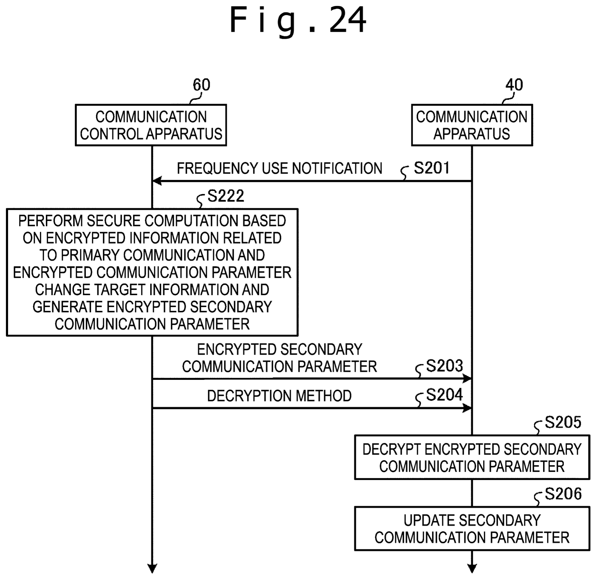

Fig. 24 is a diagram illustrating an example of a communication control procedure according to the second embodiment of the present disclosure.

[Fig. 25]

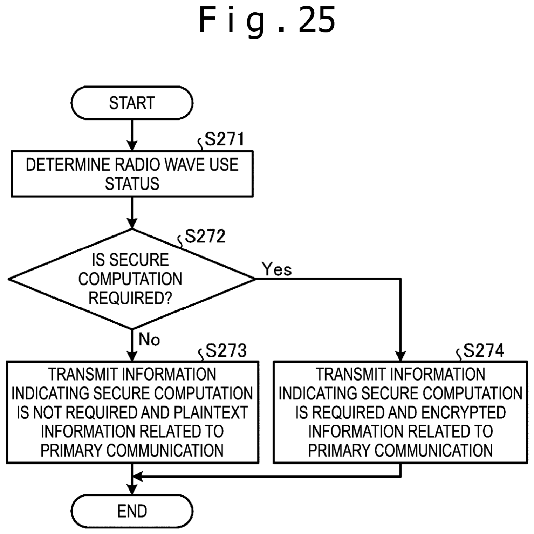

Fig. 25 is a diagram illustrating an example of a processing procedure of communication control processing according to a third embodiment of the present disclosure.

[Fig. 26]

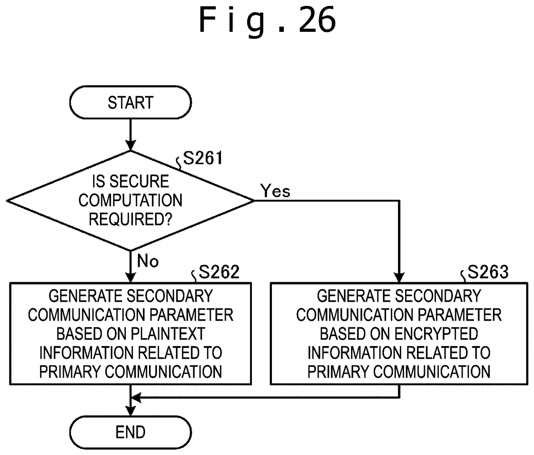

Fig. 26 is a diagram illustrating an example of a processing procedure of communication control processing according to the third embodiment of the present disclosure.

[Fig. 27]

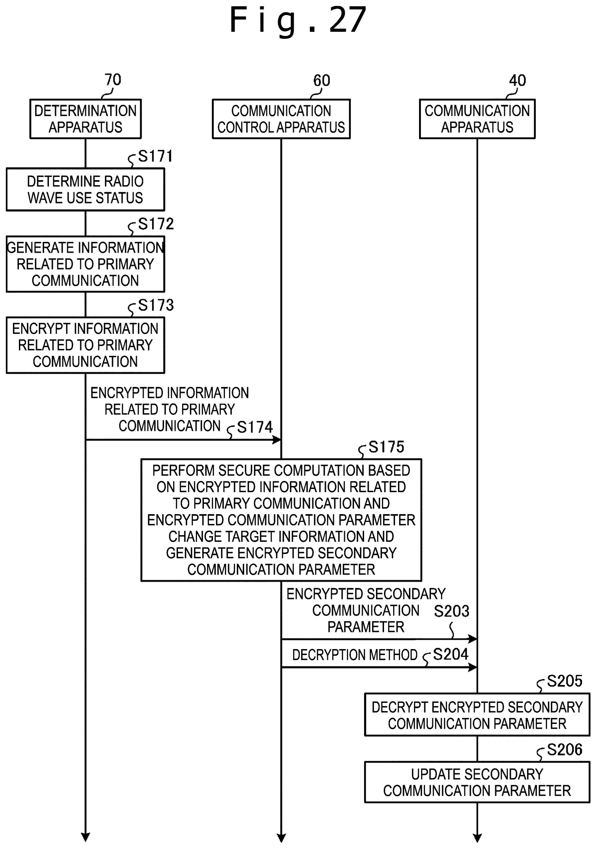

Fig. 27 is a diagram illustrating an example of a communication procedure according to a third modification of the third embodiment of the present disclosure.

[Fig. 28]

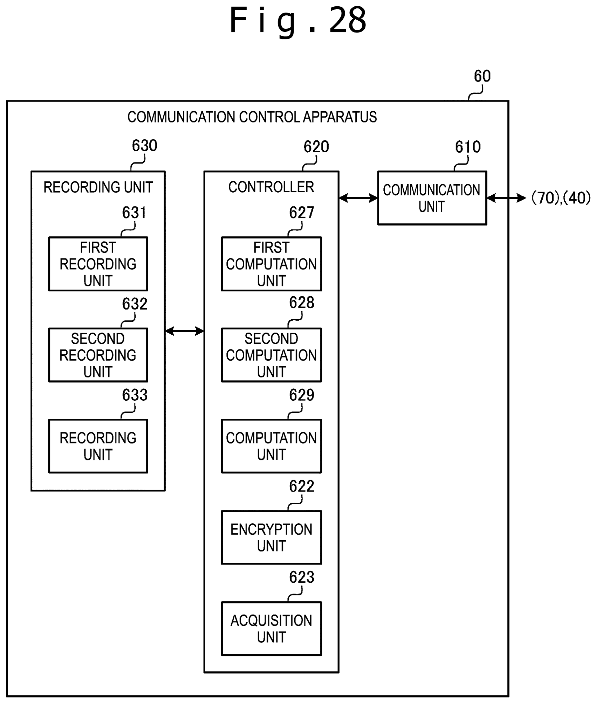

Fig. 28 is a diagram illustrating a configuration example of the communication control apparatus according to a fourth embodiment of the present disclosure.

[Fig. 29]

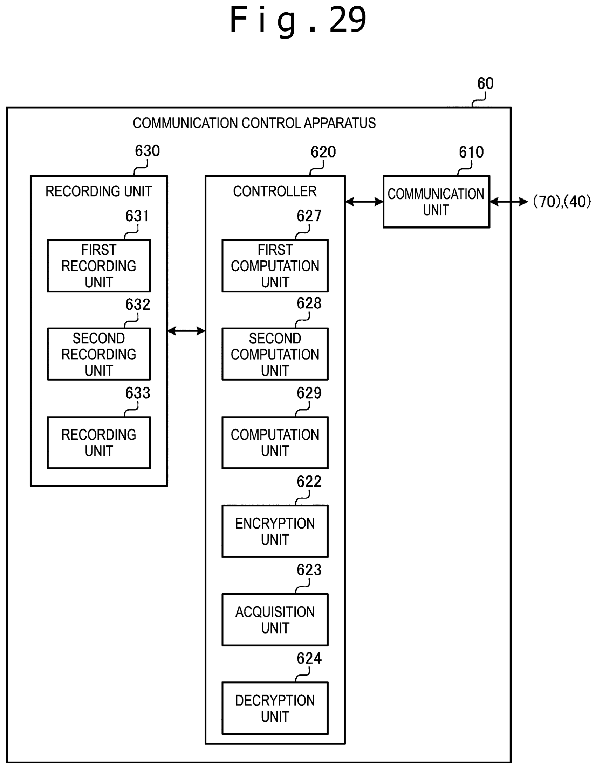

Fig. 29 is a diagram illustrating another configuration example of the communication control apparatus according to the fourth embodiment of the present disclosure.

[Fig. 30]

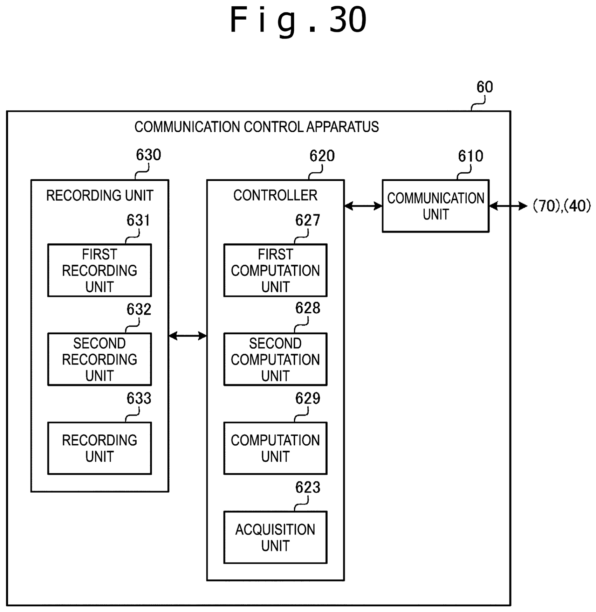

Fig. 30 is a diagram illustrating another configuration example of the communication control apparatus according to the fourth embodiment of the present disclosure.

[Fig. 31]

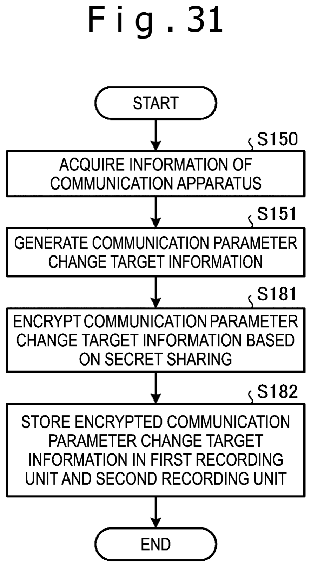

Fig. 31 is a diagram illustrating an example of a processing procedure of communication control processing according to the fourth embodiment of the present disclosure.

[Fig. 32]

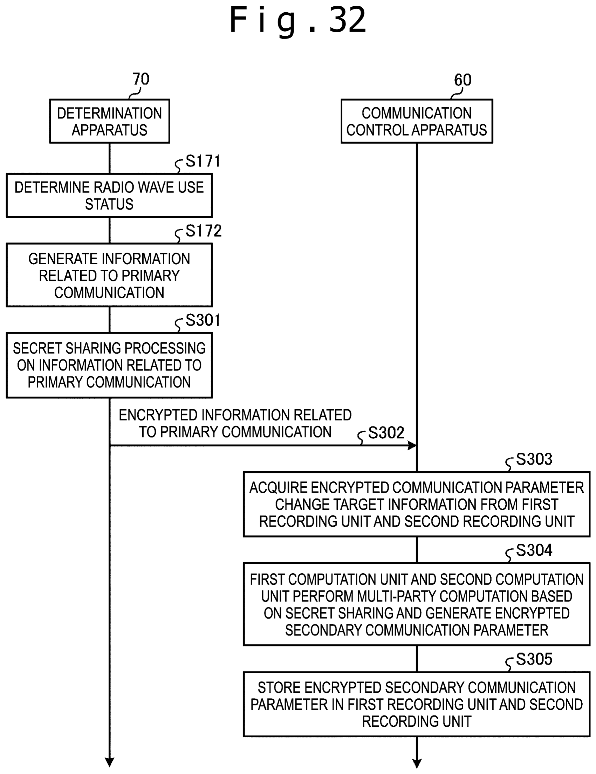

Fig. 32 is a diagram illustrating an example of a communication control procedure according to the fourth embodiment of the present disclosure.
[Fig. 33]

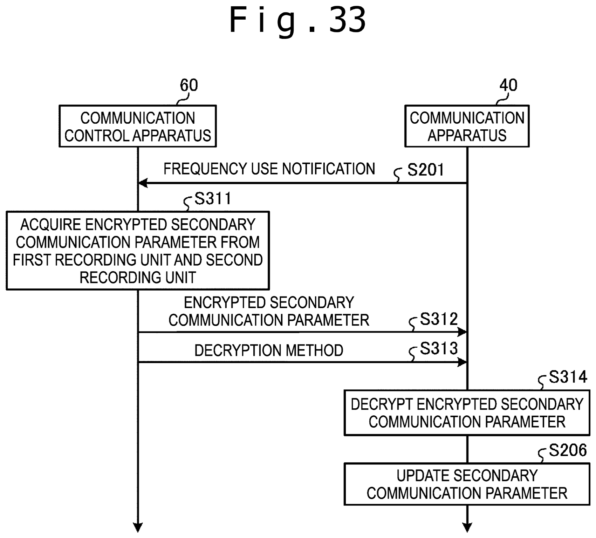

Fig. 33 is a diagram illustrating an example of a communication control procedure according to the fourth embodiment of the present disclosure.
[Fig. 34]

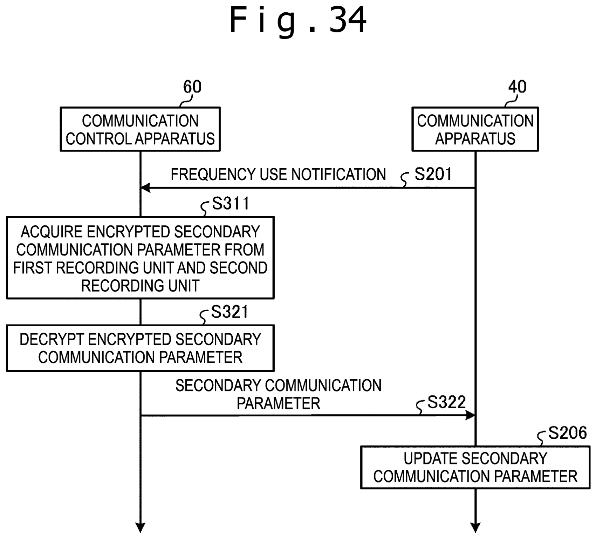

Fig. 34 is a diagram illustrating another example of a communication control procedure according to the fourth embodiment of the present disclosure.
[Fig. 35]

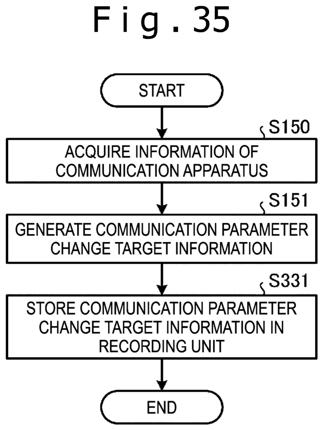

Fig. 35 is a diagram illustrating another example of a processing procedure of communication control processing according to the fourth embodiment of the present disclosure.
[Fig. 36]

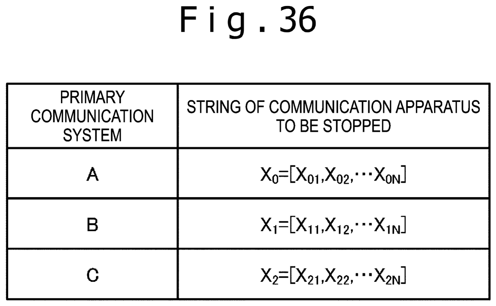

Fig. 36 is a diagram illustrating an example of the communication parameter change target information according to the fourth embodiment of the present disclosure.
[Fig. 37A]

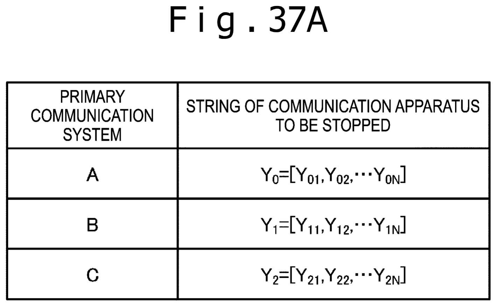

Fig. 37A is a diagram illustrating an example of a list of the communication parameter change target information after being subjected to additive secret sharing processing according to the fourth embodiment of the present disclosure.
[Fig. 37B]

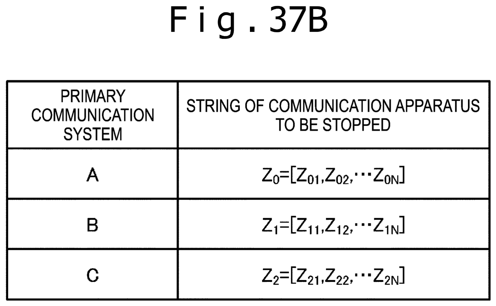

Fig. 37B is a diagram illustrating an example of a list of the communication parameter change target information after being subjected to additive secret sharing processing according to the fourth embodiment of the present disclosure.
[Fig. 38]

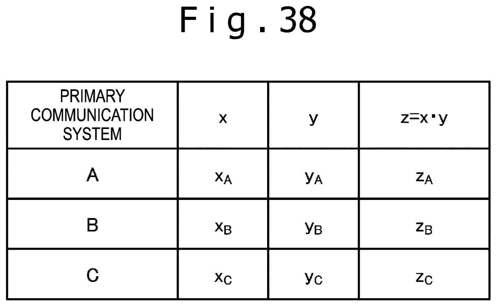

Fig. 38 is a diagram illustrating an example of Beaver's triples (x, y, z) according to the fourth embodiment of the present disclosure.
[Fig. 39A]

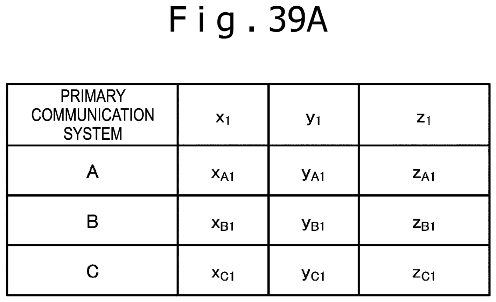

Fig. 39A is a diagram illustrating an example of Beaver's triples (x, y, z) after being subjected to additive secret sharing processing according to the fourth embodiment of the present disclosure.
[Fig. 39B]

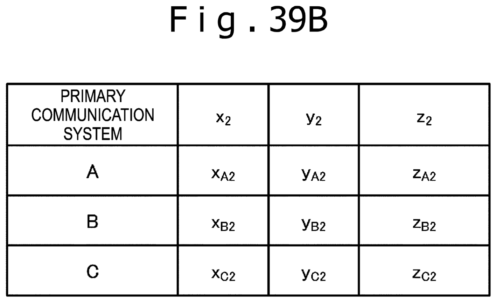

Fig. 39B is a diagram illustrating an example of Beaver's triples (x, y, z) after being subjected to additive secret sharing processing according to the fourth embodiment of the present disclosure.
[Fig. 40]

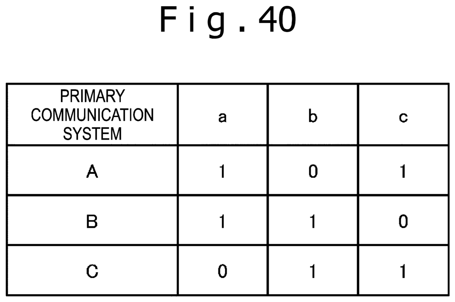

Fig. 40 is a diagram illustrating an example of the communication parameter change target information according to the fourth embodiment of the present disclosure.
[Fig. 41A]

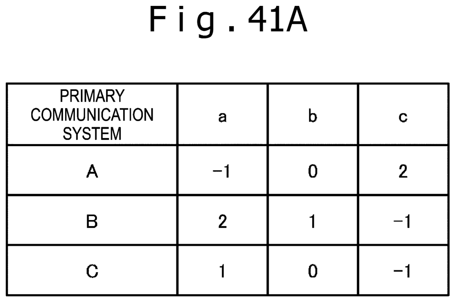

Fig. 41A is a diagram illustrating an example of a list of the communication parameter change target information after being subjected to additive secret sharing processing according to the fourth embodiment of the present disclosure.
[Fig. 41B]
Fig. 41B is a diagram illustrating an example of a list of the communication parameter change target information after being subjected to additive secret sharing processing according to the fourth embodiment of the present disclosure.
[Fig. 42]

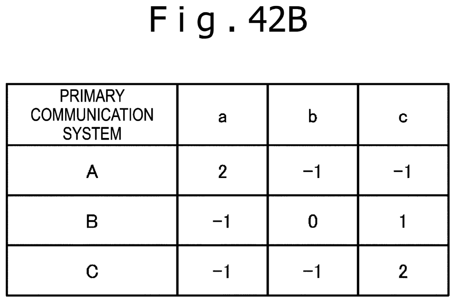

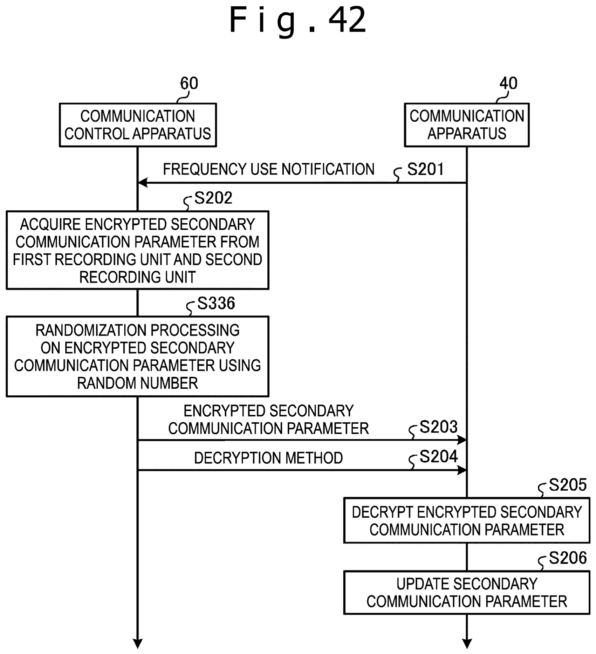

Fig. 42 is a diagram illustrating an example of a communication control procedure according to a fifth embodiment of the present disclosure.
[Fig. 43A]

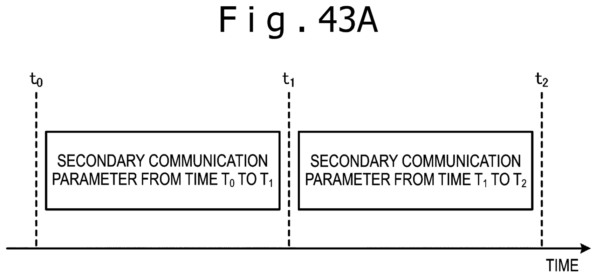

Fig. 43A is a diagram illustrating an example of computation of a secondary communication parameter according to the fifth embodiment of the present disclosure.
[Fig. 43B]

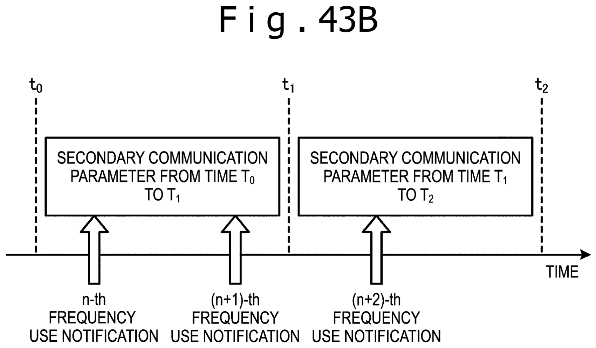

Fig. 43B is a diagram illustrating an example of computation of a secondary communication parameter according to the fifth embodiment of the present disclosure.
[Fig. 44]

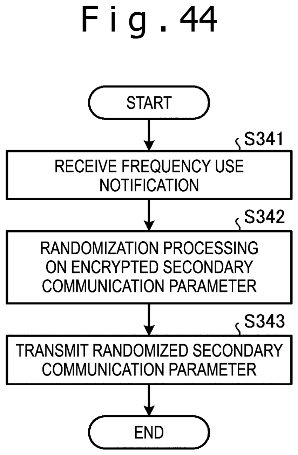

Fig. 44 is a diagram illustrating an example of randomization processing on the secondary communication parameter according to the fifth embodiment of the present disclosure.
[Fig. 45]

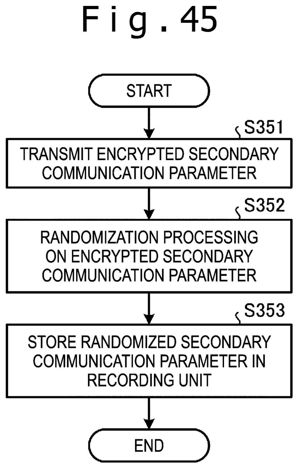

Fig. 45 is a diagram illustrating another example of randomization processing on the secondary communication parameter according to the fifth embodiment of the present disclosure.

Description of Embodiments

In the present specification and the drawings, a plurality of constituent elements including substantially the same functional configuration may be distinguished by denoting different numbers or alphabet letters subsequent to the same reference signs. For example, a plurality of configurations including substantially the same functional configuration are distinguished as in communication control apparatuses $60_1$ and $60_2$ as necessary. A plurality of configurations including substantially the same functional configuration are distinguished as in communication systems 2A and 2B as necessary. Note that, when the plurality of constituent elements including substantially the same functional configuration need not be particularly distinguished, they are denoted only by the same reference sign. For example, when the communication control apparatuses $60_1$ and $60_2$ need not be particularly distinguished, they are simply referred to as the communication control apparatuses 60. When the communication systems 2A and 2B need not be particularly distinguished, they are simply referred to as the communication systems 2.

Embodiments of the present disclosure will be described below in detail with reference to the drawings. Description will be given in the following order. Note that, in each of the following embodiments, the same parts are denoted by the same reference signs, and thus overlapping description will be omitted.

1. Overview of Communication System
1.1. Configuration of Communication System
1.2. Terms Related to Frequency and Sharing
2. Description of Various Procedures
2.1. Registration Procedure

2.1.1. Details of Required Parameters
2.1.1.1. Supplement to Required Parameters
2.1.2. Details of Registration Processing

2.2. Available Frequency Information Query Procedure (Available Spectrum Query Procedure)

2.2.1. Details of Required Parameters
2.2.2. Details of Available Frequency Evaluation Processing

2.3. Frequency Use Permission Procedure (Spectrum Grant Procedure)
2.3.1. Details of Frequency Use Permission Processing
2.4. Frequency Use Notification (Spectrum Use Notification/Heartbeat)
2.5. Supplement to Various Procedures
2.6. Various Procedures Related to Terminal
2.7. Procedures Occurring between Communication Control Apparatuses

2.7.1. Information Exchange
2.7.2. Command and Request Procedure

2.8. Information Transmission Means

2.8.1. Signaling between Communication Control Apparatus and Communication Apparatus
2.8.2. Signaling between Communication Apparatus and Terminal
2.8.3. Signaling between Terminals

3. Configuration of Proposed System
3.1. Existing Embodiment

3.1.1. Creation of Communication Parameter Change Target Information in Existing DSA
3.1.2. Processing in Detecting Radio Wave Use of Primary Communication System

3.2. Secure Computation Technologies
3.3. Overview of Present Disclosure
3.4. First Embodiment
3.5. Second Embodiment
3.6. Third Embodiment
3.6.1. First Modification
3.6.2. Second Modification
3.6.3. Third Modification

3.7. Fourth Embodiment

3.8. Fifth Embodiment

1. Overview of Communication System

1.1 Configuration of Communication System

Fig. 1 is a diagram illustrating a configuration example of a communication system according to an embodiment of the present disclosure. Fig. 1 is a diagram illustrating a configuration of a communication system 1000 according to the present disclosure. The communication system 1000 includes communication systems 2. Note that apparatuses in the figure can also be considered as apparatuses in a logical sense. In other words, a part of the apparatuses in the figure may be realized by a virtual machine (VM), a container, a docker, and the like, and they may be implemented on physically the same hardware.

The communication system 2 includes terminal apparatuses 30, communication apparatuses 40, an intermediate apparatus 50, and communication control apparatuses 60. In the example of Fig. 1, as the communication systems 2, a communication system 2A and a communication system 2B are illustrated. The communication system 2A includes a communication system 2a1, a communication system 2a2, and a communication system 2a3.

The communication system 2a1 includes a terminal apparatus $30_1$ and a communication apparatus $40_1$. The communication system 2a2 includes terminal apparatuses $30_2$ and $30_3$ and communication apparatuses $40_2$ and $40_3$. The communication system 2a3 includes terminal apparatuses $30_4$ and $30_5$, communication apparatuses $40_4$ and $40_5$, and an intermediate apparatus $50_1$. The communication system 2B includes a terminal apparatus $30_6$ and a communication apparatus $40_6$. In the example of Fig. 1, the communication apparatuses $40_1$ and $40_2$ and $40_4$ to $4_6$ are communication apparatuses (Type A), and the communication apparatus $40_3$ is a communication apparatus (Type B).

Note that the communication systems 2 need not necessarily include the communication control apparatuses 60. To give description with reference to the example of Fig. 1, the communication system 2a2 and the communication system 2a3 externally including the communication control apparatuses 60 may each be regarded as one communication system 2. The communication systems 2 need not necessarily include the intermediate apparatus 50. In the example of Fig. 1, the communication system 2a1 not including the intermediate apparatus 50 may be regarded as one communication system 2.

Note that the intermediate apparatus 50 and the communication control apparatuses 60 may include radio communication functions. In this case, the intermediate apparatus 50 and the communication control apparatuses 60 can also be regarded as radio communication apparatuses. In the following description, the radio communication apparatuses may be simply referred to as communication apparatuses. Note that the communication apparatuses are not limited to the radio communication apparatuses, and for example, apparatuses only capable of wired communication without the radio communication function can also be regarded as the communication apparatuses.

Typically, the communication apparatus 40 is a radio apparatus that provides communication services to terminals, such as a radio base station (a Node B, an eNB, a gNB, or the like) and a radio access point. It may be a radio relay apparatus. It may be an optical extension apparatus referred to as a remote radio head (RHH). In description of the invention disclosed in the present document, unless otherwise specifically noted, the communication apparatus 40 is an entity constituting a secondary system that shares a part or all of a frequency band allocated to a primary communication system.

Coverage provided by the communication apparatus 40 allows various sizes from a large one such as a macro cell to a small one such as a pico cell. As in a Distributed Antenna System (DAS), a plurality of communication apparatuses 40 may form one cell. When the communication apparatus 40 is capable of beamforming, a service area may be formed for each beam or each cell.

In the present document, it is assumed that two different types of communication apparatuses 40 are present. In the present document, the communication apparatus 40 capable of accessing the communication control apparatus 60 even without use of a radio path involving permission of the communication control apparatus 60 is referred to as a "communication apparatus (Type A)". For example, the communication apparatus 40 capable of wired Internet connection can be regarded as the "communication apparatus (Type A)". For example, if a radio relay apparatus, even without a wired Internet connection function, has established a radio backhaul link using a frequency not requiring permission of the communication control apparatus 60 with another communication apparatus (Type A), such a radio relay apparatus may be regarded as the "communication apparatus (Type A)".

In the present document, the communication apparatus 40 not capable of accessing the communication control apparatus 60 without a radio path involving permission of the communication control apparatus 60 is referred to as a "communication apparatus (Type B)". For example, a radio relay apparatus that needs to establish a backhaul link using a frequency requiring permission of the communication control apparatus 60 can be regarded as the "communication apparatus (Type B)". For example, a terminal apparatus, such as a smartphone, having a radio network providing function as typified by tethering, which uses a frequency requiring permission of the communication control apparatus 60 for both of a backhaul link and an access link, may be regarded as the "communication apparatus (Type B)".

The communication apparatus 40 need not necessarily be installed in a fixed manner, and may be installed in a moving object such as an automobile. It need not necessarily be present on the ground, and an object present in the air or in space such as an aircraft, a drone, a helicopter, and a satellite or an object present on the sea or in the sea such as a vessel and a submarine may have the communication apparatus function. Typically, such a mobile communication apparatus 40 corresponds to the communication apparatus (Type B), and acquires an access path to the communication control apparatus 60 by performing radio communication with another communication apparatus (Type A). As a matter of course, when a frequency used in radio communication with the communication apparatus (Type A) is not to be managed by the communication control apparatus 60, even the mobile communication apparatus can be handled as the communication apparatus (Type A).

Unless otherwise specifically noted, the description "communication apparatus" is applied to both of the communication apparatus (Type A) and the communication apparatus (Type B).

The communication apparatus 40 can be used, operated, and managed by various entities. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, an educational institution (an incorporated educational institution, each municipal board of education, or the like), a real estate (a building, an apartment, or the like) administrator, an individual, and the like can be assumed. In the present disclosure, this is not restrictive. The communication apparatus 40 may be a shared facility used by a plurality of operators or a plurality of individuals. Installation and operation of the facility may be carried out by a third party different from users.

Typically, the communication apparatus 40 operated by an operator is connected to the Internet via a core network. Operation management and maintenance are performed by a function referred to as operation, administration & maintenance (OA&M). For example, as illustrated in Fig. 1, the intermediate apparatus 50 (network manager) that integrally controls the communication apparatuses 40 in the network can be present.

Typically, a terminal (a user equipment, a user terminal, a user station, a mobile terminal, a mobile station, or the like) is a communication device, such as a smartphone. In addition, it may be a device having a communication function, such as a camera for business use. It may be a communication device, such as a broadcasting business radio station (field pickup unit (FPU)) for television broadcasting. It need not necessarily be used by a person, and for example, a device such as a factory machine and a sensor installed in a building may be connected to the network as in so-called machine type communication (MTC). A device referred to as Customer Premises Equipment (CPE) provided to acquire Internet connection may behave as a terminal.

As typified by D2D and V2X, a relay communication function may be provided on the terminal side.

It need not necessarily be present on the ground, and an object present in the air or in space such as an aircraft, a drone, a helicopter, a HAPS, a hot air balloon, and a satellite or an object present on the sea or in the sea such as a vessel and a submarine may operate as a terminal.

In description of the invention disclosed in the present document, unless otherwise specifically noted, the terminal corresponds to an entity at which a radio link terminates using a frequency requiring permission of the communication control apparatus 60. Note that, depending on a function provided in the terminal and network topology to be applied, the terminal can perform operation similar to that of the communication apparatus 40. In other words, in implementing the present disclosure, depending on the network topology, a base station apparatus may be referred to as a terminal, or a terminal may be referred to as a base station apparatus.

Typically, the communication control apparatus 60 is an apparatus that performs decision and/or permission, instruction, and management of communication parameters of the communication apparatus 40. For example, database servers referred to as the TV White Space Database (TVWSDB), Geolocation Database (GLDB), the Spectrum Access System (SAS), and Automated Frequency Coordination (AFC) correspond to this. For example, a radio wave interference control apparatus among the communication apparatuses 40 defined in standards as typified by NPL 1 (ETSI EN 303 387), IEEE 802.19.1-2018, and NPL 2 (CBRSA-TS-2001) also corresponds to this. For example, a Registered Location Secure Server (RLSS) defined in IEEE 802.11-2016 also corresponds to this. In other words, these examples are not restrictive, and an entity that performs decision and/or permission, instruction, management, and the like of the communication parameters of the communication apparatus 40 may be referred to as the communication control apparatus 60. A target to be controlled by the communication control apparatus 60 is basically the communication apparatus 40, but terminals under the communication apparatus 40 may be controlled.

The communication control apparatus 60 also corresponds to a combination of a plurality of database servers each having a different above-described role. For example, the CBRS Alliance SAS (CSAS) being a combination of the SAS and CxM, which is described in NPL 2 (CBRSA-TS-2001), can also be regarded as the communication control apparatus 60.

The communication control apparatus 60 can also be realized by implementing, in one database server, software having a function equivalent to that of the database server. For example, the SAS in which a function or software corresponding to CxM is implemented can also be regarded as the communication control apparatus 60.

There may be a plurality of communication control apparatuses 60. When there are a plurality of communication control apparatuses 60, at least one of the following three types of decision-making topologies can be at least applied to the communication control apparatus 60.

Autonomous decision-making
Centralized decision-making
Distributed decision-making

Autonomous decision-making is decision-making topology in which an entity that performs decision-making (a decision-making entity, which herein refers to the communication control apparatus) performs decision-making independently of another decision-making entity. The communication control apparatus 60 independently performs necessary frequency allocation and interference control computation. For example, this can be applied when a plurality of communication control apparatuses 60 are deployed in a distributed manner as in Fig. 2. Fig. 2 is a diagram illustrating an example in which a plurality of communication control apparatuses are deployed in a distributed manner.

Centralized decision-making is decision-making topology in which a decision-making entity delegates decision-making to another decision-making entity. When centralized decision-making is performed, for example, a model as in Fig. 3 is assumed. Fig. 3 is a diagram illustrating another example in which a plurality of communication control apparatuses are deployed in a distributed manner. It illustrates a model (a so-called master-slave type) in which one communication control apparatus 60 controls a plurality of communication control apparatuses 60 in a centrally controlling manner. In such a case, a master communication control apparatus 60 can control a plurality of slave communication control apparatuses 60, and perform decision-making in a centralized manner.

Distributed decision-making is decision-making topology in which a decision-making entity performs decision-making in cooperation with another decision-making entity. For example, when a plurality of communication control apparatuses 60 are deployed as in Fig. 2, each of them performing decision-making and then performing mutual adjustment, negotiation, or the like of decision-making results can correspond to "distributed decision-making". For example, in the model as in Fig. 3, the master communication control apparatus 60 dynamically performing delegation, revocation, or the like of a decision-making authority for each slave communication control apparatus 60 for the purpose of load balancing or the like can also be considered as "distributed decision-making".

In a scenario to which centralized decision-making and distributed decision-making are applied, as a modification, implementation as in Fig. 4 can also be performed. Fig. 4 is a diagram illustrating another example in which a plurality of communication control apparatuses are deployed in a distributed manner. An implementation may be employed that allows a master communication control apparatus to be present outside and allows a communication apparatus and an intermediate apparatus for controlling a plurality of communication apparatuses to behave as slave communication control apparatuses.

The communication control apparatus 60 can acquire necessary information also from entities other than the communication apparatuses 40 or the terminals for the sake of the role. For example, information necessary for protection of a primary communication system can be acquired from a database (regulatory database) managed and operated by a telecommunications national regulatory authority (NRA) of a country or a region. One example of the regulatory database is the Universal Licensing System (ULS) operated by the Federal Communications Commissions (FCC) or the like. Examples of the information necessary for protection can include, for example, location information of the primary communication system, communication parameters of the primary communication system, an out-of-band emission limit, an adjacent channel leakage ratio (ACLR), adjacent channel selectivity, a fading margin, a protection ratio (PR), and/or the like. Regarding these examples, it is desirable to use a fixed numerical value or an acquisition and derivation method if defined by regulation or the like.

Another applicable example of the regulatory database is a database that records the communication apparatus 40 or the terminal having received compliance certification such as the Equipment Authorization System (EAS) managed by the Office of Engineering and Technology (OET) of the FCC. From such regulatory databases, information related to operable frequencies of the communication apparatus 40 or the terminal, information related to maximum EIRP, and the like can be acquired. As a matter of course, the communication control apparatus 60 may use these pieces of information for protection of the primary communication system.

As another example, it can also be assumed that radio wave sensing information is acquired from a radio wave sensing system installed and operated for the purpose of radio wave detection of the primary communication system. As a specific example, radio wave detection information of a ship radar as the primary communication system is acquired from a radio wave sensing system referred to as Environmental Sensing Capability (ESC) in the CBRS of the United States. When the communication apparatus 40 or the terminal has the sensing function, the radio wave detection information of the primary communication system may be acquired from these.

It can also be assumed that the communication control apparatus 60 acquires activity information of a primary system from a portal system managing the activity information of the primary system. As a specific example, in the Citizens Broadband Radio Service (CBRS) of the United States, the communication control apparatus 60 acquires the activity information of the primary system from a calendar-type system referred to as the Informing Incumbent Portal. Based on the acquired activity information, a protection area referred to as a Dynamic Protection AreaA (DPA) is activated, to thereby achieve protection of the primary system. A similar system referred to as Informing Incumbent Capability (IIC) also realizes protection of the primary system, using a similar method.

An interface between the entities may be either wired or wireless. For example, an interface between the communication control apparatus 60 and the communication apparatus 40 is not only a wired line, and a radio interface not dependent upon frequency sharing (for example, a radio communication line provided by a mobile network operator via a licensed band, Wi-Fi communication using an existing license-exempt band, or the like) may also be used.

1.2 Terms Related to Frequency and Sharing The present document provides description assuming a dynamic frequency sharing (Dynamic Spectrum Access) environment. As a typical example, a mechanism defined in the US FCC Regulation Part 96 Citizens Broadband Radio Service (hereinafter referred to as the CBRS) will be described.

Fig. 5 is a diagram illustrating users of a shared frequency band. In the CBRS, as illustrated in Fig. 5, each user of the shared frequency band is classified into one of three layers. The layers are each referred to as a tier. The three groups are referred to as the Incumbent Tier, the Priority Access Tier, and the General Authorized Access (GAA) tier.

The incumbent tier is a group consisting of incumbent users who have conventionally used the frequency band defined as the shared frequency band. Generally, the incumbent users are also referred to as primary users. In the CBRS, the Department of Defense (DOD), fixed satellite operators, and Grandfathered Wireless Broadband Licensees (GWBLs) are defined as the incumbent users. The incumbent tier is not required to perform interference avoidance or suppression for the priority access tier and the general authorized access tier having lower priorities. The incumbent tier is protected from interference by the priority access tier and the general authorized access tier. In other words, the users of the incumbent tier can use the frequency band without considering presence of other groups.

The priority access tier is a group consisting of users who use the shared frequency band based on a license referred to as a Priority Access License (PAL). Generally, the users using the shared frequency band are also referred to as secondary users. In the shared use of frequency in the priority access tier, interference avoidance or suppression for the incumbent tier having a priority higher than the priority access tier is required, but interference avoidance or suppression for the general authorized access tier having a lower priority is not required. The priority access tier is not protected from interference by the incumbent tier having a higher priority, but is protected from interference by the general authorized access tier having a lower priority.

The general authorized access tier is a group consisting of other shared frequency band users who do not belong to the incumbent tier or the priority access tier. Similarly, in general, they are also referred to as secondary users. Note that they are also referred to as low-priority secondary users as the priority of shared use is lower than the priority access tier. In the shared use of frequency in the general authorized access tier, interference avoidance or suppression for the incumbent tier and the priority access tier having higher priorities is required. The general authorized access tier is not protected from interference by the incumbent tier and the priority access tier having higher priorities. In other words, the general authorized access tier is a tier in which opportunistic shared frequency use is required by regulation.

In implementing the present disclosure, these definitions are not restrictive. Generally, the CBRS is referred to as a 3-tier structure, but may be a 2-tier structure. Typical examples include a 2-tier structure such as Authorized Shared Access (ASA), Licensed Shared Access (LSA), evolved LSA (eLSA), TV band White Space (TVWS), and 6 GHz band sharing of the United States. In ASA/LSA/eLSA, a structure equivalent to a combination of the incumbent tier and the priority access tier is employed. In the TVWS and 6 GHz band sharing of the United States, a structure equivalent to a combination of the incumbent tier and the general authorized access tier is employed. Four or more tiers may be present. For example, an intermediate tier corresponding to the priority access tier may be further prioritized or the like. For example, the general authorized access tier may be similarly prioritized or the like.

Depending on the frequency band to be applied, another radio system may be used as the primary communication system. For example, as an example of the primary communication system, a radio system such as TV broadcasting, a fixed microwave line (Fixed System (FS)), a meteorological radar, a radio altimeter, a radio train control system (communications-based train control), and radio astronomy may be used. These are not restrictive, and any radio system may be regarded as the primary communication system.

It need not even be limited to the frequency sharing environment. Generally, in frequency sharing or frequency secondary use, as described above, an existing system using a target band is referred to as the primary communication system and a secondary user is referred to as the secondary system, but when the present disclosure is applied to an environment other than the frequency sharing environment, implementation may be performed through replacement with other terms. For example, a macro cell base station in a heterogeneous network (HetNet) may be used as the primary communication system, and a small cell base station or a relay station may be used as the secondary system. The base station may be used as the primary communication system, and a relay terminal (relay UE) or an in-vehicle terminal (vehicle UE) that realizes D2D or V2X being present in the coverage may be used as the secondary system. The base station is not limited to a fixed type, and may be a portable type/mobile type. In such a case, for example, the communication control apparatus 60 provided in the present disclosure may be provided in the core network, the base station, the relay station, the relay terminal, or the like.

The term "frequency" may be replaced with another term. For example, it may be replaced with a term such as a "resource", a "resource block", a "resource element", a "resource pool", a "channel", a "component carrier", a "carrier", a "subcarrier", and a "bandwidth part (BWP)", or another term having meaning equivalent to or similar to these.

2. Description of Various Procedures

In this section, basic procedures that can be used in implementing the present disclosure will be described. Note that, up to 2.5, description will be given mainly assuming the communication apparatus (Type A).

2.1 Registration Procedure

A registration procedure is a procedure in which device parameters related to the communication apparatus 40 are registered with the communication control apparatus 60. Typically, the registration procedure is started when the communication apparatus 40 or one or more communication systems including a plurality of communication apparatuses 40 notify the communication control apparatus 60 of a registration request including the device parameters.

2.1.1 Details of Required Parameters

For example, the device parameters refer to the following information.

Communication apparatus user information
Communication apparatus-specific information
Information related to a location
Antenna information
Radio interface information
Legal information
Installer information
Communication apparatus group information

In practice, information other than these may be regarded as the device parameters.

The communication apparatus user information is information related to the user of the communication apparatus 40. For example, a user ID, an account name, a user name, user contact information, a call sign, and the like can be assumed. The user ID and the account name may be independently generated by the communication apparatus user, or may be issued by the communication control apparatus 60 in advance. It is desirable that, as the call sign, a call sign issued by the NRA be used.

The communication apparatus user information can be used for the purpose of interference resolution, for example. As a specific example, in a frequency use notification procedure described in 2.5, the communication control apparatus 60 performs determination to stop use of a frequency being used by the communication apparatus 40, and instructs use stop. Despite this, when a frequency use notification request for the frequency is continuously notified, the communication control apparatus 60 can doubt malfunction of the communication apparatus 40, and perform a contact of a behavior verification request for the communication apparatus 40 to the user contact information included in the communication apparatus user information. This example is not restrictive, and when it is determined that the communication apparatus 40 performs operation contrary to communication control performed by the communication control apparatus 60, a contact can be performed using the communication apparatus user information.

The communication apparatus-specific information is information allowing for identification of the communication apparatus 40, communication apparatus product information, information related to hardware of the communication apparatus, and the like.

The information allowing for identification of the communication apparatus can include a communication apparatus manufacturing number (serial number), a communication apparatus ID, and the like, for example. The communication apparatus ID may be independently provided by the communication apparatus user, for example.

The communication apparatus product information can include, for example, an authentication ID, a product model number, manufacturer information, and the like. The authentication ID is an ID provided from a certification authority of each country or region, such as an FCC ID, a CE number, a technical standard compliance certificate (technical compliance), and the like, for example. An ID issued by an industry organization or the like based on a unique authentication program may be included.

The communication apparatus-specific information as typified by these can be used for the purpose of a whitelist/blacklist, for example. For example, when one piece of information corresponding to the operating communication apparatus 40 is included in a blacklist, the communication control apparatus 60 can perform a behavior of performing an instruction of frequency use stop and not releasing the use stop measure until the blacklist is released in a frequency use notification procedure described in 2.5. For example, when the communication apparatus 40 included in a blacklist performs the registration procedure, the communication control apparatus 60 can reject registration. For example, an operation can also be performed such that the communication apparatus 40 corresponding to information included in the blacklist is not considered in interference calculation described in the present specification or only the communication apparatus 40 corresponding to information included in the whitelist is considered in interference calculation.

In the present specification, the FCC ID may be regarded as transmission power information. In the Equipment Authorization System (EAS) database being a type of regulatory database, apparatus information that has acquired authentication can be acquired. Information included therein includes, as well as the FCC ID, maximum EIRP information (certified maximum EIRP) that has acquired authentication and the like. The power information is associated with the FCC ID, and thus the FCC ID can be handled as the transmission power information. Similarly, the FCC ID may be considered to be equivalent to other information included in the EAS. When there is information, not only the FCC ID, that is associated with the authentication ID, the authentication ID may be considered to be equivalent to the information.

The information related to hardware of the communication apparatus can include, for example, transmission power class information. For example, FCC C.F.R Part 96 defines two types of classes, i.e., Category A and Category B, and the transmission power class information may include information of one of those. 3GPP TS 36.104 and TS 38.104 define several classes, such as an "eNodeB" and a "gNodeB", and these can be used as well.

The transmission power class information can be used for the purpose of interference calculation, for example. Interference calculation can be performed, using maximum transmission power defined for each class as the transmission power of the communication apparatus 40.

The information related to software of the communication apparatus can include, for example, version information, a build number, and the like related to an execution program describing processing necessary for interaction with the communication control apparatus 60. It may also include version information, a build number, and the like of software to operate as the communication apparatus 40.

Typically, the information related to a location is information allowing for identification of a geographical location of the communication apparatus 40. For example, it is coordinate information acquired by a positioning function as typified by the Global Positioning System (GPS), Beidou, the Quasi-Zenith Satellite System (QZSS), Galileo, and the Assisted Global Positioning System (A-GPS). Typically, information related to latitude, longitude, ground height/height above sea level, altitude, and positioning errors can be included. Alternatively, for example, it may be location information registered with an information management apparatus managed by the national regulatory authority (NRA) or its outsourced agency. Alternatively, for example, it may be coordinates of the X-axis, the Y-axis, and the Z-axis with the origin being a specific geographical location. Together with such coordinate information, an identifier indicating outdoor/indoor can be provided.

When the coordinate information is used as the information related to a location, positioning accuracy information (location uncertainty) may be included. For example, both or one of the horizontal plane and the vertical plane can be provided. The positioning accuracy information (location uncertainty) may be used as a correction value in calculation of a distance to any point, for example.

The information related to a location may be information indicating a region in which the communication apparatus 40 is located. For example, information defined by the administration, such as a postal code and an address, may be used. For example, the region may be indicated by a set of three or more geographical coordinates. Information indicating these regions may be provided together with the coordinate information.

The information related to a location may be provided with information indicating a building floor, when the communication apparatus 40 is located indoors. For example, a floor number, an identifier indicating above/below the ground, and the like may be provided. For example, information indicating a further closed indoor space, such as a room number and a room name in a building, may be provided.

Typically, it is desirable that the positioning function be provided in the communication apparatus 40. However, depending on performance of the positioning function and an installation location, it is not necessarily possible to acquire the location information satisfying required accuracy. Thus, the positioning function may be used by an installer. In such a case, it is desirable that the location information measured by the installer be written in the communication apparatus 40.

Typically, the antenna information is information indicating performance, a configuration, and the like of an antenna provided in the communication apparatus 40. Typically, for example, information such as antenna installation height, a tilt angle (downtilt), a horizontal azimuth, boresight, an antenna peak gain, and an antenna model can be included.

The antenna information can also include information related to formable beams. For example, information such as a beam width, a beam pattern, and an analog/digital beamforming capability can be included.

The antenna information can also include information related to performance and a configuration of multiple input multiple output (MIMO) communication. For example, information such as the number of antenna elements and a maximum number of spatial streams can be included. Codebook information to be used, weight matrix information (a unitary matrix obtained by singular value decomposition (SVD), eigen value decomposition (EVD), block diagonalization (BD), or the like, a zero-forcing (ZF) matrix, a minimum mean square error (MMSE) matrix), and the like can also be included. When maximum likelihood detection (MLD) requiring a nonlinear operation, or the like is provided, information indicating the MLD or the like may be included.

The antenna information may include zenith of direction, departure (ZoD). The ZoD is a type of radio wave arrival angle. The ZoD may be estimated by another communication apparatus 40 from radio waves emitted from the antenna of the communication apparatus 40. In this case, the communication apparatus 40 may be a terminal apparatus operating as a base station or an access point, an apparatus performing D2D communication, a moving relay base station, or the like. The ZoD can be estimated using radio wave arrival direction estimation technology, such as multiple signal classification (MUSIC) or estimation of signal propagation via rotation invariance techniques (ESPRIT). It can be used by the communication control apparatus 60 as measurement information.

Typically, the radio interface information is information indicating a radio interface technology provided in the communication apparatus 40. For example, identifier information indicating GSM (registered trademark), CDMA2000, UMTS, E-UTRA, E-UTRA NB-IoT, 5G NR, 5G NR NB-IoT, or technologies to be used in further next-generation cellular systems, derivative technologies conforming to LTE/5G such as MulteFire, LTE-Unlicensed (LTE-U), and NR-Unlicensed (NR-U), a metropolitan area network (MAN) such as WiMAX and WiMAX2+, or standard technologies based on IEEE 802.11, such as a wireless LAN, is included. It may be an identifier indicating XGP or sXGP. It may be an identifier of a communication technology for LPWA. It may be identifier information indicating a proprietary radio technology. A version number or a release number of a technical specification defining these can also be provided.

The radio interface information can also include frequency band information supported by the communication apparatus 40. For example, it can be expressed by one or more combinations of an upper-limit frequency and a lower-limit frequency, one or more combinations of a center frequency and a bandwidth, one or more 3GPP operating band numbers, or the like.

As the frequency band information supported by the communication apparatus 40, information indicating capability of a band expansion technology such as carrier aggregation (CA) and channel bonding can also be further included. For example, combinable band information or the like can be included. In carrier aggregation, information related to a band desired to be used as a primary component carrier (PCC) and a secondary component carrier (SCC) can also be included. Simultaneously, the number of CCs that can be aggregated can also be included.

As the frequency band information supported by the communication apparatus 40, frequency band combination information supported in dual connectivity (DC) and multi connectivity (MC) may be further included. In addition, information of other communication apparatuses 40 cooperatively providing dual connectivity and multi connectivity may also be enclosed and provided. In the following procedures, the communication control apparatus 60 may perform determination of communication control disclosed in the present disclosure by taking into consideration other communication apparatuses 40 having a cooperative relationship or the like.

As the frequency band information supported by the communication apparatus 40, information indicating radio wave use priority, such as PAL and GAA, may be further included.

The radio interface information can also include modulation scheme information supported by the communication apparatus 40. For example, as a typical example, information indicating a primary modulation scheme such as frequency shift keying (FSK), n-value phase shift keying (PSK) (n is a multiplier of 2, such as 2, 4, and 8), and n-value quadrature amplitude modulation (QAM) (n is a multiplier of 4, such as 4, 16, 64, 256, and 1024), and information indicating a secondary modulation scheme such as orthogonal frequency division multiplexing (OFDM), scalable OFDM, DFT spread OFDM (DFT-s-OFDM), generalized frequency division multiplexing (GFDM), and filter bank multi carrier (FBMC) can be included.

The radio interface information can also include information related to an error correction code. For example, capabilities such as a turbo code, a low density parity check (LDPC) code, a polar code, and an erasure correction code and coding rate information to be applied can be included.

As another aspect, the modulation scheme information and the information related to an error correction code can also be expressed using a modulation and coding scheme (MCS) index.

The radio interface information can also include information indicating a function specific to each radio technical specification supported by the communication apparatus 40. For example, typical examples include transmission mode (TM) information defined in LTE. In addition, when there are two or more modes for a specific function, this can be included in the radio interface information as with the TM. In a technical specification, when the communication apparatus 40 supports a function that is not mandatory in the specification even without the presence of two or more modes, information indicating this can also be included.

The radio interface information can also include radio access technology (RAT) information supported by the communication apparatus 40. For example, information indicating orthogonal multiple access (OMA) such as time division multiple access (TDMA), frequency division multiple access (FDMA), and orthogonal frequency division multiple access (OFDMA), non orthogonal multiple access (NOMA) such as power division multiple access (PDMA; a typical example is a scheme realized by a combination of superposition coding (SPC) and successive interference canceller (SIC)), code division multiple access (CDMA), sparse code multiple access (SCMA), interleaver division multiple access (IDMA), and spatial division multiple access (SDMA), opportunistic access such as carrier sense multiple access/collision avoidance (CSMA/CA) and carrier sense multiple access/collision detection (CSMA/CD), or the like can be included.

When the radio interface information includes information indicating opportunistic access, information indicating details of the access may be further included. As a specific example, information indicating either a frame based equipment (FBE) or a load based equipment (LBE) defined in NPL 3 (ETSI EN 301 598) may be included.

When the radio interface information indicates the LBE, information specific to the LBE, such as a priority class, may be further included.

The radio interface information can also include information related to a duplex mode supported by the communication apparatus 40. As a typical example, for example, information related to a scheme, such as frequency division duplex (FDD), time division duplex (TDD), and full duplex (FD), can be included.

When TDD is included as the radio interface information, TDD frame configuration information used/supported by the communication apparatus 40 can be provided. Information related to the duplex mode may be included for each frequency band indicated in the frequency band information.

When FD is included as the radio interface information, information related to an interference power detection level may be included.

The radio interface information can also include information related to a transmit diversity scheme supported by the communication apparatus 40. For example, space time coding (STC) or the like may be included.

The radio interface information can also include guard band information. For example, information related to a guard band size defined in a standard can be included. Alternatively, for example, information related to a guard band size desired by the communication apparatus 40 may be included.

Regardless of the above-described aspect, the radio interface information may be provided for each frequency band.

Typically, the legal information is information related to regulations that the communication apparatus 40 must comply with, which is defined by a telecommunications national regulatory authority of each country or region or an agency equivalent thereto, authentication information acquired by the communication apparatus 40, or the like. Typically, for example, as the information related to regulations, out-of-band emission upper-limit value information, information related to blocking characteristics of a receiver, or the like can be included. Typically, for example, as the authentication information, type approval information (an FCC ID, a technical standard compliance certificate, or the like), regulatory information (for example, an FCC regulation number, an ETSI Harmonized Standard number, or the like) as a standard for acquiring authentication, or the like can be included.

Information related to a numerical value of the legal information may be replaced with information defined in a specification of the radio interface technology. For example, instead of the out-of-band emission upper-limit value information, an out-of-band emission upper-limit value may be derived and used, using the adjacent channel leakage ratio (ACLR). The ACLR itself may be used as necessary. The adjacent channel selectivity (ACS) may be used instead of the blocking characteristics. These may be used in combination, or an adjacent channel interference ratio (ACIR) may be used. Note that, generally, the ACIR has the following relationship with the ACLR and the ACS.

[Expression 1]

$$ACIR = \left( \frac{1}{ACS} + \frac{1}{ACLR} \right)^{-1} \qquad \cdots (1)$$

x Note that, although the expression uses a true value expression, a logarithmic expression may be used.

The installer information can include information allowing for identification of a person (installer) who has installed the communication apparatus 40, unique information associated with the installer, or the like. Typically, information related to an individual responsible for the location information of the communication apparatus 40, which is referred to as a Certified Professional Installer (CPI) defined in NPL 7 (WINNF-TR-1015), can be included. As the information, a Certified Professional Installer Registration ID (CPIR-ID) and a CPI name are disclosed. As the unique information associated with the CPI, for example, a mailing/contact address, an email address, a telephone number, a public key identifier (PKI), and the like are disclosed. These are not restrictive, and other information related to the installer may be included as necessary.

The communication apparatus group information can include information related to a communication apparatus group to which the communication apparatus 40 belongs. For example, information related to a group of a type the same as or equivalent to that disclosed in NPL 4 (WINNF-SSC-0010) can be included. For example, when a communication carrier manages the communication apparatus 40 for each group with its own operation policy, the group information can be included.

The pieces of information listed above may be inferred by the communication control apparatus 60 from other information provided from the communication apparatus 40, without being provided to the communication control apparatus 60 by the communication apparatus 40. For example, the guard band information can be inferred from radio interface specification information. Figs. 6 to 11 are each a diagram illustrating a specification of a transmission bandwidth. Figs. 6 and 7 are each a diagram illustrating a specification of a transmission bandwidth in E-UTRA. Figs. 8, 9, 10, and 11 are each a diagram illustrating a specification of a transmission bandwidth in NR.

In other words, the communication apparatus 40 or the intermediate apparatus (for example, a network manager) acting for a plurality of communication apparatuses 40 need not necessarily provide the pieces of information listed above to the communication control apparatus 60. Provision by the communication apparatus 40 or the intermediate apparatus acting for a plurality of communication apparatuses 40 to the communication control apparatus 60 is merely a means of information provision. The pieces of information listed above refer to pieces of information that may be necessary for the communication control apparatus 60 to normally complete the present procedure, and an information provision means is not limited. For example, NPL 5 (WINNF-TS-0061) allows such a manner (referred to as multi-step registration).

As a matter of course, the pieces of information listed above can be selectively applied according to a regulation and a technical specification.

2.1.1.1 Supplement to Required Parameters

In the registration procedure, depending on an embodiment, it is assumed that device parameters related not only to the communication apparatus 40 but also to the terminal are required to be registered with the communication control apparatus 60. In such a case, the term "communication apparatus" in the description of "Details of Required Parameters" in the above may be replaced with the "terminal" or a term equivalent thereto for application. Parameters specific to the "terminal" not described in "Details of Required Parameters" in the above may also be regarded as required parameters in the registration procedure. Examples include a user equipment (UE) category defined in the 3GPP (registered trademark) and the like.

2.1.2 Details of Registration Processing

The communication apparatus 40 or one or more communication systems including a plurality of communication apparatuses 40 generate a registration request message by using the device parameters, and notify the communication control apparatus 60 thereof.

Here, when the device parameters include the installer information, the registration request may be subjected to falsification prevention processing or the like by using the information. A part or all of the information included in the registration request may be subjected to encryption processing. For example, processing can be performed in which a public key specific to the installer is shared between the installer and the communication control apparatus 60 in advance and the installer encrypts information by using the private key. Examples of a target to be encrypted include sensitive information in terms of crime prevention, such as the location information.

As disclosed in NPL 7 (WINNF-TR-1015), for example, the installer may directly write the location information in the communication control apparatus 60.

After receiving the registration request, the communication control apparatus 60 performs the registration processing of the communication apparatus 40, and returns a registration response depending on processing results. If there is no deficiency or abnormality in information necessary for registration, the communication control apparatus 60 records the information in a storage unit, and performs notification of normal completion. Otherwise, notification of registration failure is performed. When the registration is normally completed, the communication control apparatus 60 may individually assign an ID to the communication apparatus 40, and cause the ID information to be enclosed and notified at the time of the response. In a case of the registration failure, typically, the communication apparatus 40, one or more communication systems including a plurality of communication apparatuses 40, an operator (for example, a mobile network operator or an individual) thereof, or the installer performs correction of the registration request and the like, and attempts the registration procedure until it is normally completed.

Note that the registration procedure may be performed a plurality of times. For example, when the location information is changed beyond a predetermined criterion due to movement, accuracy improvement, or the like, the registration procedure can be performed again. Typically, the predetermined reference is defined by regulation. For example, in NPL 8 (FCC PART 15), a Mode II personal/portable white space device is obliged to access the database again when the location information changes by 100 meters or more.

2.2 Available Frequency Information Query Procedure

(Available Spectrum Query Procedure)

An available frequency information query procedure is a procedure in which the communication apparatus 40 or the communication system representing a plurality of communication apparatuses 40 queries the communication control apparatus 60 about information related to available frequencies. Typically, the procedure is started when the communication apparatus 40 or the communication system representing a plurality of communication apparatuses 40 notifies the communication control apparatus 60 of a query request including information allowing for identification of the communication apparatus(es) 40.

Here, typically, available frequency information is information indicating frequencies allowing for safe secondary use, without the communication apparatus(es) 40 giving fatal interference to the primary communication system.

(1) The available frequency information is determined based on, for example, a secondary use prohibited area referred to as an exclusion zone. Specifically, for example, when the communication apparatus 40 is installed in the secondary use prohibited area provided for the purpose of protection of the primary communication system using a frequency channel F1, the communication apparatus 40 is not notified of the frequency channel F1 as an available channel.

(2) The available frequency information can also be determined by a level of interference given to the primary communication system, for example. For example, when it is determined that fatal interference is given to the primary communication system despite presence outside of the secondary use prohibited area, the frequency channel may not be notified as an available channel. An example of a specific calculation method is described in "Details of Available Frequency Evaluation Processing" described later.

(3) Regarding the available frequency information, a frequency channel not notified as being available can be present depending on a condition other than the primary communication system protection requirements described in (1) and (2) above. For example, in order to avoid interference that can occur between the communication apparatuses 40 in advance, frequency channels being used by other communication apparatuses 40 present near the communication apparatuses 40 may not be notified as available channels. In this manner, the available frequency information configured in consideration of the interference with other communication apparatuses 40 may be configured as "information of frequencies recommended for use", and provided together with the available frequency information, for example. In other words, it is desirable that the "information of frequencies recommended for use" be a subset of the available frequency information.

(4) Although the cases described in (2) and (3) above are applicable, the same frequencies as those of the primary communication system and nearby communication apparatuses 40 can be notified as available channels. In such a case, typically, maximum allowable transmission power information is included in the available frequency information. Typically, the maximum allowable transmission power is expressed by equivalent isotropic radiated power (EIRP). This is not necessarily restrictive, and for example, it may be provided as a combination of conducted power and an antenna gain. Furthermore, an allowable peak gain may be set to the antenna gain for each spatial direction.

2.2.1 Details of Required Parameters

As the information allowing for identification of the communication apparatus, for example, the communication apparatus-specific information registered at the time of the registration procedure, the ID information described in 2.1.2, and the like can be assumed.

The query request can also include query requirement information. The query requirement information can include, for example, information indicating a frequency band, the availability of which is desired to be known. For example, the transmission power information can also be included. The communication apparatus or the communication system representing a plurality of communication apparatuses can include the transmission power information when desiring to know only the frequency information that is likely to allow use of desired transmission power, for example. The query requirement information need not necessarily be included.

The above-described information indicating a frequency band can also include information indicating a form of the available frequency information. In the IEEE 802.11 standards, a channel number is defined for each band. For example, a flag for requesting availability of channels defined in such radio interface technical specifications may be included. As another form, a flag for requesting availability of a unit frequency range, instead of the defined channels, may be included. When the unit frequency is 1 MHz, the available frequency information is requested for each frequency range of 1 MHz. When the flag is used, desired unit frequency information may be enclosed in the flag.

The query request can also include a measurement report. The measurement report includes results of measurement performed by the communication apparatus and/or the terminal. For example, not only raw data but also processed information can be included. For example, standardized metrics as typified by reference signal received power (RSRP), a reference signal strength indicator (RSSI), and reference signal received quality (RSRQ) can be used.

2.2.2 Details of Available Frequency Evaluation Processing

After receiving the query request, evaluation of available frequencies is performed based on the query requirement information. For example, as described in (1) to (3) of "Available Frequency Information Query Procedure" in the above, evaluation of available frequencies can be performed by considering the primary communication system, its secondary use prohibited area, and presence of nearby communication apparatuses.

The communication control apparatus 60 may calculate the secondary use prohibited area. For example, when maximum and minimum transmission power is defined, a separation distance can be calculated as follows.

$$PL^{-1}(P_{MaxTx} - I_{Th}) \leq d < PL^{-1}(P_{MinTx} - I_{Th}) \ \ldots \ (2)$$

Here, $I_{Th}$ is allowable interference power (a limit value of allowable interference power), d is a distance between a predetermined reference point and the communication apparatus 40, and PL() is a function of propagation loss. Accordingly, frequency availability can be determined according to a positional relationship between the primary communication system and the communication apparatus 40. When the transmission power information (or power range information) that the communication apparatus 40 desires to use is supplied by a request, the frequency availability can be determined by calculating $PL_{-1}(P_{MinTx} - I_{Th})$ and comparing it to the range expression.

As described in (4) of "Available Frequency Information Query Procedure" in the above, the maximum allowable transmission power information may be derived. Typically, it is calculated using allowable interference power information in the primary communication system or its protection zone, calculation reference point information for an interference power level received by the primary communication system, registration information of the communication apparatus 40, and a propagation loss estimation model. As an example, it can be calculated using the following expression.

$$P_{MaxTx} = I_{Th} + PL(d) \ \ldots \ (3)$$

Here, $P_{MaxTx}$ is the maximum allowable transmission power (dBm), $I_{Th}$ is the allowable interference power (dBm), d is the distance between the reference point and the communication apparatus 40, and PL(d) is the propagation loss (dB) at the distance d. Although this expression does not explicitly show an antenna gain in a transceiver, it may be included according to a method of expressing the maximum allowable transmission power (EIRP, conducted power, or the like) and a reference point of received power (an antenna input point, an antenna output point, or the like). A safety margin or the like for compensating for a variation due to fading may also be included. Feeder loss and the like may be considered as necessary. By taking the ACRL and the out-of-band emission maximum value into consideration, adjacent channels can also be similarly calculated.

The expression is described based on the assumption that a single communication apparatus 40 is an interference source (single station interference). For example, when aggregated interference from a plurality of communication apparatuses 40 needs to be simultaneously considered, a correction value may be taken into consideration. For example, the correction value can be determined based on three types (fixed/predetermined, flexible, flexible minimized) of interference margin methods disclosed in NPL 6 (WINNF-SSC-0008).

Note that the allowable interference power information itself is not necessarily directly available as in the expression. For example, when a required signal to interference plus noise ratio (SINR) and SIR of the primary communication system are available, those may be converted into the allowable interference power to be used. Such conversion processing may be applied not only to the above processing but also to processing of other procedures.

Note that, although the expression is expressed using a logarithm, it is a matter of course that it may be converted into an antilogarithm to be used in practice. All the parameters in logarithmic notation described in the present document may be appropriately converted into bases to be used.

When the transmission power information described in "Details of Required Parameters" in the above is included in the query requirement information, evaluation of available frequencies can be performed using a method other than the above. For example, when an estimated amount of interference given falls below the allowable interference power in the primary communication system or its protection zone on the assumption that desired transmission power indicated in the transmission power information is used, it is determined that the frequency channel is available and the communication apparatus 40 is notified thereof.

Although an example has been described in which the band use condition is calculated based on the other system-related information, the present disclosure is not limited to such an example. For example, similarly to an area of a radio environment map (REM), when an area/space in which the communication apparatus 40 can use the shared band is defined in advance, the available frequency information may be derived based only on the location-related information and the height-related information. For example, also when a lookup table for associating the location and the height with the available frequency information is prepared, the available frequency information may be derived based only on the location-related information and the height-related information.

When the communication control apparatus 60 recognizes the information indicating the capability of the band expansion technology such as carrier aggregation (CA) and channel bonding as the frequency band information supported by the communication apparatus 40, the available frequency information may further include available combinations, recommended combination information, and the like.

When the communication control apparatus 60 further recognizes the frequency band combination information supported in dual connectivity and multi connectivity as the frequency band information supported by the communication apparatus 40, frequencies available for dual connectivity and multi connectivity and recommended frequency information may be included.

When the available frequency information is provided for the band expansion technology as described above and an imbalance of the maximum allowable transmission power occurs among a plurality of frequency channels, it may be adjusted to be provided. For example, from the viewpoint of primary communication system protection, it may be adjusted to lower maximum allowable power flux density (power spectral density (PSD)).

Evaluation of available frequencies need not necessarily be performed after the query request is received. For example, the communication control apparatus 60 may independently perform it without the query request after normal completion of the registration procedure described above. In such a case, the REM and the lookup table described above or an information table similar to those may be created.

In any of the methods, the radio wave use priority such as PAL and GAA may also be evaluated. For example, when the registered device parameters or the query requirements include information related to the radio wave use priority, whether frequency use can be performed may be determined based on the priority and then notified. For example, as disclosed in NPL 7 (WINNF-TR-1015), when information (referred to as a Cluster List in NPL 9 (WINNF-TS-0112)) related to the communication apparatus 40 performing high-priority use (for example, PAL) is registered with the communication control apparatus 60 from a user in advance, evaluation may be performed based on the information.

In any of the calculations, when the location information of the communication apparatus 40 is used, frequency availability may be determined through correction of the location information or the coverage using the positioning accuracy information (location uncertainty).

After evaluation of available frequencies is completed, the communication control apparatus 60 notifies the communication apparatus 40 of evaluation results.

The communication apparatus 40 may select desired communication parameters by using the evaluation results received from the communication control apparatus 60. When a frequency use permission procedure (spectrum grant procedure) described later is not employed, the communication apparatus 40 may start radio wave transmission, using the selected desired communication parameters as the communication parameters.

2.3 Frequency Use Permission Procedure (Spectrum Grant Procedure)

The frequency use permission procedure is a procedure for the communication apparatus 40 to receive frequency secondary use permission from the communication control apparatus 60. Typically, the procedure is started after the registration procedure is normally completed and when the communication apparatus 40 or one or more communication systems including a plurality of communication apparatuses 40 notify the communication control apparatus 60 of a frequency use permission request including information allowing for identification of the communication apparatus(es) 40. Note that "after the registration procedure is normally completed" also means that the available frequency information query procedure need not necessarily be performed.

Depending on a regulation, the frequency use permission procedure is not necessarily performed. In the TVWS, basically, the frequency use permission is not used. In the CBRS, a mechanism of the frequency use permission is used. Depending on a regulation, they may be appropriately used.

The frequency use permission is useful for calculation of aggregated interference described below. Thus, a method may be employed such that when aggregated interference calculation is necessary, the frequency use permission is employed, or otherwise is unemployed. The determination may be performed at the time of designing a mechanism based on the present specification, or may be dynamically determined by the communication control apparatus 60 in actual operation.

In the present disclosure, it is assumed that the following two types of frequency use permission request methods can be at least used.

Designation method

Flexible method

The designation method is a request method in which the communication apparatus 40 designates at least a frequency channel desired to be used and maximum transmission power as the desired communication parameters, and requests the communication control apparatus 60 to permit operation based on the desired communication parameters. These parameters need not necessarily be restrictive, and parameters specific to the radio interface technology (the modulation scheme, the duplex mode, or the like) may be designated. Information indicating the radio wave use priority such as PAL and GAA may be included.

The flexible method is a request method in which the communication apparatus 40 designates only requirements related to the communication parameters, and requests the communication control apparatus 60 to designate the communication parameters satisfying the requirements and allowing secondary use permission. The requirements related to the communication parameters can include a bandwidth, desired maximum transmission power, or desired minimum transmission power. These parameters need not necessarily be restrictive, and parameters specific to the radio interface technology (the modulation scheme, the duplex mode, or the like) may be designated. For example, one or more pieces of the TDD frame configuration information may be selected in advance and notified.

In any of the methods, a measurement report may be included. The measurement report includes results of measurement performed by the communication apparatus 40 and/or the terminal. For example, not only raw data but also processed information can be included. For example, standardized metrics as typified by reference signal received power (RSRP), a reference signal strength indicator (RSSI), and reference signal received quality (RSRQ) can be used.

Note that information of the method used by the communication apparatus 40 may be registered with the communication control apparatus 60 at the time of the registration procedure described in "Registration Procedure" in the above.

2.3.1 Details of Frequency Use Permission Processing

After receiving the frequency use permission request, the communication control apparatus 60 performs frequency use permission processing, based on the frequency use permission request method. For example, the frequency use permission processing can be performed using the method described in 2.2 by considering the primary communication system, its secondary use prohibited area, and presence of nearby communication apparatuses 40.

When the flexible method is used, the maximum allowable transmission power information may be derived using the method described in 2.2.2. Typically, it is calculated using allowable interference power information in the primary communication system or its protection zone, calculation reference point information for an interference power level received by the primary communication system, registration information of the communication apparatus 40, and a propagation loss estimation model. Specifically, it can be calculated using expression (4) described above. Although expression (4) does not explicitly show an antenna gain in a transceiver, the expression may be transformed and used according to a method of expressing the maximum allowable transmission power (EIRP, conducted power, or the like) and a reference point of received power (an antenna input point, an antenna output point, or the like). A safety margin or the like for compensating for a variation due to fading may also be included. Feeder loss and the like may be considered as necessary.

The expression is described based on the assumption that a single communication apparatus 40 is an interference source. For example, when aggregated interference from a plurality of communication apparatuses 40 needs to be simultaneously considered, a correction value may be taken into consideration. For example, the correction value can be determined based on three types (fixed/predetermined, flexible, flexible minimized) of methods disclosed in NPL 10 (ECC Report 186).

For the propagation loss estimation model, various models can be used. When models are designated for respective purposes, it is desirable that the designated models be used. For example, in NPL 9 (WINNF-TS-0112), propagation loss models, such as extended Hata (eHATA) and an irregular terrain model (ITM), are employed for respective purposes. As a matter of course, in implementing the present disclosure, the propagation loss model need not be limited thereto.

Depending on a model, the propagation loss estimation model requires information related to a radio wave propagation path. This can include, for example, information indicating a line of sight and a non-line of sight (LOS/NLOS), terrain information (undulations, height above sea level, or the like), environment information (urban, suburban, rural, open sky, or the like), and the like. When using the propagation loss estimation model, these pieces of information may be inferred from the registration information of the communication apparatus 40 and information of the primary communication system. Alternatively, if there are parameters designated in advance, it is desirable that the parameters designated in advance be used in that case.

When no models are designated for a predetermined purpose, models may be appropriately used as necessary. As a specific example, for example, appropriate use can be performed in which a model to calculate a small loss, such as a free space loss model, is used in estimating interference power given to another communication apparatus 40, whereas a model to calculate a large loss is used in estimating coverage of the communication apparatus 40.

When the designation method is used, as an example, the frequency use permission processing can be performed through evaluation of a risk of interference given. For example, when an estimated amount of interference given falls below the allowable interference power in the primary communication system or its protection zone on the assumption that desired transmission power indicated in the transmission power information is used, it is determined that use of the frequency channel can be permitted and the communication apparatus 40 is notified thereof.

In any of the methods, the radio wave use priority such as PAL and GAA may also be evaluated. For example, when the registered device parameters or the query requirements include information related to the radio wave use priority, whether frequency use can be performed may be determined based on the priority and then notified. For example, when information (referred to as a Cluster List in NPL 9 (WINNF-TS-0112)) related to the communication apparatus performing high-priority use (for example, PAL) is registered with the communication control apparatus 60 from a user in advance, evaluation may be performed based on the information.

In any of the calculations, when the location information of the communication apparatus is used, frequency availability may be determined through correction of the location information or the coverage using the positioning accuracy information (location uncertainty).

The frequency use permission processing need not necessarily be performed at the time of receiving a request. For example, the communication control apparatus 60 may independently perform it without the frequency use permission request after normal completion of the registration procedure described above. For example, frequency use permission determination processing may be performed at a certain cycle. In such a case, the REM and the lookup table described in "Available Frequency Information Query Procedure" in the above or an information table similar to those may be created. In other words, after receiving the frequency use permission request, the communication control apparatus 60 can promptly return a response.

2.4 Frequency Use Notification (Spectrum Use Notification/Heartbeat)

A frequency use notification is a procedure in which a radio system using a frequency band notifies the communication control apparatus 60 of the frequency use based on communication parameters permitted to be used in the frequency use permission procedure. The communication apparatus 40 representing the radio system and performing the frequency use notification may be the same as or different from the communication apparatus 110 that has performed the procedures thus far. Typically, the communication apparatus 40 notifies the communication control apparatus 60 of a notification message including information allowing for identification of the communication apparatus 40.

It is desirable that the frequency use notification be periodically performed until the communication control apparatus 60 rejects the frequency use. In such a case, the frequency use notification is also referred to as a heartbeat.

After receiving the frequency use notification, the communication control apparatus 60 may determine whether or not the frequency use (i.e., radio wave transmission in a permitted frequency) can be started or continued. As a determination method, for example, frequency use information of the primary system is verified. Specifically, permission or rejection of start or continuation of the frequency use (radio wave transmission in a permitted frequency) can be determined, based on a change in a frequency used by the primary system, a change in a frequency use status of the primary system with non-constant radio wave use (for example, a ship radar of the CBRS of the United States), or the like. When start or continuation is permitted, the communication apparatus 40 may start or continue the frequency use (radio wave transmission in a permitted frequency).

After receiving the frequency use notification, the communication control apparatus 60 may command reconfiguration of the communication parameters to the communication apparatus 40. Typically, in a response of the communication control apparatus 60 to the frequency use notification, the reconfiguration of the communication parameters can be commanded. For example, information related to recommended communication parameters (hereinafter, recommended communication parameter information) can be provided. It is desirable that the communication apparatus 110 provided with the recommended communication parameter information perform the frequency use permission procedure described in 2.4 again by using the recommended communication parameter information.

2.5 Supplement to Various Procedures

Various procedures need not necessarily be individually implemented as will be described below. For example, a third procedure having a role of two different procedures may be used for implementing the two different procedures. For example, the registration request and the available frequency information query request may be integrally notified. For example, the frequency use permission procedure and the frequency use notification may be integrally performed. As a matter of course, a combination of these is not restrictive, and three or more thereof may be used. The procedures may be separately performed.

The expression "to acquire information" or an expression equivalent thereto in the present document does not necessarily mean acquisition according to the procedures. For example, it means that, although there is a description that the location information of the communication apparatus is used in the available frequency evaluation processing, information acquired in the registration procedure need not necessarily be used, and the location information may be used when the location information is included in the available frequency query procedure request. In other words, it means that described parameters may be included in another procedure within the scope of description of the present document and within the scope of technical realizability.

The information that can be included in the response from the communication control apparatus 60 to the communication apparatus 40 described in the procedure may be provided in a push notification. As a specific example, the available frequency information, the recommended communication parameter information, a radio wave transmission continuation reject notification, and the like may be provided as a push notification.

2.6 Various Procedures Related to Terminal

The above mainly gives description assuming the communication apparatus (Type A). However, depending on an embodiment, a scenario is assumed in which the communication parameters of not only the communication apparatus (Type A) but also the terminal or the communication apparatus (Type B) including the terminal are determined under management of the communication control apparatus 60, i.e., by the communication control apparatus 60. Even in such a case, basically, the procedures described from "Registration Procedure" to "Frequency Use Notification" in the above can be used. Note that, unlike the communication apparatus (Type A), the terminal and the communication apparatus (Type B) need to use a frequency managed by the communication control apparatus 60 for the backhaul link and cannot perform radio wave transmission on its own. Thus, it is desirable that backhaul communication for the purpose of accessing the communication control apparatus 60 be not started until a radio wave and an authorization signal transmitted by a serving communication apparatus or a master communication apparatus are detected.

On the other hand, the terminal and the communication apparatus (Type B) being under management of the communication control apparatus 60 means that the terminal and the communication apparatus (Type B) can also be configured with allowable communication parameters for the purpose of primary communication system protection. However, the communication control apparatus 60 cannot know the location information and the like of these apparatuses in advance. It is likely that these apparatuses have mobility. In other words, the location information is dynamically updated. Some regulations may oblige re-registration with the communication control apparatus 60 when the location information changes by a certain amount or more.

In consideration of such various forms of use and operation of the terminal and the communication apparatus, the form of operation of the TVWS defined in the Office of Communication (Ofcom) of the United Kingdom defines the following two types of communication parameters.

Generic operational parameters
Specific operational parameters

The generic operational parameters are communication parameters defined in the non patent literature as "parameters available to any slave WSD located within a coverage area of a predetermined master WSD (corresponding to the communication apparatus)". One of the features is that they are calculated by the WSDB without use of the location information of the slave WSD.

The generic operational parameters can be provided, by unicasting/broadcasting, from the communication apparatus 40 already permitted to perform radio wave transmission by the communication control apparatus 60. For example, a broadcast signal as typified by a contact verification signal (CVS) defined in FCC Regulation Part 15 Subpart H can be used. Alternatively, they may be provided by a broadcast signal specific to the radio interface. This allows the terminal and the communication apparatus (Type B) to handle them as the communication parameters used for radio wave transmission for the purpose of accessing the communication control apparatus 60.

The specific operational parameters are communication parameters defined in the non patent literature as "parameters available to a specific slave white space device (WSD)". In other words, they are communication parameters calculated using the device parameters of the slave WSD corresponding to the terminal. One of the features is that they are calculated by the White Space Database (WSDB) with use of the location information of the slave WSD.

A "CPE-CBSD Handshake Procedure" defined in NPL 11 (FCC PART 96) can be regarded as another form of procedure related to the terminal. A CPE-CBSD does not include a wired backhaul line and accesses the Internet via a BTS-CBSD. Thus, permission for radio wave transmission in a CBRS band cannot be acquired from the SAS without a special definition or procedure. The "CPE-CBSD Handshake Procedure" permits the CPE-CBSD to perform radio wave transmission with the same maximum EIRP as that of the terminal (EUD) and a minimum necessary duty cycle until permission for radio wave transmission is acquired from the SAS. In accordance therewith, a communication apparatus 40B sets transmission EIRP to the maximum EIRP of the terminal and then performs radio communication with a communication apparatus 40A at the minimum necessary duty cycle, and can thereby establish a line for acquiring permission for radio wave transmission from the communication control apparatus 60. After acquiring permission for radio wave transmission, up to the maximum EIRP defined by the communication apparatus can be used within the permitted range.

2.7 Procedures Occurring between Communication Control Apparatuses

2.7.1 Information Exchange

The communication control apparatus 60 can exchange management information with another communication control apparatus 60. It is desirable that the following pieces of information be at least exchanged.

Information related to the communication apparatus
Area information
Protection target system information

The information related to the communication apparatus at least includes the registration information and the communication parameter information of the communication apparatus operating under permission of the communication control apparatus 60. The registration information of the communication apparatus not having the permitted communication parameters may be included.

Typically, communication apparatus registration information is the device parameters of the communication apparatus 40 registered with the communication control apparatus 60 in the registration procedure. All the registered information need not necessarily be exchanged. For example, information that may correspond to personal information need not be exchanged. In exchanging the communication apparatus registration information, encrypted and obscured information may be exchanged. For example, information converted into a binary value and information signed using an electronic signature mechanism may be exchanged.

Typically, communication apparatus communication parameter information is information related to the communication parameters currently used by the communication apparatus 40. It is desirable that information indicating the use frequency and the transmission power be at least included. Other communication parameters may be included.

Typically, the area information is information indicating a predetermined geographical region. The information can include region information having various attributes in various aspects.

For example, protection zone information of the communication apparatus 40 being a high-priority secondary system may be included as in a PAL protection area (PPA) disclosed in NPL 9 (WINNF-TS-0112). The area information in this case can be expressed by a set of three or more geographical location coordinates, for example. For example, when a plurality of communication control apparatuses 60 can refer to a common external database, it can be expressed by an ID indicating the information.

For example, information indicating coverage of the communication apparatus 40 may be included. The area information in this case can also be expressed by a set of three or more geographical location coordinates, for example. For example, a circle having the geographical location of the communication apparatus 40 as the origin may be assumed, and it can also be expressed by information indicating a radius size. For example, when a plurality of communication control apparatuses 60 can refer to a common external database recording the area information, it can be expressed by an ID indicating the information.

As another aspect, information related to an area section defined in advance by the administration or the like can also be included. For example, a certain region can be indicated by indicating an address. For example, a license area and the like can also be similarly expressed.

As yet another aspect, the area information need not necessarily express a planar area, and may express a three-dimensional space. For example, it may be expressed using a spatial coordinate system. For example, information indicating a predetermined closed space may be used, such as a floor number, a floor, and a room number of a building.

The protection target system information is information of the radio system regarded as an incumbent, for example. Examples of a case in which the information needs to be exchanged include, for example, cross-border coordination. It is entirely possible that different incumbents are present in the same band between adjacent countries or regions. It is not always possible that the incumbents operating the same radio system can acquire incumbent information of adjacent countries or regions. In such a case, the protection target system information can be exchanged between the communication control apparatuses 60 from different countries or regions as necessary.

As another aspect, the protection target system information can include information of a secondary licensee and the radio system operated under the secondary license. The secondary licensee is specifically a lessee of the license, and for example, it is assumed that it leases a PAL from a holder and operates its own radio system. When the communication control apparatus 60 independently performs lease management, the communication control apparatus 60 can exchange the information of the secondary licensee and the radio system operated under the secondary license with another communication control apparatus 60 for the purpose of protection.

These pieces of information can be exchanged between the communication control apparatuses 60, regardless of the decision-making topology applied to the communication control apparatuses 60.

These pieces of information can be exchanged using various methods. Examples thereof are described below.

ID designation method
Period designation method
Region designation method
Dump method

The ID designation method is a method in which an ID provided in advance for identifying information managed by the communication control apparatus 60 is used to acquire information corresponding to the ID. For example, it is assumed that a communication control apparatus 1A manages the communication apparatus 40 having ID: AAA. In this case, a communication control apparatus 1B designates ID: AAA to the communication control apparatus 1A and performs an information acquisition request. After receiving the request, the communication control apparatus 1A performs information search for ID: AAA, and performs notification of the registration information and the communication parameter information of the corresponding communication apparatus 40 in a response.

In the period designation method, a specific period is designated, and information satisfying a predetermined condition in the period can be exchanged.

Examples of the predetermined condition include, for example, whether or not information is updated. For example, when acquisition of communication apparatus information in a specific period is designated by a request, the registration information and the communication parameter information of the communication apparatus 40 having a change in the registration information or the communication parameters of the communication apparatus 40 newly registered in the period can be notified in a response.

Examples of the predetermined condition include whether the communication control apparatus 60 has a record. For example, when acquisition of communication apparatus information in a specific period is designated by a request, the registration information and the communication parameter information of the communication apparatus 40 recorded in the communication control apparatus 60 in the period can be notified in a response. Furthermore, the latest information in the period can be notified. Alternatively, an update history may be notified for each piece of information.

In the region designation method, a specific region is designated, and information belonging to the region is exchanged. For example, when acquisition of communication apparatus information in a specific region is designated by a request, the registration information and the communication parameter information of the communication apparatus 40 installed in the region can be notified in a response.

The dump method is a method in which all the information recorded in the communication control apparatus 60 is provided. It is desirable that the information related to the communication apparatus 40 and the area information be at least provided with the dump method.

The above description of information exchange between the communication control apparatuses 60 is all based on a pull method. In other words, it is a form in which information corresponding to a parameter designated by a request is given in a response, and can be realized by an HTTP GET method as an example. However, the pull method need not be restrictive, and information may be actively provided to other communication control apparatuses 60 using a push method. As an example, the push method can be realized by an HTTP POST method.

2.7.2 Command and Request Procedure

The communication control apparatuses 60 may perform a command and a request to each other. Specifically, one example is reconfiguration of the communication parameters of the communication apparatus 40. For example, when it is determined that a communication apparatus managed by the communication control apparatus 1A receives a significant amount of interference from a communication apparatus 1C managed by the communication control apparatus 1B, the communication control apparatus 1A may request the communication control apparatus 1B to change the communication parameters of the communication apparatus 1C.

Another example is reconfiguration of the area information. For example, when there is a deficiency observed in calculation of coverage information and protection zone information related to the communication apparatus 1C managed by the communication control apparatus 1B, the communication control apparatus 1A may request the communication control apparatus 1B to reconfigure the area information. In addition, a request to reconfigure the area information may be performed for various reasons.

2.8 Information Transmission Means

Signaling between entities described above can be realized via various media. The description takes an example of E-UTRA or 5G NR. As a matter of course, these are not restrictive in practice.

2.8.1 Signaling between Communication Control

Apparatus and Communication Apparatus

Notification from the communication apparatus 40 to the communication control apparatus 60 may be performed, for example, in an application layer. For example, it may be performed using the Hyper Text Transfer Protocol (HTTP). Signaling can be performed by describing required parameters in an HTTP message body according to a predetermined format. Furthermore, when HTTP is used, notification from the communication control apparatus 60 to the communication apparatus 40 is also performed according to a mechanism of an HTTP response.

2.8.2 Signaling between Communication Apparatus and Terminal

Notification from the communication apparatus 40 to the terminal apparatus may be performed using at least a part of radio resource control (RRC) signaling, system information (SI), and downlink control information (DCI), for example. It may be performed using at least a part of downlink physical channels (a physical downlink control channel (PDCCH), a physical downlink shared channel (PDSCH), a physical broadcast channel (PBCH), an NR-PDCCH, an NR-PDSCH, and an NR-PBCH).

Notification from the terminal apparatus to the communication apparatus 40 may be performed using a part of RRC signaling or uplink control information (UCI), for example. It may be performed using an uplink physical channel (a physical uplink control channel (PUCCH), a physical uplink shared channel (PUSCH), or a physical random access channel (PRACH)).

The physical layer signaling described above is not restrictive, and signaling may be performed in a higher layer. For example, in practice in the application layer, signaling may be performed by describing required parameters in an HTTP message body according to a predetermined format.

2.8.3 Signaling between Terminals

Fig. 11 illustrates an example of a signaling procedure when inter-terminal communication, device-to-device (D2D), and vehicle-to-everything (V2X) are assumed as communication of the secondary system. Fig. 12 is a diagram illustrating an example of a signaling procedure according to the communication system of the present disclosure. Inter-terminal communication, D2D, and V2X may be performed using a physical sidelink channel (a physical sidelink control channel (PSCCH), a physical sidelink shared channel (PSSCH), or a physical sidelink broadcast channel (PSBCH)).

When a target frequency channel of frequency sharing is used in the sidelink, the communication parameters may be notified, acquired, and configured in association with a resource pool for the sidelink in the target frequency channel. The resource pool is radio resources for the sidelink configured by specific frequency resources (for example, a resource block, a component carrier, or the like) and time resources (for example, a radio frame, a subframe, a slot, a mini-slot, or the like). When the resource pool is configured in the frequency channel targeted for frequency sharing, it is configured from the communication apparatus 40 to the terminal apparatus by at least one of RRC signaling, system information, and downlink control information. The communication parameters to be applied to the resource pool and the sidelink are also configured from the communication apparatus 40 to the terminal apparatus by at least one of RRC signaling, system information, and downlink control information. The notification of configuration of the resource pool and the notification of the communication parameters to be used in the sidelink may be performed simultaneously or individually.

3. Configuration of Proposed System

3.1 Existing Embodiment

3.1.1 Creation of Communication Parameter Change Target Information in Existing DSA

In this section, processing related to the present disclosure in the DSA will be described. Terms will be described therefor. Communication parameter change target information is information of the communication apparatus 40 to which information of the communication parameters to be followed by each communication apparatus 40 when the primary communication system uses a radio wave and information related to whether or not radio wave transmission can be performed are applied. A Move List in the CBRS is an example of the communication parameter change target information.

The communication control apparatus 60 performs aggregated interference calculation or the like for the sake of primary communication system protection by using information of all the communication apparatuses 40 present near the primary communication system. Subsequently, after verifying that a protection condition for each primary communication system is satisfied, transmission permission is performed for the communication apparatuses 40 managed by each communication control apparatus 60.

When the protection condition is not satisfied, the communication control apparatus 60 creates the communication parameter change target information (the Move List in the CBRS is included in the communication parameter change target information for each primary communication system). Then, when the primary communication system actually starts to use a radio wave, the communication control apparatus 60 performs a transmission power reduction request or a radio wave transmission stop request to the communication apparatuses 40.

The information of the communication parameters to be followed by each communication apparatus 40 when the primary communication system uses a radio wave is, for example, whether or not radio wave transmission can be performed, an antenna azimuth angle, antenna altitude, latitude, longitude, maximum transmission power of a transmit antenna, an available frequency channel range, start time of use, and end time of use.

Note that, when there are a plurality of primary communication systems using a radio wave, because all the primary communication systems need to be protected, all the communication apparatuses 40 giving harmful interference to any of the primary communication systems using a radio wave are targeted for radio wave transmission stop and power reduction. As a matter of course, the primary communication systems constantly using a radio wave need to be always protected from harmful interference from the communication apparatuses 40. Thus, the communication apparatuses 40 giving harmful interference are always controlled.

Fig. 13 is a diagram illustrating a procedure of creating a list for requesting radio wave transmission stop of the communication parameter change target information. First, the communication control apparatus 60 lists up the communication apparatuses 40 that are located within a certain distance from a predefined area or point P and request transmission permission in the channel or the like, and creates a list Lp (Step S101). Next, the communication control apparatus 60 calculates an aggregated interference amount being the sum of interference power of the communication apparatuses 40 in the list Lp (Step S102). Next, the communication control apparatus 60 determines whether the aggregated interference amount is less than an allowable value (Step S103). When the aggregated interference amount is less than the allowable value (Yes in Step S103), the communication control apparatus 60 ends the processing.

On the other hand, when the aggregated interference amount is not less than the allowable value (No in Step S103), the communication control apparatus 60 rearranges the communication apparatuses 40 in the list Lp in order of the interference amount (Step S104). Next, the communication control apparatus 60 selects the communication apparatus 40 having the largest interference amount from the list Lp (Step S105). Next, the communication control apparatus 60 deletes the selected communication apparatus 40 from the list Lp (Step S106). Next, the communication control apparatus 60 adds the selected communication apparatus 40 to a list for requesting radio wave transmission stop (Step S107). Subsequently, the communication control apparatus 60 returns to the processing of Step S103, and repeats the processing of Steps S103 to S107 until the aggregated interference amount becomes less than the allowable value.

The order of the steps need not be as described above. For example, S107 may be performed before S106. Some steps may be omitted.

3.1.2 Processing in Detecting Radio Wave Use of Primary Communication System

Terms to be used in the following description of the present document are defined. The communication parameters to be followed by each communication apparatus 40 using a radio wave when the primary communication system uses the radio wave are referred to as secondary communication parameters. The secondary communication parameters include, for example, whether or not radio wave transmission can be performed, an antenna azimuth angle, an antenna altitude, a latitude, a longitude, a maximum transmission power, a frequency channel, and a time of use. The communication control apparatus 60 notified of information (a radio wave use status or the like) related to primary communication refers to the communication parameter change target information, and updates the secondary communication parameters. Note that the communication control apparatus 60 may not update the secondary communication parameters when being notified of the information related to primary communication.

Information related to radio wave use of the primary communication system in a predefined location, point, or the like is referred to as the radio wave use status. Note that the radio wave detection information of the CBRS corresponds to the radio wave use status.

Information transmitted to the communication control apparatus by the determination apparatus 70 after determining the radio wave use status is referred to as the information related to primary communication. Note that the information related to primary communication may be information of primary communication, may be information associated with primary communication, may be information relating to primary communication, or may be information based on the information of primary communication.

An entity that notifies the communication control apparatus 60 of the information related to primary communication is referred to as the determination apparatus (determination apparatus 70). Note that the ESC and the Informing Incumbent Portal in the CBRS are examples of the determination apparatus 70.

Fig. 14 is a diagram illustrating an example of an existing communication control procedure. The communication apparatus 40 transmits the frequency use notification to the communication control apparatus 60 (Step S121). The communication control apparatus 60 transmits the secondary communication parameters to the communication apparatus 40 (Step S122). The communication apparatus 40 updates its own secondary communication parameters, based on the transmitted secondary communication parameters (Step S123).

Subsequently, the determination apparatus 70 determines the radio wave use status (Step S124), and generates the information related to primary communication (Step S125). The determination apparatus 70 transmits the generated information related to primary communication to the communication control apparatus 60 (Step S126).

The communication control apparatus 60 generates the secondary communication parameters, based on the information related to primary communication and the communication parameter change target information (Step S127). Next, when the frequency use notification is transmitted from the communication apparatus 40 (Step S128), the communication control apparatus 60 transmits the generated secondary communication parameters to the communication apparatus 40 (Step S129). The communication apparatus 40 updates its own secondary communication parameters, based on the transmitted secondary communication parameters (Step S130).

Through an interpretation as the CBRS, the following processing corresponds to the above-described processing. The SAS refers to the information related to primary communication and the Move List transmitted from the ESC, and updates information of radio wave transmission continuation or stop of each communication apparatus 40. Subsequently, the SAS performs notification of the information of radio wave transmission continuation/stop in response to the frequency use notification from the communication apparatus 40.

In the above-described procedure, the information related to primary communication such as the radio wave use status related to the primary communication system is stored as plaintext inside the communication control apparatus 60. Thus, for example, when an attacker gains unauthorized access to the information inside the communication control apparatus 60, there is a risk of leakage of the radio wave use status of the primary communication system, which is confidential information. Thus, the communication control apparatus 60 storing the information related to primary communication indicating the radio wave use status needs to adopt strong security measures, which presents a problem in terms of an increase in costs and convenience.

Note that the communication parameter change target information may not be changed even when the information related to primary communication is updated. For example, regarding a certain primary communication system, the communication apparatus 40 not present near the primary communication system does not give harmful interference thereto even when the primary communication system starts to use a radio wave, and thus the communication parameter change target information is not changed.

3.2 Secure Computation Technologies

Secure computation technologies to be applied to the present disclosure will be described. The secure computation technology is a technology enabling numerical processing such as numerical operations without decrypting encrypted data. The secure computation technologies correspond to methods or the like using public key cryptography referred to as multi-party computation based on secret sharing, multi-party computation using a garbled circuit, and homomorphic encryption, for example. The following will describe the secure computation technologies listed above.

The multi-party computation based on secret sharing is a technology for performing numerical processing in which, for example, secret information P is split into a plurality of fragmentary pieces of information $P_1$, ..., $P_n$ (each $P_i$ is referred to as a share) using cryptography referred to as secret sharing, and a function $f(P)$ having an argument of P is output by using the shares $P_1$, ..., $P_n$ without decrypting the secret information P.

Fig. 15 is a diagram illustrating an image of secret sharing processing. X holding the secret information P splits P into two shares $P_1$ and $P_2$ by using a random number. The secret sharing processing is encryption processing in which original information is split into a plurality of pieces of information as described above, and when the number of pieces of information is less than a certain number, the pieces of information are meaningless. Particularly, secret sharing in which the secret information is split into n shares and the secret information cannot be decrypted using less than k shares thereof is generally referred to as a (k, n)-threshold secret sharing scheme. In multi-party computation based on secret sharing, as illustrated in Fig. 15, X respectively transmits $P_1$ and $P_2$ to A and B, and both of A and B obtain an output $f(P)$ of the function f without identifying the secret information P.

Secret sharing schemes include additive secret sharing (or linear secret sharing), Shamir's secret sharing, and the like. Note that the secret sharing of Fig. 15 is an example of additive secret sharing. The secret sharing is a (2, 2)-threshold secret sharing scheme.

The multi-party computation using a garbled circuit is secure computation performed between two parties. Specifically, it is assumed that, when there are two parties A and B, they respectively hold pieces of information x and y. It is a scheme in which an output F(x, y) is obtained using a certain function, with x and y being kept secret from each other, i.e., B not knowing the information x and A not knowing the information y. The multi-party computation using a garbled circuit uses a computation circuit, which is referred to as the garbled circuit, in which input and output wires of the computation circuit (binary circuit) using a logic circuit are encrypted.

Secure computation using homomorphic encryption is secure computation using homomorphic encryption as a type of public key cryptography. The homomorphic encryption is public key cryptography in which information obtained by decrypting an operation in ciphertext matches an operation in plaintext. Specifically, encryption in an encryption map f being fully homomorphic encryption means that the following holds with respect to any plaintexts m and n.

$f(m + n) = f(m)._1 f(n)$ and $f(mn) = f(m)._2 f(n)$ Note that $._1$ and $._2$ are operations defined for the set of the entire ciphertext, $._1$ corresponds to addition in the set of plaintext, and $._2$ is an operation corresponding to information in the set of plaintext. In other words, it is public key cryptography in which addition and multiplication in the plaintext can be implemented through an operation in the ciphertext. Encryption in which only $f(m + n) = f(m)._1 f(n)$ holds with respect to any m and n is referred to as additive homomorphic encryption, and encryption in which $f(mn) = f(m)._2 f(n)$ holds with respect to any m and n is referred to as multiplicative homomorphic encryption. In other words, the additive homomorphic encryption (or the multiplicative homomorphic encryption) is public key cryptography in which addition (or multiplication) in the plaintext can be implemented through an operation in the ciphertext. In addition, there are also a homomorphic encryption scheme with a limited number of multiplications and the like, and encryption in which at least one of addition and multiplication can be calculated with ciphertext is collectively referred to as homomorphic encryption.

## 3.3 Overview of Present Disclosure

In related art, as described in 3.1, the information related to primary communication, which is confidential information, is transitorily stored in a storage medium such as a memory and a storage of the communication control apparatus 60, and thus, for example, when an attacker gains unauthorized access to the information in the communication control apparatus 60, there is a risk of leakage of the radio wave use status related to the primary communication system, which is confidential information, and the like.

(Effect 1) In the present disclosure, the determination apparatus 70 provides the information (radio wave use status) related to primary communication in an encrypted state, and the communication control apparatus 60 calculates the secondary communication parameters without decrypting the information related to primary communication by using the secure computation technology. Accordingly, even when the information related to primary communication stored in the communication control apparatus 60 leaks to the outside due to an attack on the communication control apparatus 60, the actual radio wave use status is not known to the attacker because the radio wave use status is encrypted. This can lessen the security measures adopted in the existing communication control apparatus, and reduce necessary costs and the labor of management. As an advantage of the communication apparatus 40 in using the present disclosure, when sharing in a new band is enabled, bands that can be secondarily used can be increased through support of the secure computation method.

The secondary communication parameters calculated by the communication control apparatus 60 need to be notified from the communication control apparatus 60 to the communication apparatus 40. In this case, a method can also be employed in which the communication control apparatus 60 decrypts the secondary communication parameters of each communication apparatus 40, and notifies the communication apparatus 40 of the decrypted secondary communication parameters. In this case, however, the secondary communication parameters are stored as plaintext in the communication control apparatus 60. When the secondary communication parameters leak to the outside due to an attack on the communication control apparatus 60, the attacker may be able to estimate the information related to primary communication of the primary communication system. Even if the information related to primary communication of the primary communication system is encrypted, the information related to primary communication can be estimated by combining the secondary communication parameters with other information, such as the location, of the communication apparatus 40.

(Effect 2) In view of this, in the present disclosure, the secondary communication parameters are transmitted to the communication apparatus 40 in an encrypted state without being decrypted in the communication control apparatus 60. Next, the communication apparatus 40 decrypts the secondary communication parameters by itself. Employing this method makes it difficult to estimate the information related to primary communication even if unauthorized access to the secondary communication parameters of all the communication apparatuses 40 occurs, because the secondary communication parameters in the communication control apparatus 60 are encrypted.

When only Effect 1 is targeted, the secondary communication parameters are stored inside the communication control apparatus 60 in a decrypted state. On the other hand, when Effect 2 is also targeted, the secondary communication parameters are stored in the communication control apparatus 60 in an encrypted state. Thus, when Effect 2 is also targeted, the secondary communication parameters in the communication control apparatus 60 are interpreted as "encrypted secondary communication parameters".

The present disclosure is implemented by a pre-computation step (first step) including creation of the communication parameter change target information by the communication control apparatus 60 and the like, and a change step (second step) for the secondary communication parameters to be performed after radio wave use is detected. The role of each apparatus in the two steps are as follows.

In the first step, the communication control apparatus 60 performs creation of the communication parameter change target information and encryption of the communication parameter change target information.

In the second step, the determination apparatus 70 performs determination of the radio wave use status, generation of the information related to primary communication based on the radio wave use status, encryption of the information related to primary communication, and transmission of the encrypted information related to primary communication to the communication control apparatus 60. The communication control apparatus 60 generates the secondary communication parameters through secure computation, using the encrypted information related to primary communication and the encrypted communication parameter change target information transmitted from the determination apparatus. The communication control apparatus 60 transmits the generated secondary communication parameters, which remain being encrypted, to the communication apparatus 40. The communication apparatus 40 decrypts the encrypted secondary communication parameters from the communication control apparatus 60, and applies the secondary communication parameters.

Note that, in the communication system according to the following embodiments, the communication control apparatus 60 may perform secure computation using one or more of the secure computation using encryption having homomorphism, the multi-party computation based on secret sharing, and the multi-party computation using a garbled circuit.

3.4 First Embodiment

Fig. 16 is a diagram illustrating a configuration example of the determination apparatus according to a first embodiment of the present disclosure. The figure is a block diagram illustrating a configuration example of the determination apparatus 70. The determination apparatus 70 determines radio wave use of the primary communication system, encrypts the information related to primary communication, and notifies the communication control apparatus 60 thereof. The determination apparatus 70 includes a controller 720 and a communication unit 710.

The controller 720 controls the entire determination apparatus 70. In the controller 720, a determination unit 721 and an encryption unit 722 are located.

The determination unit 721 determines radio wave use of the primary communication system. Determination of the radio wave use can be performed by using sensing by a sensor, a radio wave use schedule table variables of which are a "predefined location", and a "date and time", or the like, for example. The determination unit 721 determines whether or not the primary communication system uses, or will use in the future, a radio wave regarding a location such as an area and a point, and the like. The determination unit 721 generates the information related to primary communication being the radio wave use status of the primary communication system, based on determination results.

The encryption unit 722 performs encryption processing on the information related to primary communication from the determination unit 721. Encryption in the encryption unit 722 needs to accord with a method corresponding to the secure computation in the communication control apparatus 60. Specifically, if the communication control apparatus 60 performs multi-party computation based on secret sharing, the encryption unit 722 selects encryption using secret sharing. If the communication control apparatus 60 performs secure computation using homomorphic encryption, the encryption unit 722 selects encryption using homomorphic encryption.

The communication unit 710 transmits the encrypted information related to primary communication to the communication control apparatus 60.

Fig. 17 is a diagram illustrating a configuration example of the communication control apparatus according to the first embodiment of the present disclosure. The figure is a block diagram illustrating a configuration example of the communication control apparatus 60. The communication control apparatus 60 includes a communication unit 610, a controller 620, and a recording unit 630.

The communication unit 610 communicates with the determination apparatus 70 and the communication apparatus 40. The communication unit 610 receives the encrypted information related to primary communication from the determination apparatus 70. Note that the communication unit 610 is an example of a "transmission unit" and a "reception unit" of the present disclosure.

The controller 620 controls the entire communication control apparatus 60. In the controller 620, a computation unit 621, an encryption unit 622, and an acquisition unit 623 are located.

The computation unit 621 generates the communication parameter change target information by using information of the communication apparatus 40 stored in the recording unit 630. The computation unit 621 performs secure computation based on the encrypted information related to primary communication received by the communication unit 610 and the encrypted communication parameter change target information stored in the recording unit 630, and calculates the encrypted secondary communication parameters.

The encryption unit 622 encrypts the communication parameter change target information generated by the computation unit 621, and stores it in the recording unit 630.

The acquisition unit 623 acquires the encrypted communication parameter change target information from the recording unit 630, and supplies it to the computation unit 621. The acquisition unit 623 acquires the encrypted secondary communication parameters stored in the recording unit 630, and causes the communication unit 610 to transmit them to the communication apparatus 40.

The recording unit 630 stores the information of the communication apparatus 40. The recording unit 630 holds the communication parameter change target information encrypted by the encryption unit 622. The recording unit 630 holds the secondary communication parameters calculated by the computation unit 621.

Fig. 18 is a diagram illustrating a configuration example of the communication apparatus according to the first embodiment of the present disclosure. The figure is a block diagram illustrating a configuration example of the communication apparatus 40. The communication apparatus 40 includes a communication unit 410 and a controller 420.

The communication unit 410 communicates with the communication control apparatus 60. The communication unit 410 receives the secondary communication parameters from the communication control apparatus 60. Note that the communication unit 410 is an example of the "reception unit" of the present disclosure.

The controller 420 controls the entire communication apparatus 40. The controller 420 performs radio communication with the terminal apparatus, based on the above-described secondary communication parameters. The controller 420 includes a decryption unit 421.

The decryption unit 421 decrypts the encrypted secondary communication parameters from the communication control apparatus 60. Note that the decryption unit 421 may be omitted when the secondary communication parameters decrypted in the communication control apparatus 60 are received.

Fig. 19 is a diagram illustrating an example of a use schedule of the primary communication system according to the first embodiment of the present disclosure. In the figure, the primary communication system information is $P_1$ to $P_N$, and time information is $t_0$ to $t_M$. The primary communication system information is information allowing for distinction between the primary communication systems, and is information determined by location information of each primary communication system (a point, a two-dimensional or three-dimensional region, or the like in which the primary communication system is present), a type of each primary communication system, an identifier of each primary communication system, channel information, and the like, or a combination thereof. The primary communication system information is desirably defined in advance, but may be changed as needed (i.e., The location information may be a fixed area such as the DPA, or may be one point such as a certain point P. Each piece of primary communication system information $P_i$ can also be changed according to a day or time as a function $P_i(t)$ having time $t$ as a variable. When the location is fixed, $P_i(t)$ can be regarded as a constant function). Column vectors $(1, 1, ..., 0)^t$ at time $t_0$ are information indicating that a radio wave is used at $P_1$ and $P_2$ and indicating that a radio wave is not used for $P_N$. Whether or not a radio wave is used, which is indicated by information of 1 and 0, is merely an example, and such definition may be made that 1 indicates that a radio wave is not used and 0 indicates that a radio wave is used.

Note that, while a case in which the secondary communication parameters are secret information has been described in the above, a case in which the secondary communication parameters are not regarded as secret information will also be described. In this case, the processing of the encryption unit 622 of the communication control apparatus 60 is unnecessary, and thus a configuration without the encryption unit 622 in Fig. 17 is a minimum configuration of the communication control apparatus.

When the communication parameter change target information of each communication apparatus 40 is decrypted in the communication control apparatus 60, a configuration example obtained by locating a decryption unit inside the controller 620 of the communication control apparatus 60 in Fig. 17 and a configuration example obtained by omitting the decryption unit from the inside of the communication apparatus 40 in Fig. 18 are each a minimum configuration.

Fig. 20 is a diagram illustrating an example of a processing procedure of communication control processing according to the first embodiment of the present disclosure. The figure is a flowchart illustrating an example of a processing procedure of processing in the communication control apparatus 60.

Processing up to the creation of the communication parameter change target information is the same as that of the existing method of 3.1.1. In this section, processing after the creation of the communication parameter change target information will be described. Note that, it is desirable that the present processing be performed continuously with the creation of the communication parameter change target information of 3.1.1, while not necessarily limited thereto.

In the conventional method, the computation unit 621 stores the created communication parameter change target information in the recording unit 630. In contrast, in the present disclosure, because the secondary communication parameters are calculated using secure computation, the communication parameter change target information is encrypted and then stored in the recording unit 630. In application of multi-party computation based on secret sharing, the encryption unit 622 performs encryption based on secret sharing, and in a case of secure computation using homomorphic encryption, the encryption unit 622 performs encryption using homomorphic encryption.

In Fig. 20, first, the controller 620 acquires information of the communication apparatus 40 (Step S150). Next, the computation unit 621 generates the communication parameter change target information, based on the information of the communication apparatus 40 (Step S151). Next, the encryption unit 622 encrypts the communication parameter change target information (Step S152), and stores the encrypted communication parameter change target information in the recording unit 630 (Step S153).

Fig. 21 is a diagram illustrating an example of a communication control procedure according to the first embodiment of the present disclosure. The figure is a sequence diagram illustrating an example of a processing procedure between the determination apparatus 70 and the communication control apparatus 60.

First, the determination apparatus 70 performs determination of the radio wave use status (Step S171). Next, the determination apparatus 70 generates the information related to primary communication, based on determination results (Step S172). Next, the determination apparatus 70 encrypts the generated information related to primary communication (Step S173). Next, the determination apparatus 70 transmits the encrypted information related to primary communication to the communication control apparatus 60 (Step S174).

The communication control apparatus 60 receives the encrypted information related to primary communication from the determination apparatus 70 (Step S174). Next, the communication control apparatus 60 performs secure computation based on the encrypted information related to primary communication and the encrypted communication parameter change target information, and generates the encrypted secondary communication parameters (Step S175). Next, the communication control apparatus 60 stores the encrypted secondary communication parameters in the recording unit 630 (Step S176).

Fig. 22 is a diagram illustrating an example of a communication control procedure according to the first embodiment of the present disclosure. The figure is a sequence diagram illustrating an example of a processing procedure between the communication control apparatus 60 and the communication apparatus 40.

First, the communication apparatus 40 transmits the frequency use notification to the communication control apparatus 60 (Step S201). Next, the communication control apparatus 60 acquires the encrypted secondary communication parameters from the recording unit 630 (Step S202). Next, the communication control apparatus 60 transmits the encrypted secondary communication parameters to the communication apparatus 40 (Step S203), and performs notification of a decryption method (Step S204). Next, the communication apparatus 40 decrypts the encrypted secondary communication parameters (Step S205). Next, the communication apparatus 40 updates the secondary communication parameters (Step S206). In this case, when the secondary communication parameters include radio wave transmission stop, the communication apparatus 40 stops radio wave transmission.

Note that the communication control apparatus 60 may include the notification of the decryption method for the secondary communication parameters in the communication apparatus 40 in a response to the frequency use notification. The communication control apparatus 60 may include the notification of the decryption method as an option of the registration procedure or the frequency use permission. When the decryption method is specified by standardization or the like, there may be a case in which transmission of the decryption method is unnecessary.

In this manner, when communication is periodically performed between the communication control apparatus 60 and the communication apparatus 40, two-step processing of the processing of Fig. 21 and the processing of Fig. 22 is performed.

Note that, when approaching only Effect 1 of 3.3, the processing of Step 205 of Fig. 22 is skipped, because decryption processing for the secondary communication parameters is performed in the communication control apparatus 60.

In this manner, the communication control apparatus 60 of the first embodiment of the present disclosure performs secure computation based on the encrypted information related to primary communication, and generates the secondary communication parameters. Accordingly, the information related to primary communication can be concealed. When the communication control apparatus 60 employs a configuration of transmitting the encrypted secondary communication parameters to the communication apparatus 40, the secondary communication parameters can be further concealed.

3.5 Second Embodiment

In the communication system according to the first embodiment described above, after the encrypted information related to primary communication is transmitted from the determination apparatus 70, the communication control apparatus 60 calculates the secondary communication parameters of each communication apparatus 40. In contrast, a communication system of a second embodiment of the present disclosure is different from that of the first embodiment described above in that, with the frequency use notification from the communication apparatus 40 being a starting point, the communication control apparatus 60 performs secure computation and calculates and transmits the secondary communication parameters related to the communication apparatus 40.

Fig. 23 is a diagram illustrating an example of a communication control procedure according to the second embodiment of the present disclosure. Similarly to Fig. 21, the figure is a sequence diagram illustrating an example of a processing procedure between the determination apparatus 70 and the communication control apparatus 60. The difference from the processing of Fig. 21 lies in that the encrypted information related to primary communication transmitted from the determination apparatus 70 in Step S174 is stored in the recording unit (Step S221).

Fig. 24 is a diagram illustrating an example of a communication control procedure according to the second embodiment of the present disclosure. Similarly to Fig. 22, the figure is a sequence diagram illustrating an example of a processing procedure between the communication control apparatus 60 and the communication apparatus 40. The communication control apparatus 60 receives the frequency use notification from the communication apparatus 40 (Step S201). The difference from the processing of Fig. 22 lies in that the communication control apparatus 60 subsequently performs secure computation based on the encrypted information related to primary communication and the encrypted communication parameter change target information and generates the encrypted secondary communication parameters (Step S222). The following processing is the same as that of Fig. 22, and thus description will be omitted.

The configuration of the communication system other than the above is the same as the configuration of the communication system in the first embodiment of the present disclosure, and thus description will be omitted.

In this manner, in the communication system of the second embodiment of the present disclosure, with the frequency use notification from the communication apparatus 40 being a starting point, the communication control apparatus 60 performs secure computation and generates the secondary communication parameters.

3.6 Third Embodiment

In the communication system according to the first embodiment described above, the communication control apparatus 60 performs secure computation. In contrast, a communication system of a third embodiment of the present disclosure is different from that of the first embodiment described above in that whether or not to use secure computation at the communication control apparatus 60 is switched.

For example, in order to enhance compatibility with the existing communication control apparatus and DSA performed with an existing method, a method of dynamically changing whether or not to use secure computation can also be considered as an embodiment. This is because, in DSA, the communication apparatus 40 is controlled based on data analysis results, and thus real-time property is required. By dynamically switching whether or not to use secure computation, various requests in the primary communication system can be flexibly supported. Specifically, this enables coexistence of the primary communication system that desires control of the communication apparatus 40 using secure computation for the purpose of concealment of the radio wave use status, the primary communication system that desires control of the communication apparatus 40 having more immediacy than concealment of the radio wave use status using secure computation, and the like.

As an example of a case of dynamically switching whether or not to perform secure computation, considered is a case of coexistence of the primary communication system that desires control of the communication apparatus 40 using secure computation for the purpose of concealment of the radio wave use status and the primary communication system that desires more immediate control of the communication apparatus 40 than concealment of the radio wave use status using secure computation. These primary communication systems are classified depending on whether or not protection of the information related to primary communication, which is information of the radio wave use status using secure computation, is required. According to the classification, the secondary communication parameters are created using the method of 3.3, for example, for the primary communication system requiring protection using secure computation, and the secondary communication parameters are created using the conventional method of 3.1.1 for the primary communication system not requiring protection using secure computation.

Fig. 25 is a diagram illustrating an example of a processing procedure of determination processing according to the third embodiment of the present disclosure. The figure is a flowchart illustrating an example of a processing procedure of the determination apparatus 70. First, the determination apparatus 70 determines the radio wave use status (Step S271). Next, the determination apparatus 70 determines whether secure computation is required in the primary communication system (Step S272). The determination apparatus 70 determines whether protection of the information related to primary communication using secure computation is required, based on the band, the location information, and the time information, for example.

As a result, when it is determined that secure computation is required (Step S272, Yes), the determination apparatus 70 transmits information indicating that secure computation is required and the encrypted information related to primary communication (Step S274), and ends the processing. On the other hand, in Step S272, when it is determined that secure computation is not required (Step S272, No), the determination apparatus 70 transmits information indicating that secure computation is not required and plaintext information related to primary communication (Step S273), and ends the processing.

Fig. 26 is a diagram illustrating an example of a processing procedure of communication control processing according to the third embodiment of the present disclosure. The figure is a flowchart illustrating an example of a processing procedure of the communication control apparatus 60. First, the communication control apparatus 60 determines whether secure computation is required, based on the information related to primary communication from the determination apparatus 70 and the like (Step S261). As a result, when it is determined that secure computation is required (Step S261, Yes), the communication control apparatus 60 generates the secondary communication parameters using secure computation, based on the encrypted information related to primary communication (Step S263). On the other hand, in Step S261, when it is determined that secure computation is not required (Step S261, No), the communication control apparatus 60 generates the secondary communication parameters, based on plaintext information related to primary communication (Step S262).

Note that, in general, the present embodiment is particularly effective in a case in which the determination apparatus 70 using a sensor or the like is deployed, and radio wave use from the primary communication system is detected immediately before or during use. Even when a use schedule is encrypted and transmitted in advance, it is effective to dynamically switch whether or not to perform secure computation when the primary communication system urgently starts use. This is because, in such a case, immediately controlling the communication apparatus is required rather than protecting the information related to primary communication using secure computation. In such a case, it can be considered that the determination apparatus 70 notifies the communication control apparatus 60 of the information related to primary communication in plaintext without encryption. Because the secondary communication parameters are calculated in plaintext, rapid control of the communication apparatus 40 is enabled as compared to a case in which secure computation is used.

3.6.1 First Modification

It is also possible to dynamically switch the method of secure computation. When the method of secure computation is dynamically switched as the entire DSA system, for example, it can be performed using the following processing procedure. In the processing of Fig. 20, the communication control apparatus 60 encrypts the communication parameter change target information for each encryption method necessary for secure computation that can be used. In other words, when n methods of secure computation are dynamically switched, n pieces of encrypted communication parameter change target information are created for one piece of communication parameter change target information.

In the processing of Fig. 21, after determining the information related to primary communication, the determination apparatus 70 randomly selects one encryption method out of n encryption methods, and encrypts the information related to primary communication using the encryption method. Subsequently, the determination apparatus 70 notifies the communication control apparatus 60 of the encrypted information related to primary communication and the encryption method. The communication control apparatus 60 acquires the communication parameter change target information encrypted using the encryption method from the recording unit 630, based on the encryption method transmitted from the determination apparatus 70. Subsequently, the communication control apparatus 60 performs secure computation, and calculates the secondary communication parameters.

3.6.2 Second Modification

A case is also assumed in which there is no notification of the information related to primary communication from the determination apparatus 70 to the communication control apparatus 60. In this case, the communication control apparatus 60 can acquire the information related to primary communication from the determination apparatus 70. In this case, the determination apparatus 70 includes a recording unit. The determination apparatus 70 stores the encrypted information related to primary communication in its own recording unit. The communication control apparatus 60 requests the determination apparatus 70 to transmit the information related to primary communication and acquires the information.

In this case, a case can be considered in which the communication control apparatus 60 acquires the information related to primary communication at each periodically determined time. A case can be considered in which, when the information related to primary communication is updated, the determination apparatus 70 transmits a notification of the update to the communication control apparatus 60, and with the notification being a starting point, the communication control apparatus 60 acquires the encrypted information related to primary communication from the recording unit of the determination apparatus 70.

3.6.3 Third Modification

A case is also assumed in which there is no periodic message such as the frequency use notification from the communication apparatus 40. In such a case, for example, a method can also be considered in which a notification is performed from the communication control apparatus 60 to the communication apparatus 40 through processing such as a push.

Fig. 27 is a diagram illustrating an example of a communication procedure according to a third modification of the third embodiment of the present disclosure. The figure is a sequence diagram illustrating an example of a processing procedure between the determination apparatus 70, the communication control apparatus 60, and the communication apparatus 40.

The processing of steps S171 to S175 is the same as that of Fig. 21. The communication control apparatus 60 transmits the generated encrypted secondary communication parameters to the communication apparatus 40 by push (Step S203). Note that, in this case, both of a case in which the communication control apparatus 60 stores the secondary communication parameters and a case in which the communication control apparatus 60 does not store the secondary communication parameters can be considered.

The communication control apparatus 60 transmits the decryption method to the communication apparatus 40 (Step S204). The communication apparatus 40 decrypts the encrypted secondary communication parameters (Step S205), and updates the secondary communication parameter (Step S206).

The configuration of the communication system other than the above is the same as the configuration of the communication system in the first embodiment of the present disclosure, and thus description will be omitted.

3.7 Fourth Embodiment

The configuration example of the communication control apparatus 60 of the present embodiment may be different from that of the first embodiment described above.

The determination apparatus 70 of a fourth embodiment of the present disclosure generates secret-shared information related to primary communication, and transmits it to the communication control apparatus 60.

Fig. 28 is a diagram illustrating a configuration example of the communication control apparatus according to the fourth embodiment of the present disclosure. Similarly to Fig. 17, the figure is a block diagram illustrating a configuration example of the communication control apparatus 60. The communication control apparatus 60 of the figure is different from the communication control apparatus 60 of Fig. 17 in that a first computation unit 627, a second computation unit 628, and a computation unit 629 are included instead of the computation unit 621 of the controller 620. In the communication control apparatus 60 of the figure, a first recording unit 631, a second recording unit 632, and a recording unit 633 are located in the recording unit 630.

The computation unit 629 generates the communication parameter change target information by using the information of the communication apparatus 40 stored in the recording unit 633.

The first computation unit 627 and the second computation unit 628 perform arithmetic processing by using the secret-shared information related to primary communication received by the communication unit 610 and the communication parameter change target information subjected to the secret sharing processing stored in the first recording unit 631 and the second recording unit 632, and calculate the secondary communication parameters.

The recording unit 633 stores unencrypted information related to the communication apparatus 40.

The first recording unit 631 and the second recording unit 632 each store the communication parameter change target information, subjected to the secret sharing processing, encrypted by the encryption unit 622. When the secondary communication parameters are not decrypted in the communication control apparatus 60, the first recording unit 631 and the second recording unit 632 store the secondary communication parameters calculated by the computation unit 629.

Fig. 29 is a diagram illustrating another configuration example of the communication control apparatus according to the fourth embodiment of the present disclosure. Similarly to Fig. 28, the figure is a block diagram illustrating a configuration example of the communication control apparatus 60. The communication control apparatus 60 of the figure is different from the communication control apparatus 60 of Fig. 28 in that a decryption unit 624 is further included.

Fig. 29 illustrates a configuration example of the communication control apparatus 60 when the secondary communication parameters are decrypted in the communication control apparatus 60. The decryption unit 624 decrypts the encrypted secondary communication parameters, and stores them in the second recording unit 632.

Fig. 30 is a diagram illustrating another configuration example of the communication control apparatus according to the fourth embodiment of the present disclosure. Similarly to Fig. 28, the figure is a block diagram illustrating a configuration example of the communication control apparatus 60. The communication control apparatus 60 of the figure is different from the communication control apparatus 60 of Fig. 28 in that the encryption unit 622 is omitted.

Fig. 30 illustrates a configuration example of the communication control apparatus 60 when the communication parameter change target information is not encrypted.

The first computation unit 627 and the second computation unit 628 of Fig. 30 perform arithmetic processing by using the secret-shared information related to primary communication received by the communication unit 610 and the communication parameter change target information in plaintext stored in the second recording unit 632, and calculate the secondary communication parameters. In a case of secure computation using multi-party computation based on secret sharing, the number of computation units need only be two or more.

The first recording unit 631 and the second recording unit 632 of Fig. 30 store the secondary communication parameters calculated by the computation unit 629. In a case of secure computation through multi-party computation based on secret sharing, the number of recording units need only be two or more.

A feature of secure computation (multi-party computation) based on secret sharing is that there are a plurality of information processing devices performing the same processing in one functional unit. In Fig. 28, the first computation unit 627 and the second computation unit 628 and the first recording unit 631 and the second recording unit 632 each include two information processing devices. In a case of secure computation based on secret sharing, in principle, there may be three or more information processing devices. The number of information processing devices constituting the computation units and the number of information processing devices constituting the recording units are generally equal, but need not necessarily be equal.

Fig. 31 is a diagram illustrating an example of a processing procedure of communication control processing according to the fourth embodiment of the present disclosure. Similarly to Fig. 20, the figure is a flowchart illustrating an example of a processing procedure of processing in the communication control apparatus 60.

Steps S150 and S151 are the same as those of Fig. 20. Next, the encryption unit 622 encrypts the communication parameter change target information based on secret sharing (Step S181), and stores the encrypted communication parameter change target information in the first recording unit 631 and the second recording unit 632 (Step S182).

Fig. 32 is a diagram illustrating an example of a communication control procedure according to the fourth embodiment of the present disclosure. Similarly to Fig. 21, the figure is a sequence diagram illustrating an example of a processing procedure between the determination apparatus 70 and the communication control apparatus 60.

Steps S171 and Step S172 are the same as those of Fig. 21. Next, the determination apparatus 70 performs the secret sharing processing as an encryption method on the information related to primary communication (Step S301). Next, the determination apparatus 70 transmits the encrypted information related to primary communication (i.e., a share of the information related to primary communication) to the communication control apparatus 60 (Step S302).

Next, the communication control apparatus 60 acquires the encrypted communication parameter change target information from the first recording unit 631 and the second recording unit 632 (Step S303). Next, in the communication control apparatus 60, the first computation unit 627 and the second computation unit 628 perform multi-party computation based on secret sharing, and generate the encrypted secondary communication parameters (Step S304). Next, the communication control apparatus 60 stores the encrypted secondary communication parameters in the first recording unit 631 and the second recording unit 632 (Step S305).

Note that values output by each of the first computation unit 627 and the second computation unit 628 in Step S304 are shares of the secondary communication parameters. The shares of the secondary communication parameters correspond to the encrypted secondary communication parameters.

Fig. 33 is a diagram illustrating an example of a communication control procedure according to the fourth embodiment of the present disclosure. Similarly to Fig. 22, the figure is a sequence diagram illustrating an example of a processing procedure between the communication control apparatus 60 and the communication apparatus 40.

First, the communication apparatus 40 transmits the frequency use notification to the communication control apparatus 60 (Step S201). Next, the communication control apparatus 60 acquires the encrypted secondary communication parameters from the first recording unit 631 and the second recording unit 632 (Step S311). Next, the communication control apparatus 60 transmits the encrypted secondary communication parameters to the communication apparatus 40 (Step S312), and performs notification of a decryption method (Step S313). Next, the communication apparatus 40 decrypts the encrypted secondary communication parameters (Step S314). Next, the communication apparatus 40 updates the secondary communication parameters (Step S206).

Note that the following will describe a case in which the secondary communication parameters may be stored in the communication control apparatus 60 as plaintext (i.e., a case in which only the information related to primary communication is protected in the communication control apparatus 60) in transmission of the secondary communication parameters to the communication apparatus 40.

Fig. 34 is a diagram illustrating another example of a communication control procedure according to the fourth embodiment of the present disclosure. Similarly to Fig. 33, the figure is a sequence diagram illustrating an example of a processing procedure between the communication control apparatus 60 and the communication apparatus 40. After the processing of Step S311, the decryption unit 624 decrypts the encrypted secondary communication parameters (Step S321). Next, the communication control apparatus 60 transmits the secondary communication parameters to the communication apparatus 40 (Step S322). Next, the communication apparatus 40 updates the secondary communication parameters (Step S206).

In the processing of Fig. 34, the communication parameter change target information calculated in the communication control apparatus 60 is subjected to the encryption processing as secret information in the communication control apparatus 60. However, the communication parameter change target information is not necessarily regarded as secret information. In such a case, the processing of Step S181 in Fig. 31 is skipped. The following will describe a processing procedure in this case.

Fig. 35 is a diagram illustrating another example of a processing procedure of communication control processing according to the fourth embodiment of the present disclosure. Similarly to Fig. 31, the figure is a flowchart illustrating an example of a processing procedure of processing in the communication control apparatus 60. Steps S150 and S151 are the same as those of Fig. 31. Next, the communication control apparatus 60 stores the communication parameter change target information in the recording unit 633 (Step S331).

Although the communication parameter change target information is stored in the recording unit 633 in the processing of Fig. 35, a case in which the communication parameter change target information is stored in the first recording unit 631 and the second recording unit 632 can also be considered. Note that the processing of Fig. 35 is also an example of a processing procedure of a case in which existing communication parameter change target information is used.

Furthermore, when the secondary communication parameters are not regarded as secret information and the secondary communication parameters are decrypted in the communication control apparatus 60, the first recording unit 631 and the second recording unit 632 can be omitted. In this case, all the information is centralized in the recording unit 633.

3.7.1 Example of Algorithm Targeting Only Effect 1

In this section, an example of a specific algorithm will be described. An algorithm for multi-party computation based on additive secret sharing of multi-party computation based on secret sharing will be described. For the sake of simplicity, the discussion will be made on the assumption that only On/Off information of radio wave transmission is included as the secondary communication parameter. Note that, as this algorithm targets only Effect 1, a case is considered in which the controller of the communication control apparatus includes the decryption unit and the controller of the communication apparatus does not include the decryption unit. The configuration example in the communication control apparatus of this case is as illustrated in Fig. 29.

Fig. 36 is a diagram illustrating an example of the communication parameter change target information according to the fourth embodiment of the present disclosure. It is considered that three primary communication systems (A, B, and C) are present, and as in the figure, a list in which a numerical sequence $X_i$, which is an ID of the communication apparatus 40, corresponds to each primary communication system is calculated in the communication control apparatus 60 as the communication parameter change target information. In this case, the information related to primary communication is arranged not to be stored as plaintext in the storage medium in the communication control apparatus 60, and then the ID of the communication apparatus for which transmission stop is requested is calculated. Note that, when an alphanumeric string including alphabet letters is assigned as the ID, for example, it can be considered that the ID is assigned an integer value as a temporary ID for internal computation and is then calculated. In this case, the temporary ID and the ID need only be assigned so as to correspond to each other on a one-to-one basis, such as in lexicographic order. It is assumed that the communication parameter change target information is regarded as secret information.

The discussion may be made on the assumption that, in the list as in Fig. 36, when the same primary communication system is used in different locations, bands, and the like, it is defined as different primary communication systems. The following discussion will be made on the assumption that the determination apparatus 70 determines that the primary communication systems B and C use a radio wave. Even when a different determination value is output, entirely the same processing is performed. In the following, an $l$ ($l \geq 0$)-th component with respect to any vector b is represented by b [l].

A general flow of the algorithm will be described. The communication control apparatus 60 generates communication parameter change target information L, performs the secret sharing processing on L, and generates L1 and L2. Beaver's triples are generated for efficiently performing multi-party computation. Next, the determination apparatus 70 generates information xp related to primary communication, performs the secret sharing processing, and generates $\alpha^1$ and $\alpha^2$. $\alpha^1$ and $\alpha^2$ are transmitted to the communication control apparatus 60. The first computation unit 627 and the second computation unit 628 in the communication control apparatus 60 perform multi-party computation by using L1, L2, $\alpha^1$, $\alpha^2$, and the Beaver's triples, calculate the secondary communication parameter, and perform the decryption processing. Here, the first computation unit 627 performs multi-party computation by using $\alpha^1$, L1, and the Beaver's triples, and the second computation unit 628 performs multi-party computation by using $\alpha^2$, L2, and the Beaver's triples. Next, after the frequency use notification from the communication apparatus 40, the acquisition unit 623 of the communication control apparatus 60 acquires the secondary communication parameter, and transmits the secondary communication parameter to the communication apparatus 40.

3.7.1.1 Secret Sharing Processing on Communication Parameter Change Target Information and Storage of Shares

In this section, the processing of Fig. 31 will be described. When the communication parameter change target information is handled as secret information, additive secret sharing processing is performed on the communication parameter change target information.

The following processing is entirely the same processing even for any number of primary communication systems. For the sake of simplicity, the number of computation units used for secure computation is two; however, the same processing is performed even for three or more computation units.

The secret sharing processing on the communication parameter change target information of Fig. 36 will be described. The processing is performed by the encryption unit 622 inside the communication control apparatus 60. In Fig. 36, not necessarily the same number of communication apparatuses 40 are requested to stop for all the primary communication systems; however, in such a case, remaining surplus components need only be set to 0 by changing the dimension of the vector or fixing N for each primary communication system as appropriate. The following discussion will be made on the assumption that all $X_i$ is (N + 1)-dimensional.

An (N + 1)-dimensional random number vector $Y_i$ is generated for each primary communication system i, and $Z_i :=$ $X_i - Y_i$ is defined. Note that, when the number of computation units is n, (n - 1) random number vectors are generated, and the sum thereof need only be subtracted from $X_i$. A list including $Y_i$ obtained by encrypting the ID string of the communication apparatus to be stopped for each primary communication system using random numbers is represented by L1, and a list including $Z_i$ is represented by L2.

Figs. 37A and 37B are each a diagram illustrating an example of a list of the communication parameter change target information after being subjected to the additive secret sharing processing according to the fourth embodiment of the present disclosure.

The above is the secret sharing processing (encryption processing) on the communication parameter change target information. In order to perform multiplication at a high speed in multi-party computation based on secret sharing, a set $(x, y, z)$ of integers satisfying $x \cdot y = z$ is generated. Furthermore, a set of integers in [Expression 2] satisfying $x = x_1 + x_2$, $y = y_1 + y_2$, and $z = z_1 + z_2$ is generated using random numbers (i.e., random number vectors in [Expression 3] are generated, and $(x_2, y_2, z_2) := (x, y, z) - (x_1, y_1, z_1)$ is defined).

$$[\text{Expression } 2]$$

$$(x_1, y_1, z_1), (x_2, y_2, z_2) \in \mathbb{Z}^3$$

$$[\text{Expression } 3]$$

$$(x_1, y_1, z_1) \in \mathbb{Z}^3$$

The set of random numbers in [Expression 4] satisfying $x \cdot y = z$ is referred to as Beaver's triples.

$$[\text{Expression } 4]$$

$$(x_i, y_i, z_i) \in \mathbb{Z}^3$$

In multi-party computation based on secret sharing, in general, a set of Beaver's triples are used in one multiplication (i.e., when n multiplications are performed, at least n sets of $(x, y, z)$ are generated, and the secret sharing processing is performed on each $(x, y, z)$). Generation of the Beaver's triples is referred to as a preprocessing phase (or an offline phase).

The following assumes that a set of $(x_i, y_i, z_i)$ is generated for each primary communication system i for the sake of simplicity of discussion; however, a set of Beaver's triples $(x_i, y_i, z_i)$ may be generated for each communication apparatus 40. It is assumed that a table of sets of $(x, y, z)$ corresponding to respective primary communication systems is generated.

Fig. 38 is a diagram illustrating an example of Beaver's triples $(x, y, z)$ according to the fourth embodiment of the present disclosure.

Figs. 39A and 39B are each a diagram illustrating an example of Beaver's triples $(x, y, z)$ after being subjected to the additive secret sharing processing according to the fourth embodiment of the present disclosure. Figs. 39A and 39B each illustrate the Beaver's triples generated by performing the additive secret sharing processing on a set of random numbers. The list of Fig. 39A is referred to as BT1, and the list of Fig. 39B as BT2. Note that, although z is defined so that $z = x \cdot y$ holds in Fig. 39, $x_i - y_i \neq z_i$ (i = 1, 2) generally holds in the Beave's triples after the secret sharing of Fig. 39. This is because relational expressions of $x_A = x_{A1} + x_{A2}$, $y_A = y_{A1} + y_{A2}$, and $z_A = z_{A1} + z_{A2}$ hold, and hence $z_A = x_A \cdot y_A = (x_{A1} + x_{A2}) \cdot (y_{A1} + YA2) = x_{A1} \cdot y_{A1} + x_{A2} \cdot YA2 + X_{A1} \cdot YA2 + x_{A2} \cdot y_{A1}$. In this manner, it is understood that $x_i \cdot y_i = z_i$ (i = 1, 2) does not necessarily hold.

The encryption unit 622 stores these L1 and BT1 in the first recording unit 631, and stores L2 and BT2 in the second recording unit 632. Accordingly, the process ends. Note that, it is desirable that the Beaver's triples be exchanged every time the secondary communication parameter is calculated, while not necessarily limited thereto.

3.7.1.2 Notification of Information Related to Primary Communication by Determination Apparatus

In this section, a specific algorithm will be described regarding the processing of Fig. 32. First, the determination unit in the determination apparatus determines the information related to primary communication of the primary communication systems. For example, a case is considered in which B and C out of the primary communication systems A, B, and C use a radio wave. In this case, the determination unit generates information of the following.
[Expression 5]

$$xp = (0,1,1) \in \{0,1\}^3 \subset \mathbb{Z}^3 \qquad \cdots (4)$$

Here, the dimension of xp is determined by the number of primary communication systems. Specifically, when the number of primary communication systems is M, the determination unit 721 generates M-dimensional information. In the information (0, 1, 1), a zeroth component, a first component, and a second component respectively correspond to the primary communication systems A, B, and C. In the information (0, 1, 1), the value "0" indicates a state in which the primary communication system does not use a radio wave, and the value "1" indicates a state in which the primary communication system uses a radio wave. In other words, it indicates a state in which the primary communication system A (zeroth component) does not use a radio wave and the primary communication system B (first component) and the primary communication system C (second component) use a radio wave. The determination unit 721 of the determination apparatus 70 transmits the information (0, 1, 1) related to primary communication to the encryption unit 722. In other words, the radio wave use status in this algorithm is a state in which the primary communication system A does not perform radio wave transmission and B and C perform radio wave transmission. The information related to primary communication is (0, 1, 1) in the above.

The encryption unit 722 generates a three-dimensional random number vector in [Expression 6] for the information of xp = (0, 1, 1), and defines $\alpha^2 := xp - \alpha^1$.
[Expression 6]

$$a^1 = (a_0, a_1, a_2) \in (\mathbb{Z}/p\mathbb{Z})^3 \qquad \cdots (5)$$

When the computation units (the first computation unit 627 and the second computation unit 628) of the communication control apparatus 60 include n information processing devices, the number of random number vectors generated by the encryption unit 722 is n - 1, i.e., $\alpha^1$, ..., $\alpha^{(n-1)}$. In this case, the following is defined.
[Expression 7]

$$a^n := xp - \sum_{i=0}^{n-1} a^i \qquad \cdots (6)$$

In the following, it is assumed that $\alpha^1 = (\alpha_0, \alpha_1, \alpha_2) = (1, 0, 1)$ is generated and $\alpha^2 = (-1, 1, 0)$ holds. After performing the secret sharing processing, the encryption unit 722 transmits $\alpha^j$ (j = 1, 2) as a share of the information related to primary communication to the communication control apparatus 60 via the communication unit 710.

The first computation unit 627 and the second computation unit 628 in the communication control apparatus 60 respectively receive $\alpha^1$ and $\alpha^2$ from the determination apparatus 70. Subsequently, the first computation unit 627 acquires L1 and BT1 from the first recording unit 631, and the second computation unit 628 acquires L2 and BT2 stored in the second recording unit 632. In this case, the first computation unit 627 holds the share $\alpha^1 = (\alpha_0, \alpha^1, \alpha_2)$ of the information related to primary communication, the share L1 of the communication parameter change target information, and BT1 used for multiplication. The computation unit 629 holds the share $\alpha^2 = (-\alpha_0, 1 - \alpha^1, 1 - \alpha_2) =: (\beta_0, \beta_1, \beta_2)$ of the information related to primary communication, the share L2 of the secondary communication parameter, and BT2 used for multiplication. Here, L1 and L2 correspond to Figs. 37A and 37B, and BT1 and BT2 correspond to Figs. 39A and 39B, respectively. The first computation unit 627 and the second computation unit 628 perform multi-party computation by using these inputs, and output vectors $X_1$ and $X_2$ storing the shares of the IDs of the communication apparatuses for which transmission stop is requested.

Each computation unit performs multi-party computation in the following procedure. In the following, it is assumed that the primary communication systems A, B, and C are numbered i = 0, i = 1, and i = 2. The subscripts of the primary communication systems A, B, and C of Figs. 39A and 39B are interpreted as i = 0, 1, 2, respectively.

(A1)

With respect to primary communication system i = 0, the first computation unit 627 calculates $\alpha_i$ - $x_{i1}$ and $Y_i$ - $y_{i1}$ · (1, ..., 1), and the second computation unit 628 calculates $\beta_i$ - $x_{i2}$ and $Z_i$ - $y_{i2}$ · (1, ..., 1). Next, the first computation unit 627 transmits calculation results to the second computation unit 628, and the second computation unit 628 transmits calculation results to the first computation unit 627. The first computation unit 627 and the second computation unit 628 obtain the information xp[i] related to primary communication of primary communication system i = 0 and difference $d_i$ := xp[i] - $x_i$ of the Beaver's triples, and the vector $X_i$ of the IDs of the communication apparatuses 40 for which radio wave transmission stop is requested by primary communication system i = 0 at the time of radio wave transmission and difference $e_i$ := $X_i$ - $y_i$ (1, ..., 1) of the Beaver's triples.

(A2)

The first computation unit 627 calculates $A_{i1}$ := $d_i$ · $e_i$ + $d_i$ · $y_{i1}$ · (1, ..., 1) + ei · $x_{i1}$ + $z_{i1}$ · (1, ..., 1), and the second computation unit 628 calculates $A_{i2}$ := $d_i$ · $y_{i2}$ · (1, ..., 1) + $e_i$ · $x_{i2}$ + $z_{i2}$ · (1, ..., 1).
The processing of (A1) and (A2) above is performed until i = 2, where i = i + 1.
Finally, the first computation unit 627 combines vectors $A_{01}$, $A_{11}$, and $A_{21}$. The combined vector is represented by $A_1$. Finally, the second computation unit 628 combines vectors $A_{02}$, $A_{12}$, and $A_{22}$, and the combined vector is represented by $A_2$. The second computation unit 628 transmits the combined vector $A_2$ to the first computation unit 627. The first computation unit 627 calculates $A_1$ + $A_2$. The communication apparatuses having the IDs of the communication apparatuses output through the computation are targets for which radio wave transmission stop is to be requested at the time of the subsequent frequency use notification. The secondary communication parameters of the communication apparatuses having the IDs stored in the recording unit 633 are rewritten as the content including radio wave transmission stop. The first computation unit 627 also performs the processing of the decryption unit in this algorithm, while not necessarily limited thereto.
When the values output by the first computation unit 627 and the second computation unit 628 are actually added, the following is obtained:

$$A_{i1} + A_{i2} = d_i \cdot e_i + d_i \cdot y_{i1} \cdot (1, 1) + e_i x_{i1} + z_{i1} \cdot (1, ..., 1) + d_i y_{i2} \cdot (1, 1) + e_i x_{i2} + z_{i2} \cdot (1, ..., 1) = d_i \cdot e_i + d_i \cdot y_i \cdot (1, 1, 1)$$
$$+ x_i \cdot e_i + z_i \cdot (1, 1, 1) = (d_i + x_i) (e_i + y_i \cdot (1, 1, 1)) = xp[i]X_i$$

A product of each component of $X_i$ and the information related to primary communication of the primary communication systems is output, and thus the IDs of only the communication apparatuses that cause harmful interference to the primary communication systems performing radio wave transmission (in this algorithm, the IDs of the communication apparatus 40 stored in X1 and the communication apparatus 40 stored in X2 that cause harmful interference to the primary communication systems B and C) are output.
Note that, in the above algorithm, the components of the vectors storing the communication apparatuses for which transmission continuation is permitted are output as "0", and thus which primary communication system uses, or does not use, a radio wave is indirectly recorded in the controller in the communication control apparatus. As methods for avoiding this, the following two methods can be considered.

(B1) Randomize the order of combining $A_{i0}$, $A_{i1}$, and $A_{i2}$
(B2) Randomize the components of the combined vector $A_i$

After the first computation unit 627 and the second computation unit 628 each calculate $A_{ik}$ (k = 1, 2), in order to randomize the string of $A_{ik}$ with respect to i, for example, the first computation unit 627 selects one element σ from a symmetric group of degree 3, and transmits σ to the second computation unit 628. Using σ, $A_{ik}$ is defined as $A_{\sigma(i)k}$. $A_{\sigma(i)k}$ is rearranged in ascending order of σ(i), and a vector obtained by combining the vectors $A_{\sigma(i)k}$ is represented by $A_k$. For example, when σ = (012) is selected, such rearrangement is performed as to make $A_{0k}$ first, $A_{1k}$ second, and $A_{2k}$ zeroth according to σ, and thus $A_k$ is a vector combined in order of $A_{2k}$, $A_{0k}$, and $A_{1k}$. The second computation unit 628 transmits the vector $A_2$ to the first computation unit 627. Next, the first computation unit 627 performs computation of $A_1$ + $A_2$. Accordingly, only the IDs of the communication apparatuses corresponding to the primary communication systems using a radio wave are output. The secondary communication parameters of the communication apparatuses 40 corresponding to the output IDs out of the secondary communication parameters in the recording unit 633 are rewritten as radio wave transmission stop.
In order to randomize the components of $A_j$, when the dimension of $A_j$ is M, the first computation unit 627 selects the element σ of a symmetric group of degree M. Next, the first computation unit 627 transmits σ to the second computation unit 628. The first computation unit 627 and the second computation unit 628 each randomize the components of $A_j$ according to $\sigma$. The randomized $A_j$ is defined as $A_j$ again, and the second computation unit 628 transmits the vector $A_2$ to the first computation unit 627. Next, the first computation unit 627 performs computation of $A_1 + A_2$. Accordingly, only the IDs of the communication apparatuses corresponding to the primary communication systems using a radio wave are output. The first computation unit 627 rewrites the secondary communication parameters in the recording unit 633 for the output communication apparatuses as radio wave transmission stop.

Note that, in both of the two methods, which primary communication system uses a radio wave cannot be identified without using $\sigma$.

3.7.2 Example of Algorithm Targeting Both of Effect 1 and Effect 2

When both of Effect 1 and Effect 2 are targeted, in the method 3.7.1, while the information related to primary communication is encrypted, the secondary communication parameters are stored as plaintext in the communication control apparatus. To avoid this, as the communication parameter change target information, a mapping table (Fig. 40) between the primary communication systems and the communication apparatuses 40 is considered. For the sake of simplicity, the numbers of primary communication systems and communication apparatuses are each three. Here, regarding the primary communication system, for example, when apparatuses, even if identical to each other, are used over a plurality of predefined locations (areas, points, or the like), or when systems, even if identical to each other, use different bands, they are considered to be different from each other. In other words, when there are predefined locations P and Q and the primary communication system A transmits a radio wave at both the locations, the primary communication system A using the radio wave at P and the primary communication system A using the radio wave at Q are considered to be different from each other, and when the primary communication system A uses band m and band n, A using band m and the primary communication system using band n are considered to be different from each other. As an example, this algorithm will describe a case in which an output is radio wave transmission continuation or stop.

Fig. 40 is a diagram illustrating an example of the communication parameter change target information according to the fourth embodiment of the present disclosure. It is assumed that the communication parameter change target information as in the figure is calculated by the computation unit 629 in the communication control apparatus 60. The communication parameter change target information is represented by S.

In Fig. 40, for example, when the primary communication system A uses a radio wave, a communication apparatus a being "1" is permitted to use a radio wave, and a communication apparatus b being "0" is requested to stop using a radio wave. When two apparatuses of the primary communication systems A and B use a radio wave, the communication apparatus a is permitted to use a radio wave for both the primary communication systems A and B, and can accordingly use a radio wave even in such a case. On the other hand, when the primary communication systems A and B use a radio wave, each of communication apparatuses b and c is requested to stop using a radio wave. Thus, when the communication parameter change target information is used, the communication apparatus can use a radio wave in a condition in which the primary communication systems use a radio wave, if and only if the values of the communication apparatus for the primary communication systems scheduled to perform the use are all "1" (available). Note that this is equivalent to a case in which, when a total number of primary communication systems scheduled to use a radio wave (at each time) is N, the sum of extracted components of all the primary communication system systems scheduled to perform the use is equal to N for each communication apparatus.

3.7.2.1 Secret Sharing Processing on Communication Apparatus Status Change Information in Communication Control Apparatus

Similarly to 3.3.2, an example of an algorithm in multi-party computation based on additive secret sharing being a (2, 2)-threshold secret sharing scheme will be described. The following will describe only an algorithm when communication apparatus status change information is encrypted.

The communication apparatus status change information of Fig. 40 is encrypted using a (2, 2)-threshold secret sharing scheme.

Figs. 41A and 41B are each a diagram illustrating an example of a list of the communication parameter change target information after being subjected to the additive secret sharing processing according to the fourth embodiment of the present disclosure. Figs. 41A and 41B each illustrate the Beaver's triples generated by performing the additive secret sharing processing on a set of random numbers. It is assumed that the encryption unit 622 generates the two tables as in Figs. 41A and 41B. In the two tables, summing up the components causes S, which is the communication apparatus status change information in plaintext, to be decrypted. Here, the table of Fig. 41A is represented by S1, and the table of Fig. 41B is represented by S2. In 3.7.2.2 below, S1 and S2 and the secondary communication parameters encrypted by the encrypted radio wave use status are calculated without using S. It is assumed that BT1 and BT2, which are the Beaver's triples of Figs. 39A and 39B, are generated. The encryption unit 622 stores S1 and BT1 in the first recording unit 631, and stores S2 and BT2 in the second recording unit 632.

A vector $(-1, 2, 1)^t$ related to the communication apparatus a in S1 is hereinafter represented by S1a. Similar representation also applies to other tables and vectors related to communication apparatuses.

3.7.2.2 Notification of Information Related to Primary Communication to Communication Control Apparatus and Computation of Shares of Secondary Communication Parameter

This section will describe a process from performing, by the determination apparatus 70, the secret sharing processing of the information related to primary communication to calculating, by the communication control apparatus, the secondary communication parameter. Note that, as for the processing in this section, the processing similar to that of 3.7.1.2 is performed. Similarly to 3.7.1.2, it is assumed that the determination unit 721 of the determination apparatus 70 determines that the primary communication systems B and C use a radio wave.

First, the determination unit 721 of the determination apparatus 70 determines the information related to primary communication of the primary communication systems. In this case, the determination unit generates the information shown in expression (4) described above. Similarly to 3.7.1.2., in the information (0, 1, 1), the zeroth component "0" indicates that a primary communication system 0 does not use a radio wave, and the first and second components "1" indicate that primary communication systems 1 and 2 use a radio wave. The determination unit 721 of the determination apparatus 70 transmits the information (0, 1, 1) related to primary communication to the encryption unit 722.

The encryption unit 722 generates the three-dimensional random number vector shown in expression (5) described above with respect to information $xp = (0, 1, 1)$, and defines $\alpha^2 := xp - \alpha^1$. Note that, when the computation unit 621 in the communication control apparatus 60 includes n information processing devices, the number of random number vectors generated by the encryption unit 722 is n - 1, i.e., $\alpha^1, ..., \alpha^{(n-1)}$, and is defined similarly to expression (6) described above.

In the following, it is assumed that $\alpha^1 = (\alpha_0, \alpha_1, \alpha_2) = (1, 0, 1)$ is generated, and $\alpha^2 = (-\alpha_0, 1 - \alpha_1, 1 - \alpha_2) = (-1, 1, 0) =: (\beta_0, \beta_1, \beta_2)$ holds. 2 (in this algorithm) being the number of primary communication systems using a radio wave and $\alpha^j$ (j = 1, 2) being the share of the information related to primary communication are transmitted to the communication control apparatus 60 via the communication unit 710.

In the communication control apparatus 60, the first computation unit 627 and the second computation unit 628 respectively receive the shares $\alpha^1$ and $\alpha^2$ of the information related to primary communication received in the communication unit 610, and both of the first computation unit 627 and the second computation unit 628 receive "2" being a determination condition (only the first computation unit 627 may receive "2"). The first computation unit 627 acquires S1 and BT1 from the first recording unit 631, and the second computation unit 628 acquires S2 and BT2 from the second recording unit 632. Next, the first computation unit 627 and the second computation unit 628 perform the following processing.

As an example, computation of the secondary communication parameter related to the communication apparatus a is considered. In plaintext, with an inner product of the vector of the information related to primary communication and a vector Sa related to the communication apparatus a, the following is obtained:

$$\texttt{xp}^\texttt{t} \cdot \texttt{Sa} = \texttt{(0, 1, 1)} \cdot \texttt{(1, 1, 0)}^\texttt{t} = \texttt{1} \neq \texttt{2}$$

Thus, radio wave transmission stop is requested to the communication apparatus a. Now, because $\alpha^t = (\alpha^1 + \alpha_2)^t = (\alpha^1)^t + (\alpha^2)^t$ and Sa = S1a + S2a, the following is obtained.

$$\alpha^t \cdot S_a = (\alpha^1)^t \cdot S1a + (\alpha^2)^t \cdot S2a + (\alpha^1)^t \cdot S2a + (\alpha^2)^t \cdot S1a$$

Although the first computation unit 627 and the second computation unit 628 can locally calculate $(\alpha^j)^t \cdot Sj$, $(\alpha^1)^t \cdot S2a$ and $(\alpha^2)^t \cdot S1a$ are calculated using their own shares, and thus require contrivance. In view of this, when the Beaver's triples are used, the number of times of communication between the first computation unit 627 and the second computation unit 628 can be reduced.

Computation of the secondary communication parameter of the communication apparatus a will be described. The first computation unit 627 is represented by j = 1, and the second computation unit 628 is represented by j = 2. The first computation unit 627 and the second computation unit 628 each perform the following processing of (C1) and (C2) on primary communication system i = A, B, and C.

(C1)

The first computation unit 627 and the second computation unit 628 calculate $\alpha^j - x_{ij} \cdot (1, 1, 1)$ and $Sja - y_{ij} \cdot (1, 1, 1)^t$,

and exchange calculation results between the first computation unit 627 and the second computation unit 628 (in this process, $\alpha^j$ and Sja being the shares of the secret information are encrypted by random numbers, and thus information related to the secret information is not leaked). Note that, through the computation and the communication, the first computation unit 627 and the second computation unit 628 acquire $d_i := \alpha - x_i \cdot (1, 1, 1)$ and $e_i := Sa - y_i (1, 1, 1)^t$.

(C2)

The first computation unit 627 calculates the following, and stores its calculation results in the first recording unit 631.

$$a_1 := d_1 \cdot e_i + d_i \cdot y_{i1} \cdot (1, 1, 1)^t + x_{i1}(1, 1, 1) \cdot e_i + z_{i1}$$

The second computation unit 628 calculates the following, and stores its calculation results in the second recording unit 632.

$$a_2 := d_i \cdot y_{i2} \cdot (1, 1, 1)^t + x_{i2} \cdot (1, 1, 1) \cdot e_i + Zi2$$

In this case, the first computation unit 627 stores "2" being the determination condition in the first recording unit 631.

Through the above, the process up to computation of the secondary communication parameter ends. Note that, when the values calculated by the first computation unit 627 and the second computation unit 628 are added, the following is obtained:

$$d_i \cdot e_i + d_i \cdot y_{i1} \cdot (1, 1, 1)^t + x_{i1} \cdot (1, 1, 1) \cdot e_i + z_{i1} + d_i \cdot y_{i2} \cdot (1, 1, 1)^t + x_{i2} \cdot (1, 1, 1) \cdot e_i + z_{i2} = (d_i + x_i \cdot (1, 1, 1)) \cdot (e_i + y_i \cdot (1, 1, 1)^t) = \alpha \cdot Sa = (0, 1, 1) \cdot (1, 1, 0)^t = 1 \neq 2$$

This enables calculation of the secondary communication parameter related to the communication apparatus a while concealing the information related to primary communication and the communication parameter change target information.

However, in the above method, the number of primary communication systems transmitting a radio wave serves as the determination condition, and notification of the number of primary communication systems transmitting a radio wave to the communication apparatus 40 is performed. Thus, a random number k is generated before the random number vector $\alpha^1$ is generated in the above algorithm, and accordingly the number of primary communication systems transmitting a radio wave can be used as the determination condition while being concealed. The following will describe a method of concealing the number of primary communication systems transmitting a radio wave by using a random number.

First, the determination unit 721 of the determination apparatus 70 determines the information related to primary communication of the primary communication systems. In this case, the determination unit 721 generates the information shown in expression (4) described above. Similarly to 3.2.7.2., in the information (0, 1, 1), the zeroth component "0" indicates that the primary communication system 0 does not use a radio wave, and the first and second components "1" indicate that the primary communication systems 1 and 2 use a radio wave. The determination apparatus 70 calculates a scalar product kxp obtained by multiplying xp by k. The determination apparatus 70 generates the random number vector $\alpha^1$, and the determination unit 721 of the determination apparatus 70 transmits the information (0, k, k) related to primary communication and the determination condition 2k to the encryption unit 722.

The encryption unit 722 generates the three-dimensional random number vector shown in expression (5) described above with respect to the information of kxp = (0, k, k), and defines $\alpha^2 := kxp - \alpha^1$. When the computation units (the first computation unit 627 and the second computation unit 628) of the communication control apparatus 60 include n information processing devices, the number of random number vectors generated by the encryption unit 722 is n - 1, i.e., $\alpha^1, ..., a^{(n-1)}$. In this case, the following is defined.

[Expression 8]

$$a^n := kxp - \sum_{i=0}^{n-1} a^i \qquad \cdots (7)$$

In the following, it is assumed that $\alpha^1 = (\alpha_0, \alpha_1, \alpha_2) = (1, 0, 1)$ is generated and $\alpha^2 = (-\alpha_0, k-\alpha_1, k-\alpha_2) = (-1, k, k-1) =: (\beta_0, \beta_1, \beta_2)$ holds. 2k obtained by multiplying the number (2, in this algorithm) of primary communication systems using a radio wave by the random number k and $\alpha^j$ being the share of the information related to primary communication are transmitted to the communication control apparatus 60 via the communication unit 710. Note that "2k" is the determination condition.

In the communication control apparatus 60, the first computation unit 627 and the second computation unit 628 respectively receive the shares $\alpha^1$ and $\alpha^2$ of the information related to primary communication received in the communication unit 610. Both of the first computation unit 627 and the second computation unit 628 receive "2k" being a determination condition (only the first computation unit 627 may receive "2k"). The first computation unit 627 acquires S1 and BT1 from the first recording unit 631, and the second computation unit 628 acquires S2 and BT2 from the second recording unit 632. Next, the first computation unit 627 and the second computation unit 628 perform the following processing.

As an example, computation of the secondary communication parameter related to the communication apparatus a is considered. In plaintext, with an inner product of the vector of the information related to primary communication and a vector Sa related to the communication apparatus a, the following is obtained.

$$\alpha^t \cdot Sa = (0, k, k) \cdot (1, 1, 0)^t = k \neq 2k$$

Thus, radio wave transmission stop is requested to the communication apparatus a. Now, because $\alpha^1 = (\alpha^1 + \alpha_2)^t = (\alpha^1)^t + (\alpha^2)^t$ and Sa = S1a + S2a, the following is obtained.

$$\alpha^t \cdot Sa = (\alpha^1)^t \cdot S1a + (\alpha^2)^t \cdot S2a + (\alpha^1)^t \cdot S2a + (\alpha^2)^t \cdot S1a$$

Although the first computation unit 627 and the second computation unit 628 can locally calculate $(\alpha^j)^t \cdot Sj$, $(\alpha^1)^t \cdot S2a$ and $(\alpha^2)^t \cdot S1a$ are calculated using their own shares, and thus require contrivance. In view of this, when the Beaver's triples are used, the number of times of communication between the first computation unit 627 and the second computation unit 628 can be reduced.

Computation of the secondary communication parameter of the communication apparatus a will be described. In multi-party computation, the computation unit 2-j (j = 1, 2) performs the following processing of (D1) and (D2) on each primary communication system i = A, B, and C.

(D1)

The first computation unit 627 and the second computation unit 628 calculate $\alpha^j - x_{ij} \cdot (1, 1, 1)$ and $Sja - y_{ij} \cdot (1, 1, 1)^t$, and exchange calculation results between the first computation unit 627 and the second computation unit 628 (in this process, $\alpha^j$ and Sja being the shares of the secret information are encrypted by random numbers, and thus information related to the secret information is not leaked). Note that, through the computation and the communication, the first computation unit 627 and the second computation unit 628 acquire $d_i := \alpha - x_i \cdot (1, 1, 1)$ and $e_i := Sa - y_i \cdot (1, 1, 1)^t$.

(D2)

The first computation unit 627 calculates the following, and stores it in the first recording unit 631.

$$a_1 := d_i \cdot e_i + d_i \cdot y_{i1} \cdot (1, 1, 1)^t + x_{i1} \cdot (1, 1, 1) \cdot e_i + z_{i1}$$

The second computation unit 628 calculates the following, and stores it in the second recording unit 632.

$$a_2 := d_i \cdot y_{i2} \cdot (1, 1, 1)^t + x_{i2} \cdot (1, 1, {}^{1)}) \cdot e_i + Zi2$$

In this case, the first computation unit 627 stores "2k" being the determination condition in the first recording unit 631.

Through the above, the process up to computation of the secondary communication parameter ends. Note that, when the values calculated by the first computation unit 627 and the second computation unit 628 are added, the following is obtained.

$$d_i \cdot e_i + d_i \cdot y_{i1} \cdot (1, 1, 1)^t + x_{i1} \cdot (1, 1, 1) \cdot e_i + z_{i1} + d_i \cdot y_{i2} \cdot (1, 1, 1)^t + x_{i2} \cdot (1, 1, 1) \cdot e_i + z_{i2} = (d_i + x_i \cdot (1, 1, 1)) \cdot (e_i + y_i \cdot (1, 1, 1)^t) = \alpha \cdot Sa = (0, k, k) \cdot (1, 1, 0)^t = k \neq 2k$$

This enables determination that it is actually unavailable.

3.7.2.3 Frequency Use Notification from Communication Apparatus and Transmission of Shares of Secondary Communication Parameter to Communication Apparatus

This section will describe a process from the frequency use notification from the communication apparatus in Fig. 34 to the notification of the secondary communication parameter to the communication apparatus. After receiving the frequency use notification from the communication apparatus, the controller 620 of the communication control apparatus 60 acquires the shares $a_1$ and $a_2$ of the secondary communication parameter and "2" (or "2k") being the determination condition from the first recording unit 631 and the second recording unit 632 via the acquisition unit 623. The acquisition unit 623 notifies the communication apparatus 40 of the shares of the secondary communication parameter and the determination condition, and also the decryption method as necessary, via the communication unit 610. In this case, it is preferable that the shares $a_1$ and $a_2$ of the secondary communication parameter be transmitted at different timings. For example, after only $a_1$ and the determination condition "2" (or "2k") are transmitted as a response to the frequency use notification, $a_2$ is transmitted by push. On the other hand, when only Effect 1 is targeted, the shares $a_1$ and $a_2$ may be transmitted simultaneously.

The communication apparatus 40 decrypts the secondary communication parameter, based on the shares of the secondary communication parameter and the decryption method acquired from the communication control apparatus 60. When the value is equal to the determination condition "2" (or "2k"), the communication apparatus 40 is permitted to transmit a radio wave. On the other hand, when the decrypted value is different from the determination condition "2" (or "2k"), the communication apparatus 40 is not permitted to transmit a radio wave. In the communication apparatus described above, the decrypted results indicate "1" (or "k"), which are different from the determination condition "2" (or "2k"), and thus radio wave transmission stop is requested.

3.8 Fifth Embodiment

In the communication system according to the fourth embodiment described above, the communication control apparatus 60 performs secure computation through multi-party computation based on secret sharing. In contrast, a communication system of a fifth embodiment of the present disclosure is different from that of the fourth embodiment described above in that the communication control apparatus 60 randomizes the secondary communication parameter encrypted by secret sharing.

The communication control apparatus 60 according to the fifth embodiment of the present disclosure may employ the same configuration as that of the communication control apparatus 60 of Fig. 17. In other words, the communication control apparatus 60 of the fifth embodiment of the present disclosure includes the communication unit 610, the controller 620, and the recording unit 630. The controller 620 of the communication control apparatus 60 of the fifth embodiment of the present disclosure includes the computation unit 621, the encryption unit 622, and the acquisition unit 623. The encryption unit 622 included in the communication control apparatus 60 of the fifth embodiment of the present disclosure further performs randomization processing on the encrypted secondary communication parameter. Here, the randomization processing on the encrypted secondary communication parameter is processing of changing the encrypted secondary communication parameter into a different value while keeping the decrypted secondary communication parameter unchanged. The secondary communication parameter subjected to the randomization processing is transmitted to the communication apparatus 40 via the communication unit 610.

Fig. 42 is a diagram illustrating an example of a communication control procedure according to the fifth embodiment of the present disclosure. Similarly to Fig. 22, the figure is a sequence diagram illustrating an example of a processing procedure between the communication control apparatus 60 and the communication apparatus 40.

The processing of Steps S201 and Step S202 is the same as that of Fig. 22. The encryption unit 622 performs the randomization processing on the encrypted secondary communication parameter, using a random number (Step S336). The following processing is the same as that of Fig. 22, and thus description will be omitted.

The following will describe such randomization processing on the encrypted secondary communication parameter.

3.8.1 Background

Normally, it is assumed that the frequency use notifications from the communication apparatus 40 are performed periodically. In contrast, the present disclosure assumes a case in which the notifications of the information related to primary communication from the determination apparatus 70 are not necessarily performed periodically. Note that, in the present disclosure, the term "ciphertext" includes shares encrypted by secret sharing.

A feature of a case in which the secondary communication parameter is decrypted in the communication apparatus 40 will be described. In the present disclosure, the communication control apparatus 60 does not decrypt the encrypted secondary communication parameter of each communication apparatus 40 but the communication apparatus 40 performs the decryption processing. Such a method can prevent an attacker from calculating the radio wave use status of the primary system from the secondary communication parameter. Even when the determination apparatus 70 calculates the same radio wave use status, the communication control apparatus 60 is notified of different ciphertexts of the radio wave use status. The following will describe the details.

Fig. 43A is a diagram illustrating an example of computation of the secondary communication parameter according to the fifth embodiment of the present disclosure. At time $t_0$, the determination apparatus 70 notifies the communication control apparatus 60 of the encrypted radio wave use status. Based on this, the communication control apparatus 60 performs computation of the secondary communication parameter. Normally, the secondary communication parameter is encrypted at this time point. The ciphertexts of the secondary communication parameter are not changed until the next radio wave use status is notified from the determination apparatus 70. In other words, the ciphertexts of the secondary communication parameter remain unchanged until the radio wave use status is updated.

When the determination apparatus 70 encrypts the radio wave use status using random information, the communication control apparatus 60 is notified of different ciphertexts of the radio wave use status, even if the determination apparatus 70 determines the same radio wave use status at time $t_0$ and time $t_1$ of Fig. 43A. Thus, the ciphertexts of the secondary communication parameter generated by the communication control apparatus 60 are also different at the time $t_0$ and the time $t_1$. Note that, because the radio wave use status is the same, information obtained by decrypting these ciphertexts of the secondary communication parameter (i.e., the plaintext secondary communication parameter) has the same value.

This typically occurs when multi-party computation based on secret sharing is used. Although the following will describe an example of additive secret sharing, the same applies to other secret sharing schemes as well.

It is assumed that the shares of the secondary communication parameter of the communication apparatus 40 at the time $t_0$ are "3" and "-2". In this case, the secondary communication parameter decrypted by the communication apparatus 40 is "1". However, even when the same plaintext radio wave use status as that at the time $t_0$ is calculated by the determination apparatus 70 at the time $t_1$, as the shares of the secondary communication parameter of the communication apparatus 40, shares, such as "197" and "-196", that are different from "3" and "-2" are generated, for example. This is because the determination apparatus 70 randomly performs encryption. In this manner, because the radio wave use status is encrypted through random processing using a random number or the like, the ciphertexts of the secondary communication parameter have different values every time they are calculated by secure computation, even though the plaintext radio wave use status is the same information.

However, in general, the ciphertexts of the secondary communication parameter are updated only after secure computation is performed. Thus, the ciphertexts of the secondary communication parameter are not updated during a period in which secure computation is not performed, and accordingly the communication apparatus 40 is notified of the same ciphertexts of the secondary communication parameter. The notification of the same ciphertexts of the secondary communication parameter means that secure computation is not performed. Secure computation being not performed in DSA generally means that the radio wave use status is not updated. As a result, the communication apparatus 40 and an attacker are (implicitly) notified that the same primary system continuously uses a radio wave in the same location (or area).

Thus, when the number of times of secure computation is small (specifically, a plurality of times of frequency use notifications are transmitted from the communication apparatus until the secondary communication parameter is updated by the communication control apparatus), the communication apparatus is repeatedly notified of the same ciphertexts of the secondary communication parameter. An example of such a case will be described with reference to Fig. 43B.

Fig. 43B is a diagram illustrating an example of computation of the secondary communication parameter according to the fifth embodiment of the present disclosure. The figure illustrates an example of a case in which an interval between the frequency use notifications is shorter than an interval between updates of the secondary communication parameter. In this case, the same shares of the secondary communication parameter may be transmitted to the communication apparatus 40. Specifically, the communication apparatus 40 is notified of the same shares of the secondary communication parameter in an n-th frequency use notification and an (n+1)-th frequency use notification in the figure.

As described above, in the present disclosure, the notifications of the radio wave use status from the determination apparatus 70 are not necessarily performed periodically, and thus there is a possibility that the radio wave use status of the primary system is not updated for a long period of time. Thus, the communication apparatus is repeatedly notified of the same ciphertexts of the secondary communication parameter as a response to the periodically performed frequency use notifications.

For example, a case is considered in which, as in Fig. 43B, with time as a variable on the horizontal axis, the communication control apparatus 60 is notified of the radio wave use status at the time $t_i$, and the secondary communication parameter of each communication apparatus 40 is calculated by the communication control apparatus 60. Typically, the ciphertexts of the secondary communication parameter of each communication apparatus updated at the time $t_0$ remain the same until t1 when the next radio wave use status is notified. As in Fig. 43B, when there are two times of frequency use notifications before the update at the time t1, the same ciphertexts are transmitted to the communication apparatus 40 at both of the two times. In other words, the communication apparatus 40 recognizes that the communication control apparatus 60 does not perform computation. The communication control apparatus 60 not performing computation means that there is no notification of the radio wave use status from the determination apparatus, and thus the communication apparatus 40 also recognizes that the radio wave use status is not updated.

The above is a problem in decrypting the secondary communication parameter in the communication apparatus 40. In order to prevent the communication apparatus 40 from recognizing the information related to the radio wave use status of the primary system (here, the fact that the radio wave use status is not updated or the like), for example, the following processing using a random number is performed before the notification of the ciphertexts of the secondary communication parameter to the communication apparatus 40.

Fig. 44 is a diagram illustrating an example of randomization processing on the secondary communication parameter according to the fifth embodiment of the present disclosure. The figure is a flowchart illustrating an example of randomization processing on the secondary communication parameter in the communication control apparatus 60. The communication control apparatus 60 receives the frequency use notification (Step S341). Then, the acquisition unit 623 acquires the encrypted secondary communication parameter, transmits it to the encryption unit 622, and instructs the randomization processing. The encryption unit 622 performs the randomization processing on the encrypted secondary communication parameter (Step S342). In this case, the encryption unit 622 performs the randomization processing that does not change the value of decrypted plaintext on the encrypted secondary communication parameter. An example of the randomization processing that does not change the value of the plaintext will be described later. Next, the randomized secondary communication parameter is transmitted to the communication apparatus 40 (Step S343).

Typically, the above-described randomization processing that does not change the value of the plaintext can be performed with a method through multi-party computation based on secret sharing. The following will describe an example of a case of multi-party computation based on additive secret sharing.

It is assumed that a certain communication apparatus 40 transmits the frequency use notification to the communication control apparatus 60. It is assumed that shares of the secondary communication parameter of the communication apparatus 40 are "3" and "-2". In this case, the plaintext secondary communication parameter is "1". The controller 620 of the communication control apparatus 60 commands the encryption unit 622 to perform the additive secret sharing processing on the information "0". Here, "0" is information that does not change the value of the plaintext even after addition.

Note that, when the controller 620 includes two computation units, two numbers that add up to "0", for example, a pair of "1987" and "-1987", are generated. When the number of shares of the secondary communication parameter is N, random numbers $(r_0, r_1, ..., r_{N-1})$ satisfying $r0 + r_1 + r_2 + ... + r_{N-1} = 0$ are generated). These random numbers make the value of the decrypted plaintext secondary communication parameter itself unchanged even when $r_i$ is added to the shares of the secondary communication parameter.

"1987" is added to the share "3" of the secondary communication parameter acquired by the acquisition unit 623, and "-1987" is added to the other share "-2". Accordingly, the secondary communication parameter notified to the communication apparatus 40 changes from (3, -2) to (1990, -1989). In contrast, the plaintext of the secondary communication parameter remains "1". In this manner, the randomization processing on the ciphertexts of the secondary communication parameter, whose plaintext value is not changed, can be performed. When such operation is performed every time the frequency use notification is performed, a plurality of transmissions of the same shares can be avoided.

Note that first randomization processing after the encrypted secondary communication parameter is updated may be skipped.

In the example described above, additive secret sharing is used, and the number of computation units performing multi-party computation is two. Thus, it is also possible to apply a method in which one random number r is generated and a number -r obtained by multiplying r by -1 is transmitted. However, when additive secret sharing is performed using three or more computation units or when Shamir's secret sharing is used, the above-described processing of generating r and -r cannot be performed. In such a case, the secret sharing processing on the information "0" needs to be performed.

The problem described above can also be solved by performing processing using a random number in the following procedure after the notification of the ciphertexts of the secondary communication parameter to the communication apparatus 40.

Fig. 45 is a diagram illustrating another example of randomization processing on the secondary communication parameter according to the fifth embodiment of the present disclosure. Similarly to Fig. 44, the figure is a flowchart illustrating an example of randomization processing on the secondary communication parameter in the communication control apparatus 60. First, the communication control apparatus 60 transmits the encrypted secondary communication parameter to the communication apparatus 40 (Step S351). Next, the controller 620 causes the encryption unit 622 to encrypt the information "0". The encrypted information is transmitted to the computation unit 621.

Next, the computation unit 621 performs the randomization processing on the encrypted secondary communication parameter (Step S352). Specifically, the computation unit 621 performs randomization by performing an operation on the secondary communication parameter of each communication apparatus 40 stored in the recording unit 630 and a numerical value obtained by encrypting the information "0". Next, the randomized secondary communication parameter is stored in the recording unit 630 (Step S353). Accordingly, the secondary communication parameter stored in the recording unit 630 is updated.

Note that, in a case of the communication control apparatus 60 to which multi-party computation based on secret sharing is applied, the encrypted information is transmitted to the first computation unit 627 and the second computation unit 628.

An example of a case of multi-party computation based on additive secret sharing will be described. It is assumed that shares of the secondary communication parameter of a certain communication apparatus 40 are "3" and "-2". When the two shares are decrypted, "1" is obtained. It is assumed that "1" is the secondary communication parameter indicating radio wave transmission permission. The encryption unit 622 performs the secret sharing processing on "0". It is assumed that shares "-197" and "197" are calculated as a result of the secret sharing processing. Note that, when these shares are decrypted, "0" is obtained, and even when it is added to the shares of the secondary communication parameter, the secondary communication parameter remains unchanged.

In this case, the encryption unit 622 transmits "-1" to the first computation unit 627, and transmits "1" to the second computation unit 628. The first computation unit 627 adds "-1" to the shares of the secondary communication parameter stored in the first recording unit 631. The second computation unit 628 adds "1" to the secondary communication parameter stored in the second recording unit 632. Accordingly, the shares of the secondary communication parameter of the communication apparatus 40 are "2" (3 - 1 = 2) and "-1" (-2 + 1 = -1). While the secondary communication parameter remains unchanged, the shares of the secondary communication parameter are updated through randomization. This therefore solves the problem in that the same shares are continuously transmitted for a long period of time.

Note that, in the example described above, additive secret sharing is used, and the number of computation units performing multi-party computation is two. Thus, it is also possible to apply a method in which one random number r is generated and a number -r obtained by multiplying r by -1 is transmitted. However, when additive secret sharing is performed using three or more computation units or when Shamir's secret sharing is used, the above-described processing of generating r and -r cannot be performed. In such a case, the secret sharing processing on the information "0" needs to be performed.

In this manner, the communication control apparatus 60 of the fifth embodiment of the present disclosure performs the randomization processing on the encrypted secondary communication parameter, and transmits the randomized secondary communication parameter to the communication apparatus 40. Accordingly, even when the information related to primary communication is not updated, different values of the encrypted secondary communication parameter can be transmitted to the communication apparatus 40. This enables concealment of whether or not the information related to primary communication is changed.

Other Modifications

The control apparatus of the present embodiment that controls the determination apparatus 70, the communication control apparatus 60, and the communication apparatus 40 may be implemented by a dedicated computer system, or may be implemented by a general-purpose computer system.

For example, a communication program for executing the above-described operations is stored in a computer-readable recording medium, such as an optical disc, a semiconductor memory, a magnetic tape, and a flexible disk, to be distributed. The control apparatus is configured by installing the program in a computer and executing the above-described processing, for example. In this case, the control apparatus may be an external apparatus (for example, a personal computer) of the determination apparatus 70, the communication control apparatus 60, and the communication apparatus 40. The control apparatus may be an internal apparatus (for example, the controller 420, the controller 620, and the controller 720) of the determination apparatus 70, the communication control apparatus 60, and the communication apparatus 40.

The communication program may be stored in a disk apparatus included in a server apparatus on a network, such as the Internet, to be made available for a download or the like in a computer. The above-described functions may be realized in cooperation with an operating system (OS) and application software. In this case, a part other than the OS may be stored in a medium to be distributed, or a part other than the OS may be stored in a server apparatus to be made available for a download or the like in a computer.

Of the processing described in the above embodiments, all or a part of the processing described as being performed automatically can be performed manually, or all or a part of the processing described as being performed manually can be performed automatically, using a publicly known method. In addition, processing procedures, specific terms, information including various data and parameters described in the above document and in the drawings can be freely changed, unless otherwise specifically noted. For example, various pieces of information illustrated in the drawings are not limited to the pieces of information illustrated in the drawings.

The constituent elements of the apparatuses illustrated in the drawings are functionally conceptual, and need not necessarily be physically configured as illustrated in the drawings. In other words, specific forms of distribution and integration of the apparatuses are not limited to those illustrated in the drawings, and all or a part thereof can be configured through functional or physical distribution and integration in any unit, according to various loads, use statuses, or the like. Note that the configuration through distribution and integration may be dynamically performed.

The above-described embodiments can be combined as appropriate within a range that does not cause inconsistency in processing details. The order of the steps illustrated in the flowcharts of the above-described embodiments can be changed as appropriate.

For example, the present embodiment can also be implemented as any configuration that configures an apparatus or a system, for example, a processor as system large scale integration (LSI) or the like, a module using a plurality of processors or the like, a unit using a plurality of modules or the like, a set in which the unit is further provided with other functions, and the like (i.e., a partial configuration of an apparatus).

Note that, in the present embodiment, a system refers to a set of a plurality of constituent elements (apparatuses, modules (components), and the like), and it does not matter whether or not all the constituent elements are present within the same housing. Thus, a plurality of apparatuses housed in separate housings and connected via a network and one apparatus in which a plurality of modules are housed in one housing are both systems.

For example, the present embodiment can employ a configuration of cloud computing, in which one function is shared and cooperatively processed by a plurality of apparatuses via a network.

While the embodiments of the present disclosure have been described above, the technical scope of the present disclosure is not limited to the above-described embodiments as they are, and various modifications can be made without departing from the gist of the present disclosure. Constituent elements across different embodiments and modifications may be combined as appropriate.

Note that a series of processing performed by the apparatuses described in the present specification may be implemented using any of software, hardware, and a combination of software and hardware. Programs constituting the software are stored in storage media (non-transitory media) provided inside or outside of the apparatuses in advance, for example. The programs, when being executed by a computer, are read into a RAM, and are executed by a processor such as a CPU, for example.

The processing described with reference to the flowcharts and the sequence diagrams in the present specification need not necessarily be executed in the illustrated order. Some processing steps may be executed in parallel. Additional processing steps may be employed, and some processing steps may be omitted.

Note that the effects described in the present specification are merely illustrative and not restrictive, and other effects may be present.

Note that the present technology can also employ the following configurations.

(1) A communication control apparatus including:

a reception unit configured to receive encrypted information related to primary communication in a primary communication system; and
a computation unit configured to perform secure computation based on the encrypted information related to primary communication, and generate a secondary communication parameter being a communication parameter of a communication apparatus, the communication apparatus performing a secondary communication service being a communication service that uses at least a part of a frequency band of the primary communication system.

(2) The communication control apparatus according to (1) above, further including
a transmission unit configured to transmit the secondary communication parameter to the communication apparatus.
(3) The communication control apparatus according to (1) above, wherein
the computation unit performs the secure computation by encryption.
(4) The communication control apparatus according to (3) above, wherein
the computation unit performs the secure computation by the encryption having homomorphism.
(5) The communication control apparatus according to (1) above, wherein
the computation unit performs the secure computation based on secret sharing.
(6) The communication control apparatus according to any one of (1) to (5) above, wherein
the computation unit generates whether or not radio wave transmission can be performed as the secondary communication parameter.
(7) The communication control apparatus according to any one of (1) to (5) above, wherein the computation unit generates an antenna azimuth angle as the secondary communication parameter.
(8) The communication control apparatus according to any one of (1) to (5) above, wherein

the computation unit generates an antenna altitude as the secondary communication parameter.

(9) The communication control apparatus according to any one of (1) to (5) above, wherein

the computation unit generates a latitude as the secondary communication parameter.

(10) The communication control apparatus according to any one of (1) to (5) above, wherein

the computation unit generates a longitude as the secondary communication parameter.

(11) The communication control apparatus according to any one of (1) to (5) above, wherein

the computation unit generates a maximum transmission power as the secondary communication parameter.

(12) The communication control apparatus according to any one of (1) to (5) above, wherein

the computation unit generates a frequency channel as the secondary communication parameter.

(13) The communication control apparatus according to any one of (1) to (5) above, wherein

the computation unit generates a time of use as the secondary communication parameter.

(14) The communication control apparatus according to (2) above, wherein

the transmission unit transmits the secondary communication parameter being encrypted to the communication apparatus.

(15) A communication apparatus including:

a reception unit configured to receive a secondary communication parameter for a secondary communication service being a communication service that uses at least a part of a frequency band of a primary communication system, the secondary communication parameter being generated by performing secure computation based on encrypted information related to primary communication in the primary communication system; and

a controller configured to perform radio communication with a terminal apparatus based on the secondary communication parameter.

(16) A communication apparatus including:

a controller configured to acquire information related to a location of a primary communication system;

an encryption unit configured to perform encryption of the information related to the location of the primary communication system; and

a transmission unit configured to transmit the encrypted information related to the location to a communication control apparatus.

(17) A communication control method including:

receiving encrypted information related to primary communication in a primary communication system; and

performing secure computation based on the encrypted information related to primary communication, and generating a secondary communication parameter being a communication parameter of a communication apparatus, the communication apparatus performing a secondary communication service being a communication service that uses at least a part of a frequency band of the primary communication system.

Reference Signs List

1A, 1B, 60 Communication control apparatus
1C, 40, 40B, 40A Communication apparatus
70 Determination apparatus
410, 610, 710 Communication unit
420, 620, 720 Controller
621 Computation unit
627 First computation unit
628 Second computation unit

**Claims**

1. A communication control apparatus comprising:

a reception unit configured to receive encrypted information related to primary communication in a primary communication system; and
a computation unit configured to perform secure computation based on the encrypted information related to primary communication, and generate a secondary communication parameter being a communication parameter of a communication apparatus, the communication apparatus performing a secondary communication service being a communication service that uses at least a part of a frequency band of the primary communication system.

2. The communication control apparatus according to claim 1, further comprising
a transmission unit configured to transmit the secondary communication parameter to the communication apparatus.

3. The communication control apparatus according to claim 1, wherein
the computation unit performs the secure computation by encryption.

4. The communication control apparatus according to claim 3, wherein
the computation unit performs the secure computation by the encryption having homomorphism.

5. The communication control apparatus according to claim 1, wherein
the computation unit performs the secure computation based on secret sharing.

6. The communication control apparatus according to claim 1, wherein
the computation unit generates whether or not radio wave transmission can be performed as the secondary communication parameter.

7. The communication control apparatus according to claim 1, wherein
the computation unit generates an antenna azimuth angle as the secondary communication parameter.

8. The communication control apparatus according to claim 1, wherein
the computation unit generates an antenna altitude as the secondary communication parameter.

9. The communication control apparatus according to claim 1, wherein
the computation unit generates a latitude as the secondary communication parameter.

10. The communication control apparatus according to claim 1, wherein
the computation unit generates a longitude as the secondary communication parameter.

11. The communication control apparatus according to claim 1, wherein
the computation unit generates a maximum transmission power as the secondary communication parameter.

12. The communication control apparatus according to claim 1, wherein
the computation unit generates a frequency channel as the secondary communication parameter.

13. The communication control apparatus according to claim 1, wherein
the computation unit generates a time of use as the secondary communication parameter.

14. The communication control apparatus according to claim 2, wherein
the transmission unit transmits the secondary communication parameter being encrypted to the communication apparatus.

15. A communication apparatus comprising:

a reception unit configured to receive a secondary communication parameter for a secondary communication service being a communication service that uses at least a part of a frequency band of a primary communication system, the secondary communication parameter being generated by performing secure computation based on encrypted information related to primary communication in the primary communication system; and
a controller configured to perform radio communication with a terminal apparatus based on the secondary communication parameter.

16. A communication apparatus comprising:

a controller configured to acquire information related to a location of a primary communication system;
an encryption unit configured to perform encryption of the information related to the location of the primary communication system; and
a transmission unit configured to transmit the encrypted information related to the location to a communication control apparatus.

17. A communication control method comprising:

receiving encrypted information related to primary communication in a primary communication system; and
performing secure computation based on the encrypted information related to primary communication, and generating a secondary communication parameter being a communication parameter of a communication apparatus, the communication apparatus performing a secondary communication service being a communication service that uses at least a part of a frequency band of the primary communication system.

# Fig.1

# F i g . 2

$60_3$        $60_4$

# Fig.3

$60_5$ MASTER

$60_6$

$60_7$

SLAVE

SLAVE

# Fig.4

COMMUNICATION CONTROL APPARATUS
(MASTER)

INTERMEDIATE APPARATUS
(SLAVE COMMUNICATION CONTROL
APPARATUS)

COMMUNICATION APPARATUS
(SLAVE COMMUNICATION
CONTROL APPARATUS)

COMMUNICATION
APPARATUS

COMMUNICATION
APPARATUS

COMMUNICATION
APPARATUS

EP 4 704 458 A1

# Ｆｉｇ．５

INCUMBENT
TIER
(Incumbent Tier)

PRIORITY ACCESS TIER
(Priority Access Tire)

GENERAL AUTHORIZED ACCESS TIER
(General Authorized Access Tire)

# Fig.6

Definition of Channel Bandwidth and
Transmission Bandwidth Configuration for one E-UTRA

# Ｆｉｇ．７

Transmission bandwidth configuration $N_{RB}$ in E-UTRA channel bandwidths

| Channel bandwidth $BW_{Channel}$ [MHz] | 1.4 | 3 | 5 | 10 | 15 | 20 |
|---|---|---|---|---|---|---|
| Transmission bandwidth configuration $N_{RB}$ | 6 | 15 | 25 | 50 | 75 | 100 |

# Ｆｉｇ．８

Definition of channel bandwidth and transmission bandwidth configuration for one NR channel

# Fig.9

Minimum guardband (kHz) (FR1)

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| 15 | 242.5 | 312.5 | 382.5 | 452.5 | 522.5 | 592.5 | 552.5 | 692.5 | N.A | N.A | N.A | N.A | N.A |
| 30 | 505 | 665 | 645 | 805 | 785 | 945 | 905 | 1045 | 825 | 965 | 925 | 885 | 845 |
| 30 | N.A | 1010 | 990 | 1330 | 1310 | 1290 | 1610 | 1570 | 1530 | 1490 | 1450 | 1410 | 1370 |

# F i g . 10

Minimum guardband (kHz) (FR2)

| SCS (kHz) | 50MHz | 100MHz | 200MHz | 400MHz |
|-----------|-------|--------|--------|--------|
| 60 | 1210 | 2450 | 4930 | N.A |
| 120 | 1900 | 2420 | 4900 | 9860 |

# Ｆｉｇ.11

Minimum guardband (kHz) of SCS 240 kHz SS/PBCH block (FR2)

| SCS (kHz) | 100MHz | 200MHz | 400MHz |
|-----------|--------|--------|--------|
| 240 | 3800 | 7720 | 15560 |

# Fig.12

TERMINAL APPARATUS 30

TERMINAL APPARATUS 30

BASE STATION APPARATUS 40

COMMUNICATION CONTROL APPARATUS 60

S61
CALCULATE COMMUNICATION PARAMETER

S62
PERFORM NOTIFICATION OF COMMUNICATION PARAMETER

S63
ACQUIRE COMMUNICATION PARAMETER

S64
CONFIGURE COMMUNICATION PARAMETER

S65
PERFORM NOTIFICATION OF COMMUNICATION PARAMETER

S66b
ACQUIRE COMMUNICATION PARAMETER

S66a
ACQUIRE COMMUNICATION PARAMETER

S67b
CONFIGURE COMMUNICATION PARAMETER

S67a
CONFIGURE COMMUNICATION PARAMETER

S68b
PERFORM COMMUNICATION

S68a
PERFORM COMMUNICATION

# Fig.13

```
                    START
                      │
                      ▼         ⟋S101
          ┌─────────────────────────┐
          │      CREATE LIST Lp OF   │
          │ COMMUNICATION APPARATUSES│
          └─────────────────────────┘
                      │
                      ▼         ⟋S102
          ┌─────────────────────────┐
          │   CALCULATE AGGREGATED   │
          │    INTERFERENCE AMOUNT   │
          └─────────────────────────┘
                      │◄──────────────────────────────────────┐
                      ▼         ⟋S103                          │
                  ╱───────────╲                                │
                 ╱ AGGREGATED  ╲                               │
            ╱ INTERFERENCE AMOUNT ╲   No                       │
            ╲  < ALLOWABLE VALUE? ╱─────────────┐              │
                 ╲             ╱                │              │
                  ╲───────────╱                 ▼     ⟋S104    │
                      │ Yes        ┌─────────────────────────┐ │
                      │            │    REARRANGE IN ORDER OF │ │
                      │            │    INTERFERENCE AMOUNT   │ │
                      │            └─────────────────────────┘ │
                      │                        │               │
                      │                        ▼     ⟋S105     │
                      │            ┌─────────────────────────┐ │
                      │            │   SELECT COMMUNICATION   │ │
                      │            │  APPARATUS HAVING LARGEST│ │
                      │            │    INTERFERENCE AMOUNT   │ │
                      │            └─────────────────────────┘ │
                      │                        │               │
                      │                        ▼     ⟋S106     │
                      │            ┌─────────────────────────┐ │
                      │            │     DELETE SELECTED      │ │
                      │            │ COMMUNICATION APPARATUS  │ │
                      │            │        FROM Lp           │ │
                      │            └─────────────────────────┘ │
                      │                        │               │
                      │                        ▼     ⟋S107     │
                      │            ┌─────────────────────────┐ │
                      │            │ ADD SELECTED COMMUNICATION│ │
                      │            │  APPARATUS TO LIST FOR   │ │
                      │            │  REQUESTING RADIO WAVE   │ │
                      │            │   TRANSMISSION STOP      │ │
                      │            └─────────────────────────┘ │
                      │                        │               │
                      │                        └───────────────┘
                      ▼
                    END
```

# Fig.14

# Ｆｉｇ.15

X: INFORMATION PROVIDER

$P=(x,y)$

SPLIT INTO PLURALITY OF
PIECES OF INFORMATION
USING RANDOM NUMBER

$P_1=(2x,-y)$  $P_2=(-x,2y)$

A  B

# Fig.16

70

DETERMINATION APPARATUS

720

CONTROLLER

721

| DETERMINATION UNIT |

710

| COMMUNICATION UNIT | ↔ (60)

722

| ENCRYPTION UNIT |

# Fig.17

COMMUNICATION CONTROL APPARATUS 60

CONTROLLER 620

RECORDING UNIT 630

COMPUTATION UNIT 621

ENCRYPTION UNIT 622

ACQUISITION UNIT 623

COMMUNICATION UNIT 610

(70),(40)

# Fig.18

**40**

COMMUNICATION APPARATUS

**420**

CONTROLLER

**421**

DECRYPTION UNIT

**410**

COMMUNICATION UNIT

(60)

# Fig.19

| TIME INFORMATION | $t_0$ | $t_1$ | $t_2$ | $t_3$ | $t_4$ | $\cdots$ | $t_M$ |
|---|---|---|---|---|---|---|---|
| $P_1$ | 1 | 1 | 1 | 1 | 1 | | 0 |
| $P_2$ | 1 | 0 | 0 | 1 | 0 | | 0 |
| $\vdots$ | | | | | | | |
| $P_N$ | 0 | 1 | 1 | 1 | 0 | | 0 |

# Fig. 20

```
                    START
                      |
                      v              S150
        ACQUIRE INFORMATION OF
        COMMUNICATION APPARATUS
                      |
                      v              S151
       GENERATE COMMUNICATION PARAMETER
         CHANGE TARGET INFORMATION
                      |
                      v              S152
       ENCRYPT COMMUNICATION PARAMETER
         CHANGE TARGET INFORMATION
                      |
                      v              S153
        STORE ENCRYPTED COMMUNICATION
           PARAMETER CHANGE TARGET
        INFORMATION IN RECORDING UNIT
                      |
                      v
                     END
```

# Fig.21

```
    70                                          60
┌──────────────┐                      ┌──────────────────┐
│ DETERMINATION │                      │  COMMUNICATION   │
│  APPARATUS    │                      │ CONTROL APPARATUS │
└──────────────┘                      └──────────────────┘
```

S171
┌──────────────────┐
│ DETERMINE RADIO  │
│ WAVE USE STATUS  │
└──────────────────┘

S172
┌──────────────────┐
│ GENERATE INFORMATION │
│ RELATED TO PRIMARY   │
│ COMMUNICATION        │
└──────────────────┘

S173
┌──────────────────┐
│ ENCRYPT INFORMATION │
│ RELATED TO PRIMARY  │
│ COMMUNICATION       │
└──────────────────┘

ENCRYPTED INFORMATION RELATED
TO PRIMARY COMMUNICATION      S174

S175
┌──────────────────────────────────┐
│ PERFORM SECURE COMPUTATION BASED │
│ ON ENCRYPTED INFORMATION RELATED │
│ TO PRIMARY COMMUNICATION AND     │
│ ENCRYPTED COMMUNICATION PARAMETER │
│ CHANGE TARGET INFORMATION AND    │
│ GENERATE ENCRYPTED SECONDARY     │
│ COMMUNICATION PARAMETER          │
└──────────────────────────────────┘

S176
┌──────────────────────────────────┐
│ STORE SECONDARY COMMUNICATION    │
│ PARAMETER IN RECORDING UNIT      │
└──────────────────────────────────┘

# Fig.22

EP 4 704 458 A1

# Fig. 23

# Fig.24

COMMUNICATION CONTROL APPARATUS 60

COMMUNICATION APPARATUS 40

FREQUENCY USE NOTIFICATION — S201

S222

PERFORM SECURE COMPUTATION BASED ON ENCRYPTED INFORMATION RELATED TO PRIMARY COMMUNICATION AND ENCRYPTED COMMUNICATION PARAMETER CHANGE TARGET INFORMATION AND GENERATE ENCRYPTED SECONDARY COMMUNICATION PARAMETER

ENCRYPTED SECONDARY COMMUNICATION PARAMETER — S203

DECRYPTION METHOD — S204

S205

DECRYPT ENCRYPTED SECONDARY COMMUNICATION PARAMETER

S206

UPDATE SECONDARY COMMUNICATION PARAMETER

# Fig.25

```
          ┌─────────────┐
          │    START    │
          └──────┬──────┘
                 │
                 ▼          ⌇S271
          ┌──────────────────────┐
          │ DETERMINE RADIO WAVE USE │
          │        STATUS         │
          └──────────┬───────────┘
                     │
                     ▼           ⌇S272
              ╱─────────────╲
             ╱  IS SECURE    ╲      Yes
            ⟨   COMPUTATION    ⟩──────────┐
             ╲  REQUIRED?     ╱           │
              ╲─────────────╱            │
                 │ No                    │
                 ▼      ⌇S273            ▼      ⌇S274
   ┌──────────────────────────┐  ┌──────────────────────────┐
   │   TRANSMIT INFORMATION    │  │   TRANSMIT INFORMATION    │
   │ INDICATING SECURE COMPUTATION│ │ INDICATING SECURE COMPUTATION│
   │ IS NOT REQUIRED AND PLAINTEXT │ │  IS REQUIRED AND ENCRYPTED  │
   │  INFORMATION RELATED TO   │  │   INFORMATION RELATED TO   │
   │   PRIMARY COMMUNICATION   │  │   PRIMARY COMMUNICATION    │
   └─────────────┬────────────┘  └─────────────┬────────────┘
                 │◄───────────────────────────┘
                 ▼
          ┌─────────────┐
          │     END     │
          └─────────────┘
```

# Ｆ ｉ ｇ . 26

START

S261

IS SECURE
COMPUTATION
REQUIRED?

Yes

No

S262

GENERATE SECONDARY
COMMUNICATION PARAMETER
BASED ON PLAINTEXT
INFORMATION RELATED TO
PRIMARY COMMUNICATION

S263

GENERATE SECONDARY
COMMUNICATION PARAMETER
BASED ON ENCRYPTED
INFORMATION RELATED TO
PRIMARY COMMUNICATION

END

# Fig. 27

# Fig.28

COMMUNICATION CONTROL APPARATUS

60

630 RECORDING UNIT

631 FIRST RECORDING UNIT

632 SECOND RECORDING UNIT

633 RECORDING UNIT

620 CONTROLLER

627 FIRST COMPUTATION UNIT

628 SECOND COMPUTATION UNIT

629 COMPUTATION UNIT

622 ENCRYPTION UNIT

623 ACQUISITION UNIT

610 COMMUNICATION UNIT

(70),(40)

# Fig.29

60

COMMUNICATION CONTROL APPARATUS

630

RECORDING UNIT

631

FIRST
RECORDING
UNIT

632

SECOND
RECORDING
UNIT

633

RECORDING
UNIT

620

CONTROLLER

627

FIRST
COMPUTATION
UNIT

628

SECOND
COMPUTATION
UNIT

629

COMPUTATION
UNIT

622

ENCRYPTION
UNIT

623

ACQUISITION
UNIT

624

DECRYPTION
UNIT

610

COMMUNICATION
UNIT

(70),(40)

# Fig. 30

60

## COMMUNICATION CONTROL APPARATUS

630

### RECORDING UNIT

631

FIRST RECORDING UNIT

632

SECOND RECORDING UNIT

633

RECORDING UNIT

620

### CONTROLLER

627

FIRST COMPUTATION UNIT

628

SECOND COMPUTATION UNIT

629

COMPUTATION UNIT

623

ACQUISITION UNIT

610

COMMUNICATION UNIT

(70),(40)

# Fig.31

```
        ┌──────────────┐
        │    START     │
        └──────┬───────┘
               │          ⌐S150
        ┌──────▼───────────────┐
        │ ACQUIRE INFORMATION OF│
        │ COMMUNICATION APPARATUS│
        └──────┬───────────────┘
               │          ⌐S151
        ┌──────▼───────────────────────┐
        │ GENERATE COMMUNICATION PARAMETER│
        │  CHANGE TARGET INFORMATION    │
        └──────┬────────────────────────┘
               │          ⌐S181
        ┌──────▼───────────────────────┐
        │ ENCRYPT COMMUNICATION PARAMETER│
        │ CHANGE TARGET INFORMATION BASED│
        │      ON SECRET SHARING        │
        └──────┬────────────────────────┘
               │          ⌐S182
        ┌──────▼───────────────────────┐
        │ STORE ENCRYPTED COMMUNICATION │
        │   PARAMETER CHANGE TARGET     │
        │  INFORMATION IN FIRST RECORDING│
        │ UNIT AND SECOND RECORDING UNIT│
        └──────┬────────────────────────┘
               │
        ┌──────▼───────┐
        │     END      │
        └──────────────┘
```

# Fig.32

70

DETERMINATION APPARATUS

S171

DETERMINE RADIO WAVE USE STATUS

S172

GENERATE INFORMATION RELATED TO PRIMARY COMMUNICATION

S301

SECRET SHARING PROCESSING ON INFORMATION RELATED TO PRIMARY COMMUNICATION

ENCRYPTED INFORMATION RELATED TO PRIMARY COMMUNICATION  S302

60

COMMUNICATION CONTROL APPARATUS

S303

ACQUIRE ENCRYPTED COMMUNICATION PARAMETER CHANGE TARGET INFORMATION FROM FIRST RECORDING UNIT AND SECOND RECORDING UNIT

S304

FIRST COMPUTATION UNIT AND SECOND COMPUTATION UNIT PERFORM MULTI-PARTY COMPUTATION BASED ON SECRET SHARING AND GENERATE ENCRYPTED SECONDARY COMMUNICATION PARAMETER

S305

STORE ENCRYPTED SECONDARY COMMUNICATION PARAMETER IN FIRST RECORDING UNIT AND SECOND RECORDING UNIT

# Fig.33

60
COMMUNICATION
CONTROL APPARATUS

40
COMMUNICATION
APPARATUS

FREQUENCY USE NOTIFICATION    S201

S311
ACQUIRE ENCRYPTED SECONDARY
COMMUNICATION PARAMETER FROM
FIRST RECORDING UNIT AND SECOND
RECORDING UNIT

ENCRYPTED SECONDARY
COMMUNICATION PARAMETER    S312

DECRYPTION METHOD    S313

S314
DECRYPT ENCRYPTED SECONDARY
COMMUNICATION PARAMETER

S206
UPDATE SECONDARY
COMMUNICATION PARAMETER

# Fig.34

60
COMMUNICATION
CONTROL APPARATUS

40
COMMUNICATION
APPARATUS

FREQUENCY USE NOTIFICATION  S201

S311
ACQUIRE ENCRYPTED SECONDARY
COMMUNICATION PARAMETER FROM
FIRST RECORDING UNIT AND SECOND
RECORDING UNIT

S321
DECRYPT ENCRYPTED SECONDARY
COMMUNICATION PARAMETER

SECONDARY COMMUNICATION
PARAMETER  S322

S206
UPDATE SECONDARY
COMMUNICATION PARAMETER

# Fig.35

```
           ┌─────────────┐
           │    START    │
           └──────┬──────┘
                  │           ⌐S150
        ┌─────────▼─────────────┐
        │  ACQUIRE INFORMATION OF │
        │ COMMUNICATION APPARATUS │
        └─────────┬─────────────┘
                  │           ⌐S151
        ┌─────────▼─────────────────┐
        │ GENERATE COMMUNICATION PARAMETER │
        │   CHANGE TARGET INFORMATION   │
        └─────────┬─────────────────┘
                  │           ⌐S331
        ┌─────────▼─────────────────┐
        │ STORE COMMUNICATION PARAMETER │
        │  CHANGE TARGET INFORMATION IN │
        │        RECORDING UNIT        │
        └─────────┬─────────────────┘
                  │
           ┌──────▼──────┐
           │     END     │
           └─────────────┘
```

# Fig.36

| PRIMARY COMMUNICATION SYSTEM | STRING OF COMMUNICATION APPARATUS TO BE STOPPED |
|---|---|
| A | $X_0=[X_{01},X_{02},\cdots X_{0N}]$ |
| B | $X_1=[X_{11},X_{12},\cdots X_{1N}]$ |
| C | $X_2=[X_{21},X_{22},\cdots X_{2N}]$ |

# Ｆｉｇ．37A

| PRIMARY COMMUNICATION SYSTEM | STRING OF COMMUNICATION APPARATUS TO BE STOPPED |
|---|---|
| A | $Y_0=[Y_{01},Y_{02},\cdots Y_{0N}]$ |
| B | $Y_1=[Y_{11},Y_{12},\cdots Y_{1N}]$ |
| C | $Y_2=[Y_{21},Y_{22},\cdots Y_{2N}]$ |

# F i g . 37B

| PRIMARY COMMUNICATION SYSTEM | STRING OF COMMUNICATION APPARATUS TO BE STOPPED |
|---|---|
| A | $Z_0 = [Z_{01}, Z_{02}, \cdots Z_{0N}]$ |
| B | $Z_1 = [Z_{11}, Z_{12}, \cdots Z_{1N}]$ |
| C | $Z_2 = [Z_{21}, Z_{22}, \cdots Z_{2N}]$ |

# Fig.38

| PRIMARY COMMUNICATION SYSTEM | x | y | $z=x \cdot y$ |
|---|---|---|---|
| A | $x_A$ | $y_A$ | $z_A$ |
| B | $x_B$ | $y_B$ | $z_B$ |
| C | $x_C$ | $y_C$ | $z_C$ |

# Ｆｉｇ．39A

| PRIMARY COMMUNICATION SYSTEM | $x_1$ | $y_1$ | $z_1$ |
|---|---|---|---|
| A | $x_{A1}$ | $y_{A1}$ | $z_{A1}$ |
| B | $x_{B1}$ | $y_{B1}$ | $z_{B1}$ |
| C | $x_{C1}$ | $y_{C1}$ | $z_{C1}$ |

# Fig. 39B

| PRIMARY COMMUNICATION SYSTEM | $x_2$ | $y_2$ | $z_2$ |
|---|---|---|---|
| A | $x_{A2}$ | $y_{A2}$ | $z_{A2}$ |
| B | $x_{B2}$ | $y_{B2}$ | $z_{B2}$ |
| C | $x_{C2}$ | $y_{C2}$ | $z_{C2}$ |

# Fig.40

| PRIMARY COMMUNICATION SYSTEM | a | b | c |
|:---:|:---:|:---:|:---:|
| A | 1 | 0 | 1 |
| B | 1 | 1 | 0 |
| C | 0 | 1 | 1 |

# Ｆｉｇ.41A

| PRIMARY COMMUNICATION SYSTEM | a | b | c |
|---|---|---|---|
| A | −1 | 0 | 2 |
| B | 2 | 1 | −1 |
| C | 1 | 0 | −1 |

# Ｆｉｇ．42B

| PRIMARY COMMUNICATION SYSTEM | a | b | c |
|:---:|:---:|:---:|:---:|
| A | 2 | −1 | −1 |
| B | −1 | 0 | 1 |
| C | −1 | −1 | 2 |

# Fig.42

# Fig.43A

# Ｆｉｇ．43B

# Fig.44

```
          ┌─────────────┐
          │    START    │
          └──────┬──────┘
                 │              ⌐S341
                 ▼
    ┌────────────────────────────┐
    │   RECEIVE FREQUENCY USE     │
    │      NOTIFICATION           │
    └────────────┬───────────────┘
                 │              ⌐S342
                 ▼
    ┌────────────────────────────┐
    │  RANDOMIZATION PROCESSING   │
    │   ON ENCRYPTED SECONDARY    │
    │  COMMUNICATION PARAMETER    │
    └────────────┬───────────────┘
                 │              ⌐S343
                 ▼
    ┌────────────────────────────┐
    │ TRANSMIT RANDOMIZED SECONDARY │
    │  COMMUNICATION PARAMETER    │
    └────────────┬───────────────┘
                 │
                 ▼
          ┌─────────────┐
          │     END     │
          └─────────────┘
```

# Fig.45

```
            ┌─────────────┐
            │    START    │
            └──────┬──────┘
                   │        ⌐S351
    ┌──────────────▼──────────────┐
    │  TRANSMIT ENCRYPTED SECONDARY │
    │   COMMUNICATION PARAMETER     │
    └──────────────┬──────────────┘
                   │        ⌐S352
    ┌──────────────▼──────────────┐
    │  RANDOMIZATION PROCESSING    │
    │   ON ENCRYPTED SECONDARY     │
    │   COMMUNICATION PARAMETER    │
    └──────────────┬──────────────┘
                   │        ⌐S353
    ┌──────────────▼──────────────┐
    │  STORE RANDOMIZED SECONDARY  │
    │  COMMUNICATION PARAMETER IN  │
    │       RECORDING UNIT         │
    └──────────────┬──────────────┘
                   │
            ┌──────▼──────┐
            │     END     │
            └─────────────┘
```

# EP 4 704 458 A1

## INTERNATIONAL SEARCH REPORT

International application No.

**PCT/JP2024/015371**

### A. CLASSIFICATION OF SUBJECT MATTER

*H04W 16/14*(2009.01)i; *H04W 12/03*(2021.01)i; *H04W 16/10*(2009.01)i
FI:   H04W16/14; H04W12/03; H04W16/10

According to International Patent Classification (IPC) or to both national classification and IPC

### B. FIELDS SEARCHED

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore, CBRS WInnForum Standards

### C. DOCUMENTS CONSIDERED TO BE RELEVANT

| Category* | Citation of document, with indication, where appropriate, of the relevant passages | Relevant to claim No. |
|---|---|---|
| X | DOU, Yanzhi et al. P2-SAS: Preserving Users' Privacy in Centralized Dynamic Spectrum Access Systems [online]. MobiHoc'16: Proceedings of the 17th ACM International Symposium on Mobile Ad Hoc Networking and Computing. July 2016, [retrieved on 27 May 2024], internet: <URL: https://ieeexplore.ieee.org/document/7756347>, <DOI: 10.1145/2942358.2942384> pp. 323-324 | 1-17 |
| A | WO 2020/189022 A1 (SONY CORPORATION) 24 September 2020 (2020-09-24) entire text, all drawings | 1-17 |
| A | GRISSA, Mohamed et al. Anonymous Dynamic Spectrum Access and Sharing Mechanisms for the CBRS Band [online]. IEEE Access. vol. 9. 04 March 2021, [retrieved on 27 May 2024], internet: <URL: https://ieeexplore.ieee.org/document/9361653>, <DOI: 10.1109/ACCESS.2021.3061706> entire text, all drawings | 1-17 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/015371**

| Patent document cited in search report | Publication date (day/month/year) | Patent family member(s) | Publication date (day/month/year) |
|---|---|---|---|
| WO        2020/189022        A1 | 24 September 2020 | US        2022/0158810        A1 <br> entire text, all drawings <br> EP              3941102        A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013111442 A

- US 35503700 B

### Non-patent literature cited in the description

- Reconfigurable Radio Systems (RRS); Signalling Protocols and information exchange for Coordinated use of TV White Spaces. *ETSI EN 303 387.*
- CBRS Coexistence Technical Specifications. *CBRSA-TS-2001 V3.0.0*
- Wireless Access Systems operating in the 470 MHz to 790 MHz.. *ETSI EN 301 598. White Space Devices (WSD)*
- Spectrum Sharing Committee WInnForum Recognized CBRS Grouping Information Policy. *WINNF-SSC-0010-V4.1.0*
- Test and Certification for Citizens Broadband Radio Service (CBRS); Conformance and Performance Test Technical Specification; SAS as Unit Under Test (UUT). *WINNF-TS-0061-V1.5.1*

- Spectrum Sharing Committee Policy and Procedure Coordinated Periodic Activities Policy. *WINNF-SSC-0008-V1.3.0*
- Potential Metrics for Assessing the Impact of ESC Sensors and Networks on CBRS Deployments. *WINNF-TR-1015-V1.0.0*
- Radio Frequency Devices. *FCC PART 15*
- Technical and operational requirements for the operation of white space devices under geo-location approach, CEPT ECC. *ECC Report 186*, January 2013
- Citizens Broadband Radio Service. *FCC PART 96*